# EUROPEAN PATENT APPLICATION

(11) **EP 1 601 137 A1**
(43) Date of publication of application: **30.11.2005**
(21) Application number: 04701101.0
(22) Date of filing: 09.01.2004
(51) Int. Cl.: H04L 12/28, H04L 12/56

(54) **NETWORK SYSTEM, LEARNING BRIDGE NODE, LEARNING METHOD, AND PROGRAM THEREOF**

(30) Priority: 19.02.2003 JP 2003041727
(71) Applicant: NEC CORPORATION, Minato-ku, Tokyo 108-8001 (JP)
(72) Inventor: ENOMOTO, Nobuyuki, NEC Corporation, Tokyo 108-8001 (JP); HIDAKA, Youichi, NEC Corporation, Tokyo 108-8001 (JP); UMAYABASHI, Masaki, NEC Corporation, Tokyo 108-8001 (JP); IWATA, Atsushi, NEC Corporation, Tokyo 108-8001 (JP)
(74) Representative: Vossius & Partner
(86) International application number: PCT/JP2004/000124
(87) International publication number: WO 2004/075482

(57) **Abstract**

A network system is comprised of a learning management program in a CPU to send and receive a learning frame, a frame transfer unit which transfers a learning frame, and a learning frame transmission management unit which judges whether learning has completed or not.

## Description

### BACKGROUNDS OF THE INVENTION

### Field of the Invention

The present invention relates to a network system, and more particularly to a network system, a learning bridge forming node, a learning bridge forming method and a program which can make a learning operation of a bidirectional flow passing through an asymmetrical path and can also learn a forwarding tag to be added so as to add it when forwarding.

### Description of the Related Art

Such a type of learning bridge is conventionally used to determine a transfer route for Ethernet and the like. There are prior arts concerning the learning bridge as follows.

For example, a standardization document entitled "1998, IEEE Std. 802.1D" issued by IEEE specifies a method called a learning process which enters a port having received the frame and a source MAC address (MAC SA) of the frame in a filtering database so to determine a transfer destination port of the frame (hereinafter referred to as the non-patent literature 1).

A standardization document entitled "1998, IEEE Std. 802.1Q" issued by IEEE specifies a method called Independent Virtual Local Area Network (VLAN) Learning (IVL) and an IVL bridge for performing the IVL to independently perform the learning process for each VLAN and limits the use of a learned result to an arrival time of a frame belonging to the same VLAN as that of the frame used for learning (hereinafter referred to as the non-patent literature 2).

Besides, a technology concerning a frame transfer method using an expansion tag, a technology concerning a node structure and table structure for adding a control tag and a path determination method using a spanning tree to determine a path according to a forwarding tag are disclosed in, for example, " Proposal of Ethernet Architecture GOE (Global Optical Ethernet) for Future Generation" (Institute of Electronics, Information and Communication Engineers, 2002 Society Meeting's Lecture Papers B-7-11 to B-7-13) (hereinafter referred to as the non-patent literature 3).

The above-described technologies had the following problems.

First, the conventional technologies disclosed in the non-patent literature 1 and the non-patent literature 2 had a problem that a network's bandwidth usability became low.

The technologies of the non-patent literatures 1 and 2 are premised on a symmetrical flow that the bidirectional frame flows a symmetrical path. Therefore, when a node through which a flow passes depending on a direction allows a different asymmetrical flow as shown in the non-patent literatures 1 to 3, a learning process does not operate, the frame reaches the destination but is also transferred to unnecessary destinations. Therefore, there were problems that the network became busy and the bandwidth usability was reduced.

Second, the prior art described in the non-patent literature 3 also had a problem that the setting operation was troublesome.

To use the technology of the non-patent literature 3, it was necessary to previously determine for each node an expansion tag (forwarding tag) to be added according to a destination MAC address (MAC DA), but the determination work involved a lot of time and labor because the number of MAC addresses became several thousands or several tens of thousands depending on the networks.

A first object of the present invention is to provide a network system, a learning bridge forming node, a learning bridge forming method and a program which can improve bandwidth usability for a network flowing an asymmetrical flow.

A second object of the present invention is to provide a network system, a learning bridge forming node, a learning bridge forming method and a program which can automate an operation of setting a forwarding tag to be added.

### SUMMARY OF THE INVENTION

A network system according to the present invention of claim 1 to achieve the above-described objects is characterized by a network system for a network having plural nodes connected, wherein a node belonging to said network transmits a learning frame periodically to a path opposite to that in which a main signal frame flows.

A network system according to the present invention of claim 2 is characterized by that said node learns a forwarding tag to be added according to said learning frame.

A network system according to the present invention of claim 3 is characterized by a network system for a network having plural nodes connected, wherein a node belonging to said network is provided with a learning frame management unit which refers to a MAC SA table cache to determine whether a learning frame transmission request is made or not, and a MAC SA table cache which stores a source MAC address (MAC SA) which has made a learning frame transmission request.

A network system according to the present invention of claim 4 is characterized by that said node is provided with an aging request acceptance unit which ages a MAC SA table cache, and a transmission request unit which makes a learning frame transmission request to a CPU.

A network system according to the present invention of claim 5 is characterized by that said node has a learning management program which performs learning frame processing.

A network system according to the present invention of claim 6 is characterized by a network system for a network having plural nodes connected, wherein a node belonging to said network is provided with a learning management program which performs learning frame processing.

A network system according to the present invention of claim 7 is characterized by that said node has an equipment control program which conducts a variety of configuration.

A network system according to the present invention of claim 8 is characterized by that said node is provided with a frame type judgment unit which judges an input frame.

A network system according to the present invention of claim 9 is characterized by a network system for a network having plural nodes connected, wherein a node belonging to said network is provided with an aging control unit which ages an entry to be aged, and an aging management table which stores an entry to be aged.

A network system according to the present invention of claim 10 is characterized by that said node is provided with a MAC forwarding table memory which stores an output port for a destination MAC address (MAC DA) and tag operations.

A network system according to the present invention of claim 11 is characterized by that said node is provided with a broadcast table memory which stores an output destination port at the time of broadcasting to a tag.

A network system according to the present invention of claim 12 is characterized by that said node is provided with a tag forwarding table memory which stores an output port for a forwarding tag.

A network system according to the present invention of claim 13 is characterized by that said node is provided with a forwarding table having a table, an aging circuit and a table read/write circuit.

A network system according to the present invention of claim 14 is characterized by that said node is provided with a TAG address management table which stores an address of a forwarding tag on a MAC forwarding table memory.

A network system according to the present invention of claim 15 is characterized by a network system for a network having plural nodes connected, wherein a node belonging to said network also applies a learning function of Ethernet to a flow which flows asymmetrically.

The present invention of claim 16 is characterized by a learning bridge node for a network having plural nodes connected, wherein a learning frame is transmitted periodically to a path opposite to a path in which a main signal frame flows.

A learning bridge node according to the present invention of claim 17 is characterized by that a forwarding tag to be added is learnt by said learning frame.

The present invention of claim 18 is characterized by a learning bridge node of a network having plural nodes connected, comprising a learning frame management unit which refers to a MAC SA table cache to determine whether a learning frame transmission request is made or not, and a MAC SA table cache which stores a source MAC address (MAC SA) which has made a learning frame transmission request.

A learning bridge node according to the present invention of claim 19 is characterized by comprising an aging request acceptance unit which ages a MAC SA table cache, and a transmission request unit which makes a learning frame transmission request to a CPU.

A learning bridge node according to the present invention of claim 20 is characterized by comprising a learning management program which performs learning frame processing.

The present invention of claim 21 is characterized by a learning bridge node for a network having plural nodes connected, comprising a learning management program which performs learning frame processing.

A learning bridge node according to the present invention of claim 22 is characterized by comprising an equipment control program which makes a variety of configuration.

A learning bridge node according to the present invention of claim 23 is characterized by comprising a frame type judgment unit which judges an input frame.

A learning bridge node according to the present invention of claim 24 is characterized by comprising an aging control unit which ages an entry to be aged, and an aging management table which stores an entry to be aged.

A learning bridge node according to the present invention of claim 25 is characterized by comprising a MAC forwarding table memory which stores an output port for a destination MAC address (MAC DA) and tag operations.

A learning bridge node according to the present invention of claim 26 is characterized by comprising a broadcast table memory which stores an output destination port at the time of broadcasting to a tag.

A learning bridge node according to the present invention of claim 27 is characterized by comprising a tag forwarding table memory which stores an output port for a forwarding tag.

A learning bridge node according to the present invention of claim 28 is characterized by comprising a forwarding table having a table, an aging circuit and a table read/write circuit.

A learning bridge node according to the present invention of claim 29 is characterized by comprising a TAG address management table which stores an address of a forwarding tag on a MAC forwarding table memory.

The present invention of claim 30 is characterized by a learning bridge node for a network having plural nodes connected, wherein a learning function of Ethernet is applied to a flow which asymmetrically flows.

The present invention of claim 31 is characterized by a learning method for a network having plural nodes connected, wherein a node belonging to said network transmits a learning frame periodically to a path opposite to that in which a main signal frame flows.

A learning method according to the present invention of claim 32 is characterized by that said node learns a forwarding tag to be added according to said learning frame.

The present invention of claim 33 is characterized by a learning method for a network having plural nodes connected, wherein a node belonging to said network refers to a MAC SA table cache to judge whether or not a learning frame transmission request is made, and stores a source MAC address (MAC SA) which has made a learning frame transmission request in said MAC SA table cache.

A learning method according to the present invention of claim 34 is characterized by that said node performs aging of said MAC SA table cache and makes a learning frame transmission request to a CPU.

A learning method according to the present invention of claim 35 is characterized by that said node is provided with a learning management program which performs learning frame processing.

The present invention of claim 36 is characterized by a learning method for a network having plural nodes connected, wherein a node belonging to said network is provided with a learning management program which performs learning frame processing.

A learning method according to the present invention of claim 37 is characterized by that said node is provided with an equipment control program which makes a variety of configuration.

A learning method according to the present invention of claim 38 is characterized by that said node discriminates an input frame.

A learning method according to the present invention of claim 39 is characterized by that a node belonging to said network performs aging of an entry to be aged and stores an entry to be aged in an aging management table.

A learning method according to the present invention of claim 40 is characterized by that said node stores an output port for a destination MAC address (MAC DA) and a tag operation in a MAC forwarding table memory.

A learning method according to the present invention of claim 41 is characterized by that said node stores an output destination port at the time of broadcasting to a tag in a broadcast table memory.

A learning method according to the present invention of claim 42 is characterized by that said node stores an output port for a forwarding tag in a tag forwarding table memory.

A learning method according to the present invention of claim 43 is characterized by that said node is provided with a forwarding table having a table, an aging circuit and a table read/write circuit.

A learning method according to the present invention of claim 44 is characterized by that said node stores an address of a forwarding tag on a MAC forwarding table memory in a TAG address management table.

The present invention of claim 45 is characterized by a learning method for a network having plural nodes connected, wherein a node belonging to said network also applies a learning function of Ethernet to a flow which flows asymmetrically.

A network system according to the present invention of claim 46 is characterized by a network having plural nodes connected, wherein a node belonging to said network transmits a frame after adding a source tag to the frame.

A network system according to the present invention of claim 47 is characterized by that said node learns a forwarding tag to be added according to said frame with a source tag.

A network system according to the present invention of claim 48 is characterized by that said node refers to an aging management table to determine whether to add a source tag or a forwarding tag.

A network system according to the present invention of claim 49 is characterized by a network having plural nodes connected, wherein a node belonging to said network determines a forwarding tag to be added on the basis of the port through which the frame is input.

A network system according to the present invention of claim 50 is characterized by a network having plural nodes connected, wherein a node belonging to said network determines a forwarding tag to be added on the basis of the VLAN tag added to an input frame.

A network system according to the present invention of claim 51 is characterized by that said node determines a forwarding tag to be added on the basis of both said input port and said VLAN tag.

A network system according to the present invention of claim 52 is characterized by that said node outputs a MAC address resulting from converting an input MAC address.

A network system according to the present invention of claim 53 is characterized by that said input MAC address is a Universal Administrative MAC address and that said output MAC address is a MAC address for identifying a tunneling frame.

A network system according to the present invention of claim 54 is characterized by that said node is provided with a table management unit which refers to a table to determine the type of tag to be added.

A network system according to the present invention of claim 55 is characterized by that said node is provided with an input port table memory in which an input port and an input VLAN are searched for to determine the type of tag to be added.

A network system according to the present invention of claim 56 is characterized by a network having plural nodes connected, wherein a frame which flows between said nodes is provided with a source tag.

A network system according to the present invention of claim 57 is characterized by that said frame is provided with a MAC address for identifying a tunneling frame.

A learning bridge node according to the present invention of claim 58 is characterized by a network having plural nodes connected, wherein a node belonging to said network transmits a frame after adding a source tag to the frame.

A learning bridge node according to the present invention of claim 59 is characterized by that said node learns a forwarding tag to be added according to said frame with a source tag.

A learning bridge node according to the present invention of claim 60 is characterized by that said node refers to an aging management table to determine whether to add a source tag or a forwarding tag.

A learning bridge node according to the present invention of claim 61 is characterized by a network having plural nodes connected, wherein a node belonging to said network determines a forwarding tag to be added on the basis of the port through which the frame is input.

A learning bridge node according to the present invention of claim 62 is characterized by a network having plural nodes connected, wherein a node belonging to said network determines a forwarding tag to be added on the basis of the VLAN tag added to an input frame.

A learning bridge node according to the present invention of claim 63 is characterized by that said node determines a forwarding tag to be added on the basis of both said input port and said VLAN tag.

A learning bridge node according to the present invention of claim 64 is characterized by that said node outputs a MAC address resulting from converting an input MAC address.

A learning bridge node according to the present invention of claim 65 is characterized by that said input MAC address is a Universal Administrative MAC address and that said output MAC address is a MAC address for identifying a tunneling frame.

A learning bridge node according to the present invention of claim 66 is characterized by that said node is provided with a table management unit which refers to a table to determine the type of tag to be added.

A learning bridge node according to the present invention of claim 67 is characterized by that said node is provided with an input port table memory in which an input port and an input VLAN are searched for to determine the type of tag to be added.

A learning bridge node according to the present invention of claim 68 is characterized by a network system for a network having plural nodes connected, wherein a frame which flows between said nodes is provided with a source tag.

A learning bridge node according to the present invention of claim 69 is characterized by that said frame is provided with a MAC address for identifying a tunneling frame.

A learning method according to the present invention of claim 70 is characterized by a network having plural nodes connected, wherein a node belonging to said network transmits a frame after adding a source tag to the frame.

A learning method according to the present invention of claim 71 is characterized by that said node learns a forwarding tag to be added according to said frame with a source tag.

A learning method according to the present invention of claim 72 is characterized by that said node refers to an aging management table to determine whether to add a source tag or a forwarding tag.

A learning method according to the present invention of claim 73 is characterized by a network having plural nodes connected, wherein a node belonging to said network determines a forwarding tag to be added on the basis of the port through which the frame is input.

A learning method according to the present invention of claim 74 is characterized by a network having plural nodes connected, wherein a node belonging to said network determines a forwarding tag to be added on the basis of the VLAN tag added to an input frame.

A learning method according to the present invention of claim 75 is characterized by that said node determines a forwarding tag to be added on the basis of both said input port and said VLAN tag.

A learning method according to the present invention of claim 76 is characterized by that said node outputs a MAC address resulting from converting an input MAC address.

A learning method according to the present invention of claim 77 is characterized by that said input MAC address is a Universal Administrative MAC address and that said output MAC address is a MAC address for identifying a tunneling frame.

A learning method according to the present invention of claim 78 is characterized by that said node is provided with a table management unit which refers to a table to determine the type of tag to be added.

A learning method according to the present invention of claim 79 is characterized by that said node is provided with an input port table memory in which an input port and an input VLAN are searched for to determine the type of tag to be added.

A learning method according to the present invention of claim 80 is characterized by a network system for a network having plural nodes connected, wherein a frame which flows between said nodes is provided with a source tag.

A learning method according to the present invention of claim 81 is characterized by that said frame is provided with a MAC address for identifying a tunneling frame.

### BRIEF DESCRIPTION OF THE DRAWINGS

Fig. 1 is a block diagram showing a configuration example of a physical network according to a first embodiment of the invention;
Fig. 2 is a block diagram showing an Ethernet frame configuration according to the first embodiment of the invention;
Fig. 3 is a block diagram showing a VLAN Tagged Ethernet frame configuration according to the first embodiment of the invention;
Fig. 4 is a block diagram showing a VLAN tag configuration according to the first embodiment of the invention;
Fig. 5 is a block diagram showing a configuration of Ethernet frame with a forwarding tag according to the first embodiment of the invention;
Fig. 6 is a block diagram showing a tag configuration according to the first embodiment of the invention;
Fig. 7 is a block diagram showing a learning frame configuration according to the first embodiment of the invention;
Fig. 8 is a block diagram showing a learning frame configuration according to the first embodiment of the invention;
Fig. 9 is a block diagram showing a node G1 configuration in detail according to the first embodiment of the invention;
Fig. 10 is a block diagram showing in detail a configuration of a packet forwarding unit 20 according to the first embodiment of the invention;
Fig. 11 is a block diagram showing in detail a configuration of a frame analyzer 201 according to the first embodiment of the invention;
Fig. 12 is a block diagram showing in detail a configuration of a learning frame transmission management unit 202 according to the first embodiment of the invention;
Fig. 13 is a block diagram showing in detail a configuration of a MACSA table cache 2025 according to the first embodiment of the invention;
Fig. 14 is a block diagram showing in detail a configuration of a table search unit 203 according to the first embodiment of the invention;
Fig. 15 is a block diagram showing in detail a configuration of a forwarding table 204 according to the first embodiment of the invention;
Fig. 16 is a block diagram showing in detail a configuration of a MAC forwarding table memory 2043 according to the first embodiment of the invention;
Fig. 17 is a block diagram showing in detail a configuration of a tag forwarding table memory 2041 according to the first embodiment of the invention;
Fig. 18 is a block diagram showing in detail a configuration of a broadcast table memory 2042 according to the first embodiment of the invention;
Fig. 19 is a block diagram showing in detail a configuration of an aging management table 2044 according to the first embodiment of the invention;
Fig. 20 is a block diagram showing in detail a configuration of a frame rewrite unit 205 according to the first embodiment of the invention;
Fig. 21 is a block diagram showing in detail a configuration of a frame aggregate unit 206 according to the first embodiment of the invention;
Fig. 22 is a block diagram showing in detail a configuration of a frame transfer unit 207 according to the first embodiment of the invention;
Fig. 23 is a block diagram showing a configuration of processing realized by software in a CPU 30 according to the first embodiment of the invention;
Fig. 24 is a table showing a configuration of a TAG address management table 70134 according to the first embodiment of the invention;
Fig. 25 is a flow chart explaining in detail an operation of an event 01 according to the first embodiment of the invention;
Fig. 26 is a flow chart explaining in detail an operation of an event 11 according to the first embodiment of the invention;
Fig. 27 is a flow chart explaining in detail an operation of an event 03 according to the first embodiment of the invention;
Fig. 28 is a flow chart explaining in detail an operation of an event 12 according to the first embodiment of the invention;
Fig. 29 is a flow chart explaining in detail an operation of an event 05 according to the first embodiment of the invention;
Fig. 30 is a flow chart explaining in detail an operation of an event 13 according to the first embodiment of the invention;
Fig. 31 is a flow chart explaining in detail an operation of an event 06 according to the first embodiment of the invention;
Fig. 32 is a flow chart explaining in detail an operation of an event 14 according to the first embodiment of the invention;
Fig. 33 is a topology diagram showing a configuration example of a tree T0 according to the first embodiment of the invention;
Fig. 34 is a topology diagram showing a configuration example of a tree T1 according to the first embodiment of the invention;
Fig. 35 is a topology diagram showing a configuration example of a tree T2 according to the first embodiment of the invention;
Fig. 36 is a topology diagram showing a configuration example of a tree T3 according to the first embodiment of the invention;
Fig. 37 is a topology diagram showing a configuration example of a tree T4 according to the first embodiment of the invention;
Fig. 38 is a sequence chart of an operation example 1 according to the first embodiment of the invention;
Fig. 39 is a sequence chart of an operation example 2 according to the first embodiment of the invention; and
Fig. 40 is a sequence chart of an operation example 3 according to the first embodiment of the invention.
Fig. 41 is a block diagram showing a configuration of an Ethernet (R) frame 62A with a source tag according to a second embodiment of the invention.
Fig. 42 is a block diagram showing a configuration of a table search unit 203A according to the second embodiment of the invention.
Fig. 43 is a block diagram showing in detail a configuration of a learning management unit 202A according to the second embodiment of the invention.
Fig. 44 is a flow chart explaining in detail an operation of an event 01 according to the second embodiment of the invention.
Fig. 45 is a sequence diagram of an operation example 1 according to the second embodiment of the invention.
Fig. 46 is a sequence diagram of an operation example 2 according to the second embodiment of the invention.
Fig. 47 is a block diagram showing a configuration of a table search unit 203B of a third embodiment of the invention.
Fig. 48 is a sequence diagram of an operation example 1 according to the third embodiment of the invention.
Fig. 49 is a block diagram showing a configuration of a table search unit 203C of a fourth embodiment of the invention.
Fig. 50 is a block diagram showing a configuration of a forwarding table 204C of the fourth embodiment of the invention.
Fig. 51 is a block diagram showing a configuration of an input port table memory 2049 of the fourth embodiment of the invention.
Fig. 52 is a block diagram showing a configuration example of a physical network according to the fourth embodiment of the invention.
Fig. 53 is a block diagram showing a configuration of an Ethernet (R) frame 62C with a source tag according to the fourth embodiment of the invention.

### DESCRIPTION OF THE PREFERRED EMBODIMENT

The preferred embodiment of the present invention will be described in detail with reference to the accompanying drawings.

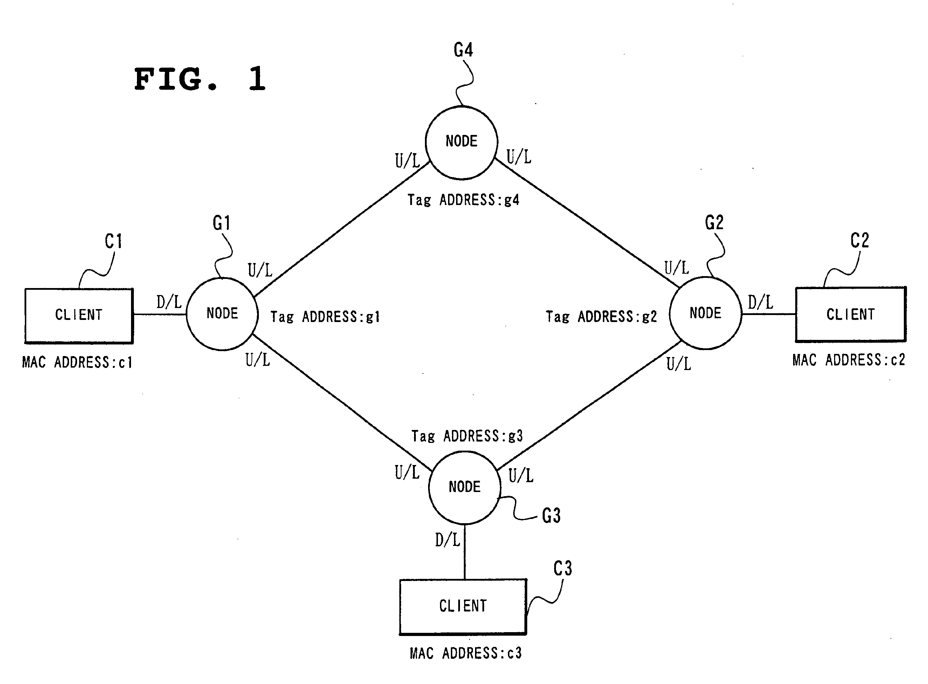

Fig. 1 is a block diagram showing a configuration example of a physical network to which the present invention is applied.

The physical network of Fig. 1 is configured of nodes G1 to G4 which are connected to form a ring shape, the node G1 is an Ethernet switch having a downlink port (D/L) and uplink ports (U/L), a client is connected to the downlink port, and a switch is connected to the uplink ports. In this embodiment, a client C1 is connected to the downlink port (D/L), and the node G3 and the node G4 are connected to the uplink ports (U/L) respectively.

The node G1 performs the following operation on the physical network of Fig. 1.
(1) With a tag for forwarding or the like (e.g. ID or address of a node to which a destination client is connected) added if necessary, a frame arrived from the client C1 is transferred to one or both of the node G3 and the node G4.
(2) A frame arrived from the node G3 is removed an added tag if necessary and transferred to one or both of the client C1 and the node G4.
   In a case, for example, where the arriving frame is directed to the client C1, because the client C1 is connected to the node in question, the frame is transferred to the client C1 with an added tag (information such as an address of the node G1) deleted.
(3) A frame arrived from the node G4 is removed an added tag if necessary and transferred to one or both of the client C1 and the node G3.
   In a case, for example, where the arriving frame is directed to the client C1, because the client C1 is connected to the node in question, the frame is transferred to the client C1 with an added tag (information such as an address of the node G1) deleted.
(4) A learning frame is sent and received between the node G1 and the node G3 or the node G4 to exchange address information required for the frame transfer shown in (1) to (3).
(5) A BPDU (Bridge Protocol Data Unit) frame specified by a high-speed spanning tree protocol is sent and received between the node G1 and the node G3 or the node G4 to exchange path information required for execution of the operations (1) to (4).

The node G2 is a node having the same configuration and function as the node G1 and an Ethernet switch having the downlink port (D/L) and the uplink ports (U/L). The client is connected to the downlink port, and the switch is connected to the uplink ports. According to the embodiment, the client C2 is connected to the downlink port (D/L), and the node G3 and the node G4 are connected to the uplink ports (U/L).

The node G2 operates as follows on the physical network shown in Fig. 1.
(1) A frame arrived from the client C2 is added a tag for forwarding or the like (e.g. ID or address of a node to which a destination client is connected) if necessary and transferred to one of both of the node G3 and the node G4.
(2) A frame arrived from the node G3 is removed the added tag if necessary and transferred to one or both of the client C2 and the node G4.
   In a case, for example, where the arriving frame is directed to the client C2, because the client C2 is connected to the node in question, the frame is transferred to the client C2 with an added tag (information such as an address of the node G2) deleted.
(3) A frame arrived from the node G4 is removed the added tag if necessary and transferred to one or both of the client C2 and the node G3.
   In a case, for example, where the arriving frame is directed to the client C2, because the client C2 is connected to the node in question, the frame is transferred to the client C2 with an added tag (information such as an address of the node G2) deleted.
(4) A learning frame is sent and received between the node G2 and the node G3 or the node G4 to exchange address information required for the frame transfer shown in (1) to (3).
(5) The BPD frame specified by a high-speed spanning tree protocol is sent and received between the node G2 and the node G3 or the node G4 to exchange path information required for execution of the operations shown in (1) to (4).

The node G3 is a node having the same configuration and function as the node G1 and an Ethernet switch having the downlink port (D/L) and the uplink ports (U/L). The client is connected to the downlink port, and the switch is connected to the uplink ports. According to this embodiment, the client C3 is connected to the downlink port (D/L), and the node G1 and the node G2 are connected to the uplink ports (U/L).

The node G3 operates on the physical network of Fig. 1 as follows.
(1) A frame arrived from the client C3 is added a tag for forwarding or the like (e.g. ID or address of a node to which a destination client is connected) if necessary and transferred to one or both of the node G1 and the node G2.
(2) A frame arrived from the node G1 is removed the added tag if necessary and transferred to one or both of the client C3 and the node G2.
   In a case, for example, where the arriving frame is directed to the client C3, because the client C3 is connected to the node in question, the frame is transferred to the client C3 with an added tag (information such as an address of the node G3) deleted.
(3) A frame arrived from the node G2 is removed the added tag if necessary and transferred to one or both of the client C3 and the node G1.
   In a case, for example, where the arriving frame is directed to the client C3, because the client C3 is connected to the node in question, the frame is transferred to the client C3 with an added tag (information such as an address of the node G3) deleted.
(4) The learning frame is sent and received between the node G3 and the node G1 or the node G2 to exchange address information required for execution of the frame transfer shown in (1) to (3).
(5) The BPDU frame specified by the high-speed spanning tree protocol is sent and received between the node G3 and the node G1 or the node G2 to exchange path information required for execution of the operations shown in (1) to (4).

The node G4 is a node having the same configuration and function as the node G1 and an Ethernet switch having the downlink port (D/L) and the uplink ports (U/L). The client is connected to the downlink port, and the switch is connected to the uplink ports. According to this embodiment, nothing is connected to the downlink port (D/L), and the node G1 and the node G3 are connected to the uplink ports (U/L).

The node G4 operates as follows on the physical network shown in Fig. 1.
(1) A frame arrived from the node G1 is transferred to the node G2 if necessary.
(2) A frame arrived from the node G2 is transferred to the node G1 if necessary.
(3) The learning frame is sent and received between the node G4 and the node G1 or the node G2 to exchange address information required for execution of the frame transfer operation shown in (1) to (2).
(4) The BPDU frame specified by the high-speed spanning tree protocol is sent and received between the node G4 and the node G1 or the node G2 to exchange path information required for execution of the operations shown in (1) to (3).

The client C1 means a personal computer, a server, a router, a switch and all other electronic equipment for sending and receiving Ethernet frames. According to this embodiment, the client C1 will be described assuming a combination of a personal computer and basic software capable of exchanging ICMP PING. The operation to be described here can also be executed in the same way for application other than the ICMP PING. This application includes sharing of files and a printer by NetBIOS or Apple Talk, TCP/IP, UDP/IP and HTTP, TELNET, FTP, SMTP, POP, SSL and the like which are application using them. In this configuration example, the client C1 is connected to the downlink port (D/L) of the node G1

The client C2 is a client similar to the client C1 and means a personal computer, a server, a router, a switch and all other electronic equipment for sending and receiving other Ethernet frames. According to this embodiment, the client C2 will be described assuming a combination of a personal computer and basic software capable of exchanging ICMP PING. In this configuration example, the client C2 is connected to the downlink port (D/L) of the node G2.

The client C3 is a client similar to the client C1 and means a personal computer, a server, a router, a switch and all other electronic equipment for sending and receiving other Ethernet frames. According to this embodiment, the client C3 will be described assuming a combination of a personal computer and basic software capable of exchanging ICMP PING. In this configuration example, the client C3 is connected to the downlink port (D/L) of the node G3.

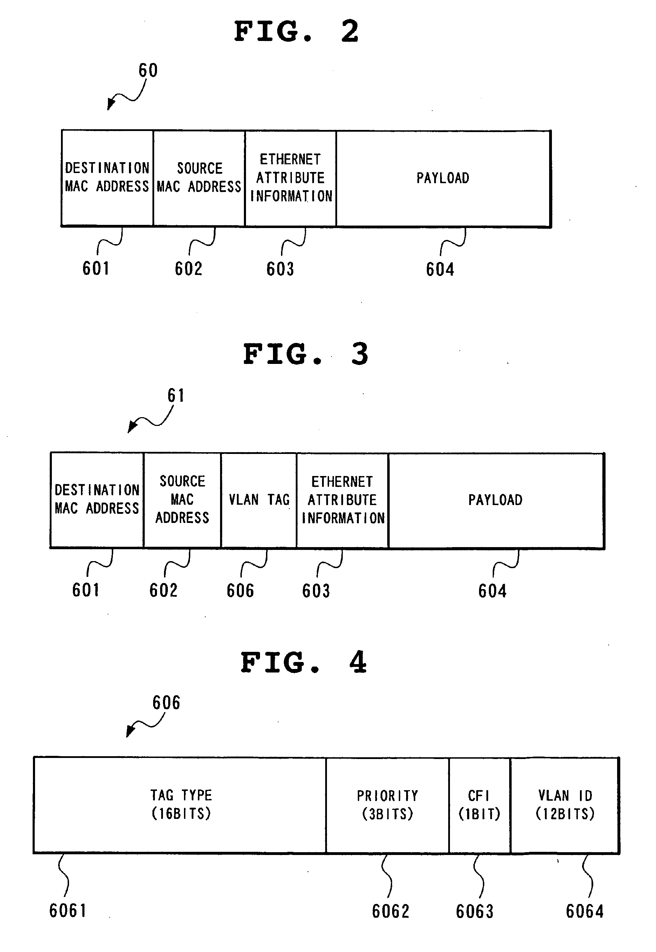

Fig. 2 is a block diagram showing a configuration of the Ethernet frame transferred over the network of Fig. 1.

IEEE 802.3 Ethernet frame 60 is a frame format used for Ethernet and formed by the frame format of Fig. 2. For the network control frame, a special MAC address is stored in the destination MAC address according to the standard.

Fig. 3 is a block diagram showing a configuration of a VLAN Tagged Ethernet frame flowing on the network of Fig. 1.

IEEE802.3 VLANT Tagged Ethernet frame 61 is a frame with VLAN tag 606 of the IEEE802.3 Ethernet frame 60. It has a frame format used for the Ethernet and formed in the frame format of Fig. 3. For the network control frame, a special MAC address is stored in the destination MAC address according to the standard, and the VLAN tag 606 for storing special network separation information is possessed within the frame.

Fig. 4 is a block diagram showing a configuration of the VLAN tag for the VLAN Tagged Ethernet frame of Fig. 3.

A frame format of the VLAN tag 606 is shown in Fig. 4. An identification ID of a tag indicating that the frame is tagged is stored in tag type 6061, and 0×8100 is stored in view of the standard. Priority information of 8-stage frame is stored using three bits for 0d000-0d111 in priority 6062. CFI6063 indicates that routing information for source routing to be used by a token ring is included. ID information for separating the network is stored in VLAN ID 6064. A node for relaying the frame refers to this ID to limit a route for transfer of the frame in the ID unit so to separate the network.

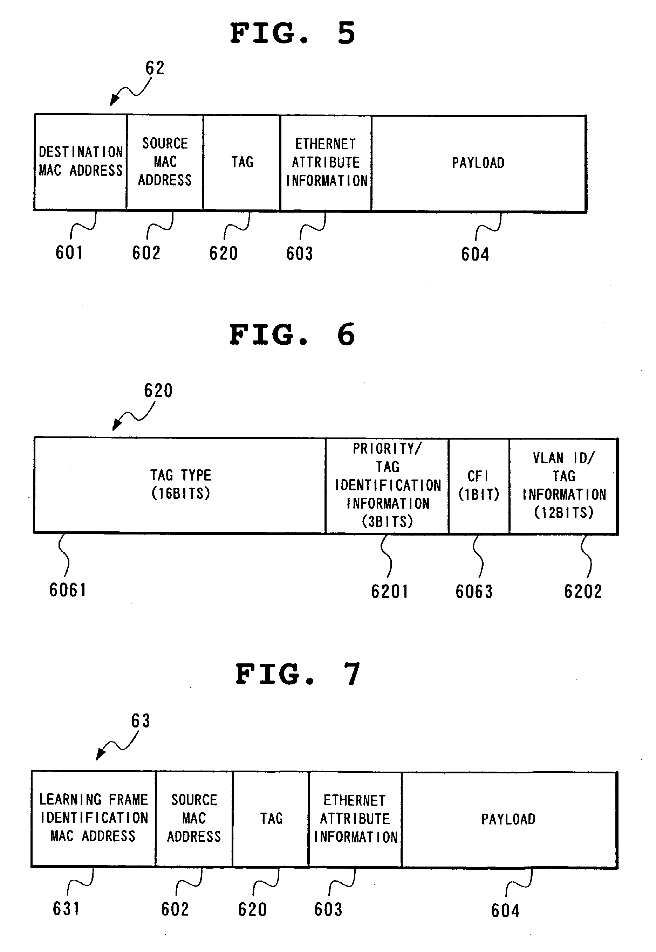

Fig. 5 is a block diagram showing a configuration of the Ethernet frame with the forwarding tag to be transferred over the network of Fig. 1.

Ethernet frame 62 with a forwarding tag is a frame with a tag 620 of the IEEE802.3 Ethernet frame 60. It has the same frame format as that used for the Ethernet and formed to have the frame format shown in Fig. 5. For the network control frame, a special MAC address is stored in the destination MAC address according to the standard, and the destination MAC address has the tag 620 for storing information on relaying of the frame. A bit indicating the forwarding tag is used for priority/tag identification information 6201 of the tag 620.

Fig. 6 is a block diagram showing a configuration of the tag 620 for the Ethernet frame with the forwarding tag of Fig. 5.

A frame format of the tag 620 is shown in Fig. 6. The identification ID of a tag indicating that the frame has a tag is stored in tag type 6061, and the same 0×8100 as the standard is stored. For the priority/tag identification information 6201, 3 bits are used for 0d000-0d111, and priority information on a 4-stage frame and information indicating a tag type are stored. The tag type can be defined to have information to be stored in a tag according to a user's use, such as a forwarding tag indicating a frame's destination node or a source tag indicating a broadcast transfer source. CFI6063 indicates that routing information for source routing to be used for the token ring is included. Stored in VLAN ID6202 according to a tag type is information such as a node address of a node to which a destination client is connected or a node address of a source node.

Fig. 7 is a block diagram showing a configuration of the learning frame flowing over the network of Fig. 1.

Learning frame 63 is a frame having the IEEE802.3 Ethernet frame 60 with the tag 620 and has a feature that the MAC address 631 for learning frame identification indicating that the frame is a learning frame stored in the destination MAC address. A bit indicating a broadcast tag is used for the priority/tag identification information 6201 of the tag 620. And, it is the same frame format as that used for the Ethernet and formed to have the same frame format as in Fig. 5.

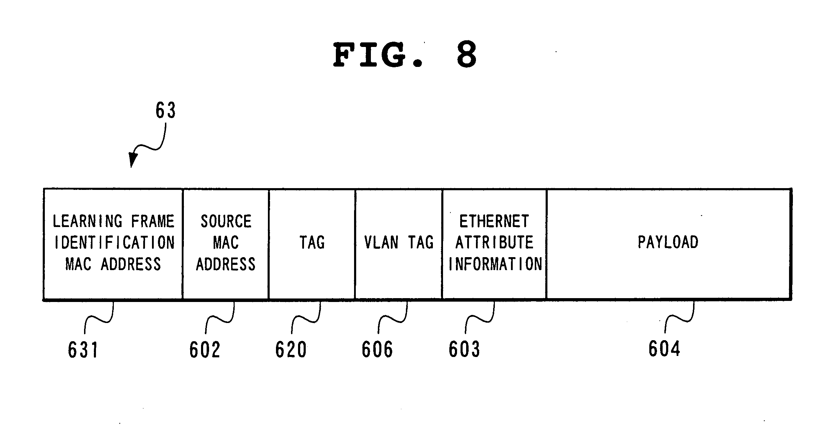

Fig. 8 is a block diagram showing a configuration of a learning frame with the VLAN tag flowing over the network of Fig. 1.

The learning frame 63 is a frame which has the IEEE802.3 Ethernet frame 60 with the tag 620 added and has a feature that the MAC address 631 for learning frame identification indicating that the frame is a learning frame is stored in the destination MAC address. For the priority/tag identification 6201 of the tag 620, a bit indicating a broadcast tag is used. And it has the same frame format as that used for the Ethernet and formed in a format having a VLAN tag inserted into the frame format of Fig. 5.

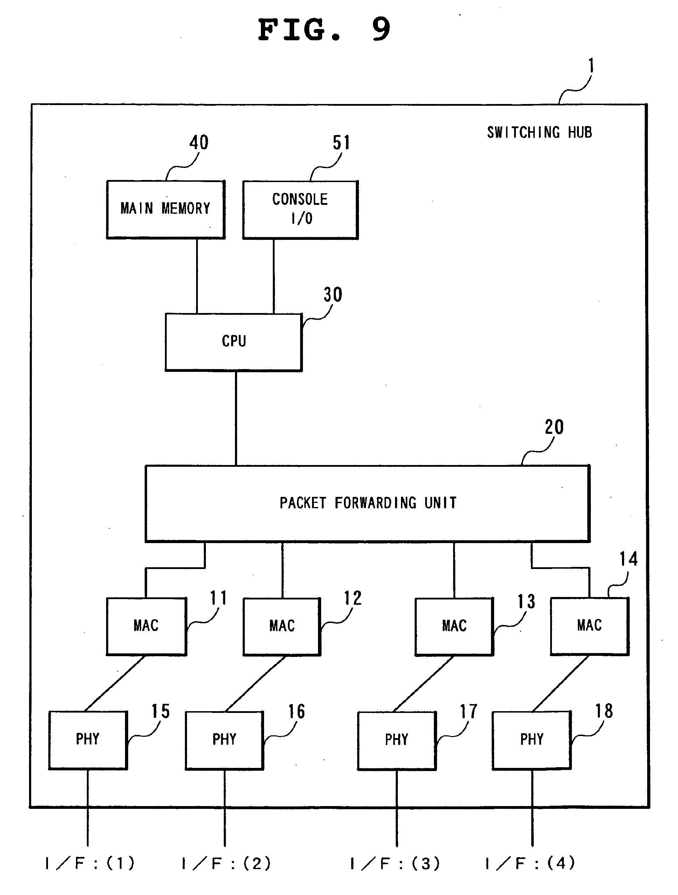

Fig. 9 is a block diagram showing in detail a configuration of the node G1 (switching hub 1) shown in Fig. 1.

In Fig. 9, the switching hub 1 (namely, the node G1) is an Ethernet switch which is comprised of a packet forwarding unit 20, a CPU 30, a main memory 40 and a console I/O 51 to which the method and circuitry of the present invention are applied. The switching hub 1 uses PHY 15, PHY 16, PHY 17, PHY 18, MAC 11, MAC 12, MAC 13 and MAC 14 to be connected to I/F (1), I/F (2), I/F (3) and I/F (4) so to send and receive the Ethernet frame.

The packet forwarding unit 20 applying the present invention transfers the received frame to an appropriate interface, has a transfer control program stored in the CPU 30 and the main memory 40 and gives a control instruction to the packet forwarding unit.

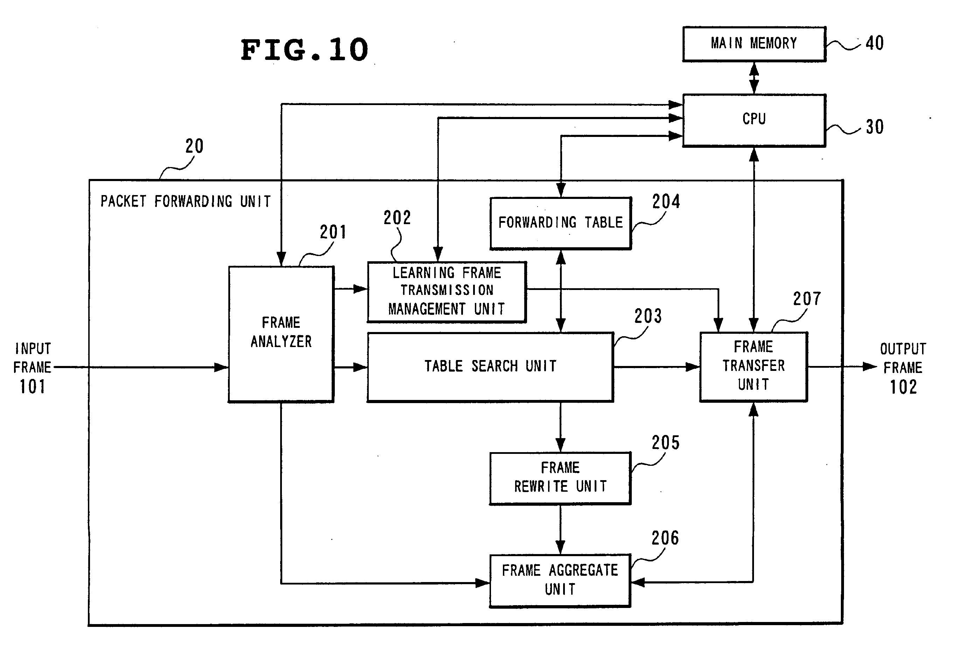

Fig. 10 is a block diagram showing in detail a configuration of the packet forwarding unit 20 shown in Fig. 9.

The packet forwarding unit 20 is comprised of frame analyzer 201, learning frame transmission management unit 202, forwarding table 204 and table search unit 203 including the functions of the invention in addition to frame rewrite unit 205, frame aggregate unit 206 and frame transfer unit 207 of a conventional circuit.

The packet forwarding unit 20 has a mechanism to receive the IEEE802.3 Ethernet frame 60 of Fig. 2, the IEEE802.3 VLANT Tagged Ethernet frame 61 of Fig. 3, the Ethernet frame with a forwarding tag of Fig. 5 and the learning frame 63 of Fig. 6 as input frame 101 and to transfer as output frame 102 to the MAC 11, the MAC 12, the MAC 13 and the MAC 14 to be connected to the I/F (1), the I/F (2), the I/F (3) and the I/F (4).

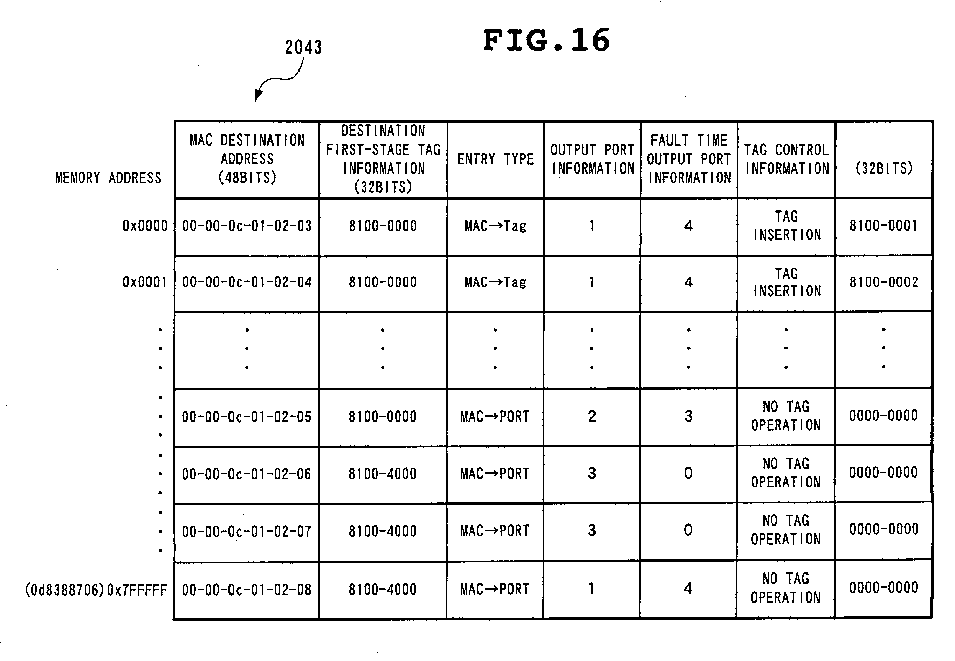

In the CPU 30, network control program 304 and equipment control program 305 which are programs for network control and equipment control are executed, and forwarding table control program 301, which performs frame sending processing and manipulates information in the forwarding table memory of Fig. 16, Fig. 17 and Fig. 18 to be described later, is being executed. The forwarding table control program 301 outputs information required for network control to table write information 3012 and table write address 3011 to forwarding table 204 according to instructions of learning management program 302 or spanning tree control program 303 which similarly runs on the CPU 30 so to control the transmission and reception of information required for the network control.

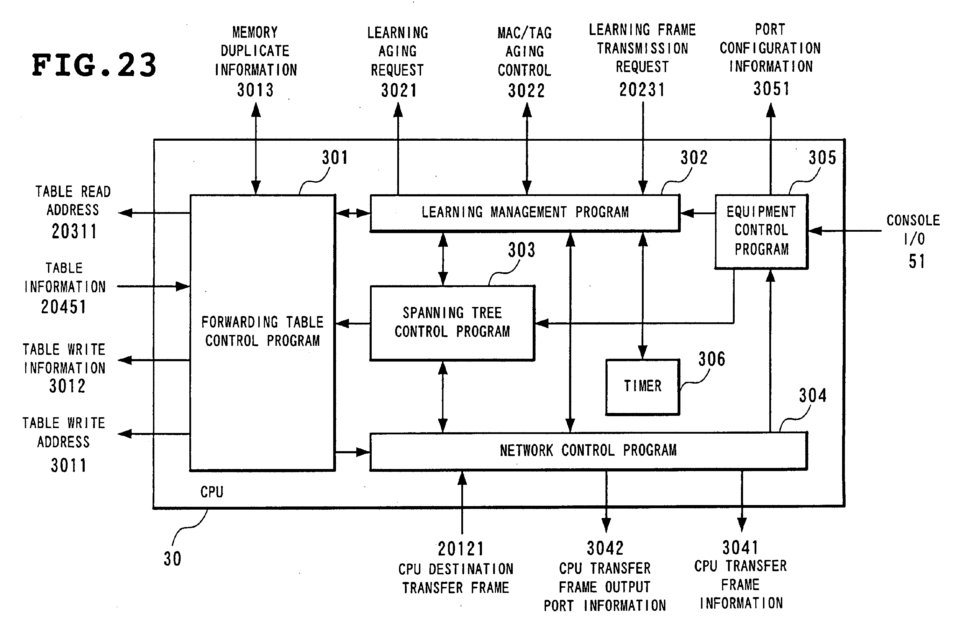

The main memory 40 stores the individual programs executed on the CPU 30 shown in Fig. 23 and memory duplicate information 3013 shown in Fig. 23.

The memory duplicate information 3013 has four tables, namely tag forwarding table memory 70131, broadcast table memory 70132, MAC forwarding table memory 70133 and TAG address management table 70134.

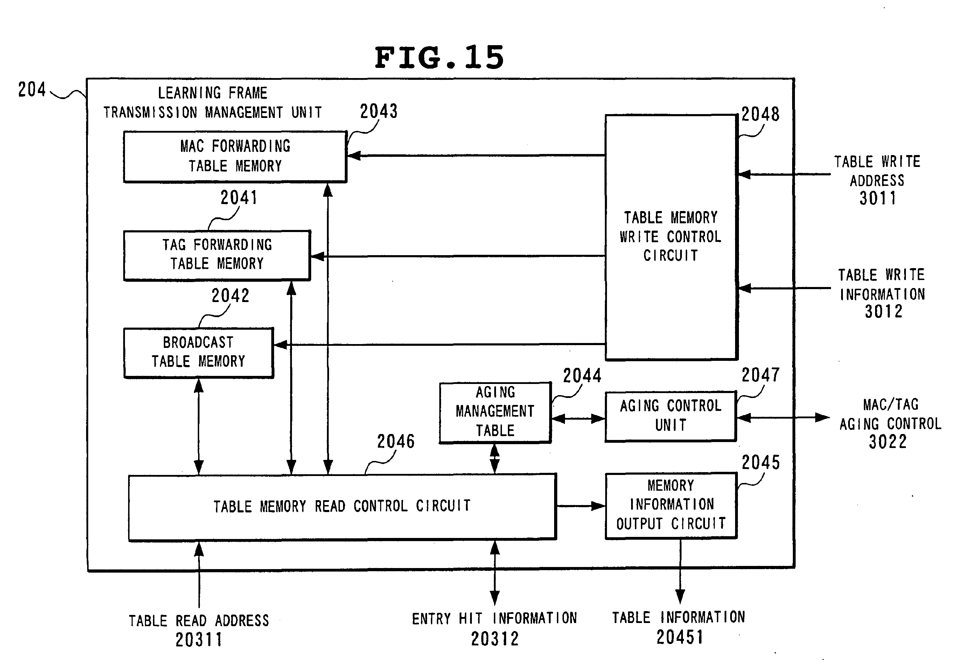

The tag forwarding table memory 70131 has a table, which has the same contents as the tag forwarding table memory 2041 shown in Fig. 15, created on the main memory 40.

The broadcast table memory 70132 has a table, which has the same contents as the broadcast table memory 2041 shown in Fig. 15, created on the main memory 40.

The MAC forwarding table memory 70133 has a table, which has the same contents as the MAC forwarding table memory 2043 shown in Fig. 15, created on the main memory 40.

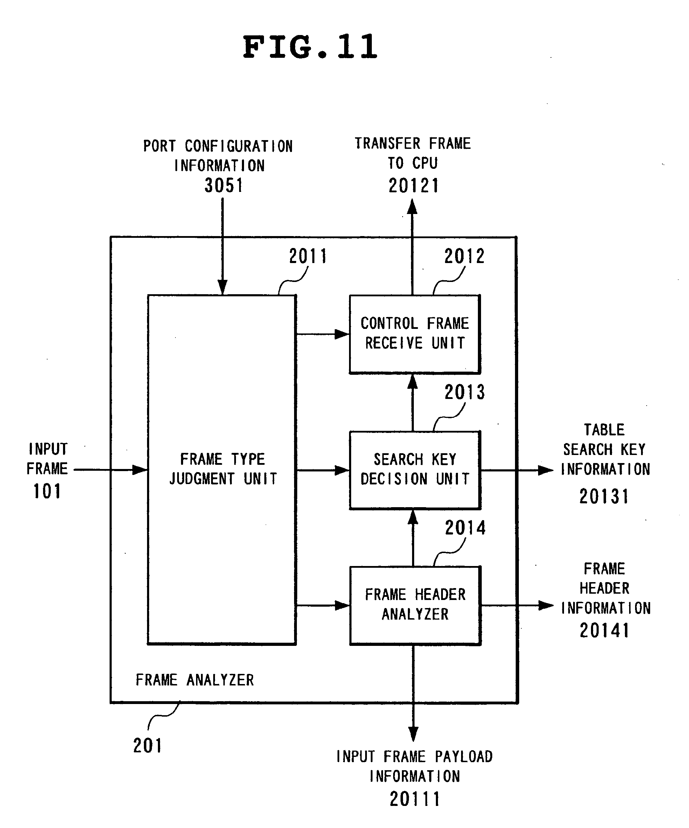

Fig. 11 is a block diagram showing in detail a configuration of the frame analyzer 201 shown in Fig. 10.

The frame analyzer 201 of Fig. 11 has functions to analyze the frame of input frame 101 and to send table search key information 20131 for determining a transfer path, frame header information 20141 and a control frame to the CPU 30.

Frame type judgment unit 2011 judges a frame type of the input frame 101 and an input port type. Specifically, it is judged which of the IEEE802.3 Ethernet frame 60, the IEEE802.3 VLAN Tagged Ethernet frame 61, the Ethernet frame with a forwarding tag and the learning frame 63 is the frame type. The input port type is judged according to an input port number on the basis of an attribute of the port determined from equipment control program 305 of Fig. 23 and information on whether the input port is an uplink port or a downlink port. The judged information is sent to search key decision unit 2013 and frame header analyzer 2014. And, the input frame 101 is sent to the control frame receive unit 2012 and the frame header analyzer 2014.

The frame header analyzer 2014 extracts frame header information and judges a destination MAC address and a tag type from information on the input frame 101 and the judged information sent from frame type judgment unit 111.

The destination MAC address is judged whether it is an ordinary MAC address, a MAC address for the network control frame or a MAC address for learning frame identification. The tag type is judged whether it is VLAN tag 606, a forwarding tag (own node destination, another node destination) or a broadcast tag. Such judgment information is sent to the search key decision unit 2013. And, frame's input port information, destination MAC address 601, source MAC address 602, VLAN tag 606, tag 620 and Ethernet attribute information 603 extracted from the frame are output as the frame header information 20141, and payload 604 is output as input frame payload information 20111.

The search key decision unit 2013 determines a key to be used for table search from information on frame types, input port types, destination MAC address types and tag types sent from the frame type judgment unit 2011 and the frame header analyzer 2014.

The determined key information is output as the table search key information 20131. The search key determination method determines a transfer key addressed to the CPU when the MAC destination address is for the network control frame or for the learning frame identification and notifies control frame receive unit 2012 of the CPU destination transfer frame.

For the Ethernet frame 62 with a forwarding tag (where an address of a node to which a destination client is connected or the like is stored) addressed to another node, key information (e.g. information stored in the tag 620 or the like) for searching a tag forwarding table and a broadcast forwarding table is output, and for the Ethernet frame 62 with a forwarding tag addressed to own node, the IEEE802.3 Ethernet frame 60 and the IEEE802.3 VLAN Tagged Ethernet frame 61, key information (in a case of the frames 60 and 62, information stored in the destination MAC address 601 and in a case of the frame 61, information stored in the destination MAC address 601 and the VLAN tag 606) for searching a MAC forwarding table and a broadcast forwarding table is output.

When a CPU destination transfer frame is instructed from the search key decision unit, the control frame receive unit 2012 outputs the input frame 101 input from the frame type judgment unit 2011 as CPU destination transfer frame 20121.

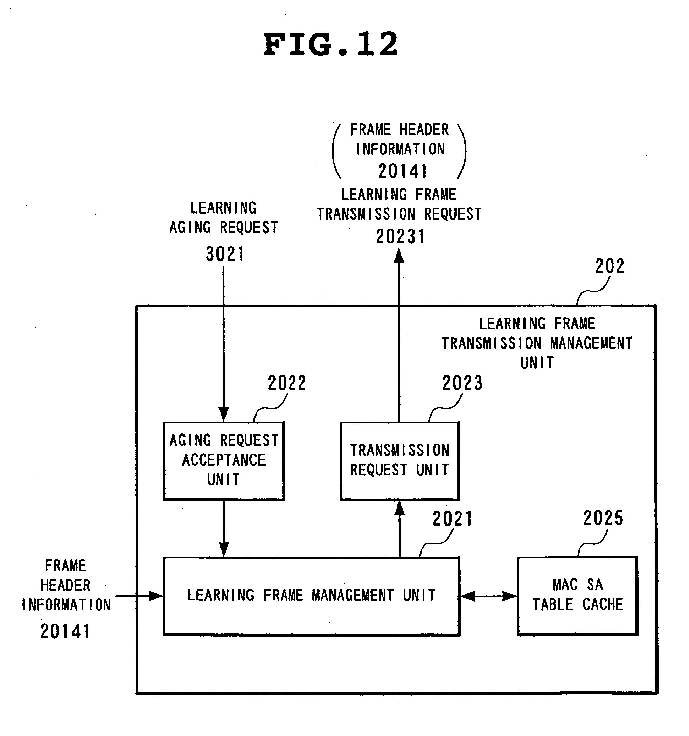

Fig. 12 is a block diagram showing in detail a configuration of the learning frame transmission management unit 202 shown in Fig. 10.

The learning frame transmission management unit 202 of Fig. 12 is provided with MAC SA table cache 2025 which manages a learning frame sending request to make the same frame not to frequently make a learning operation request to the CPU 30 so as to realize a function of lowering a processing load of the CPU. And, this learning frame transmission management unit 202 operates to check a frame requiring a learning operation and to request the CPU to send the learning frame.

Learning frame management unit 2021 receives the frame header information 20141 from the frame analyzer 201 to check a source MAC address and makes a learning frame sending request. An operation therefor becomes as follows.

After the MAC source address of the frame header information is checked, the MAC SA table cache 2025 is read to check whether the same MAC source address is entered or not. Then, if there is no entry, learning frame transmission request 20231 is output together with the frame header information 20141 to transmission request unit 2023. At the same time, the MAC source address information is entered the MAC SA table cache 2025. If the same MAC destination address has been entered at the time of checking, no transmission request is output.

There is also provided a function of clearing to zero the MAC SA table cache 2025 according to a request from aging request acceptance unit 2022.

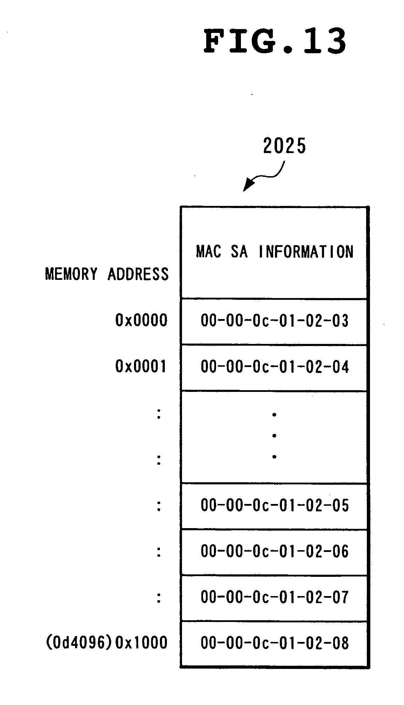

Fig. 13 is a block diagram showing in detail a configuration of the MAC SA table cache 2025 shown in Fig. 12.

The MAC SA table cache 2025 has a function to store a MAC source address of the frame and holds MAC source address information of the received frame as shown in Fig. 13. When a new frame is received, the MAC source address of its frame is stored as MAC SA information in this MAC SA table cache 2025. If there is the same information at the time of the second reception, the MAC source address is not stored in the entry.

The transmission request unit 2023 requests the CPU 30 to send a learning frame. When a learning frame sending request is made from the learning frame management unit 2021, the learning frame transmission request 20231 is output to make the CPU 30 execute the learning frame sending processing.

The aging request acceptance unit 2022 receives learning aging request 3021 from the CPU 30. Upon receiving the learning aging request 3021, the aging request acceptance unit 2022 requests the learning frame management unit 2021 to clear all entries of the MAC SA table cache 2025.

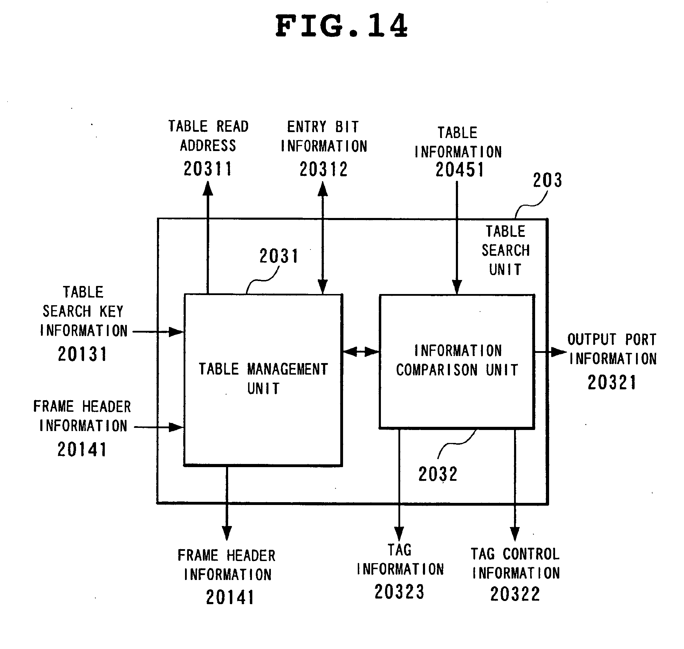

Fig. 14 is a block diagram showing in detail a configuration of the table search unit 203 shown in Fig. 10.

The table search unit 203 of Fig. 14 has a function to determine a transfer destination of the frame and is comprised of table management unit 2031 and information comparison unit 2032.

The table management unit 2031 performs a table search of forwarding table 204 to search a transfer destination according to the table search key information 20131.

The frame header information 20141 is output from the table search unit 203 to the frame rewrite unit 205 for rewriting the frame header.

The table search unit 203 inputs search instructions from the table search key information 20131 (e.g. the contents recited in the VLAN ID/tag information 6202 or the like) to the tag forwarding table memory 2041, MAC forwarding table memory 2043 and broadcast forwarding table memory 2042. When information on plural search keys is input, search instructions to individual tables are output as table read address 20311 to the forwarding table 204 in order of tag forwarding table>MAC forwarding table>broadcast forwarding table.

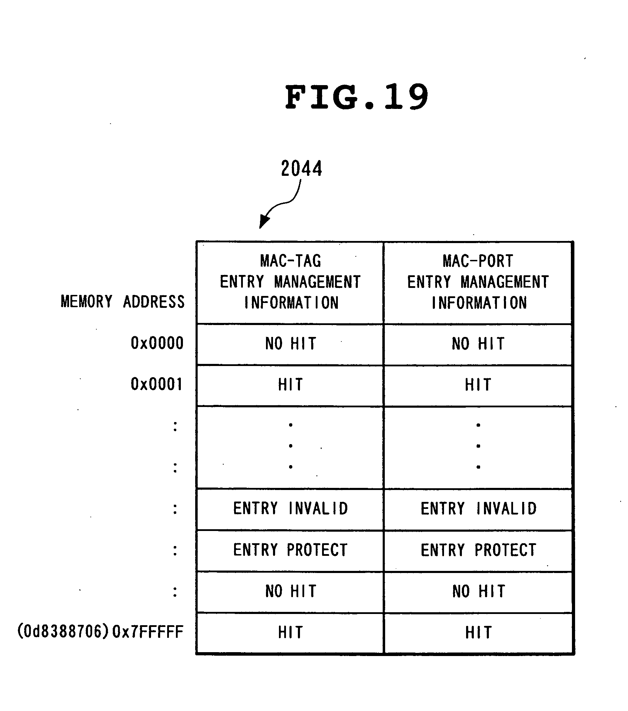

As a result of searching the individual tables, when the table search key information 20131 agrees with the table information 20451, hit information is received from the information comparison unit 2032, and when it does not agree, mishit information is received. The same table is searched for different addresses until there is a hit, or search instructions to the next order of priority are given to the forwarding table 204. When there is a hit while referring to the MAC forwarding table, entry hit information 20312 is output and stored in the entry of MAC-Tag entry management information when an entry type is MAC→Tag or in the entry of MAC-Port entry management information when the entry type is MAC→Port with the hit MAC forwarding table memory address as a memory address with respect to the aging management table 2044 of Fig. 19 through table memory read control circuit 2046. In addition, in the present embodiment, since an address space of the MAC forwarding table and that of the aging management table are correlated with each other, such processing as described above realizes write to the aging management table.

For comparing the table search key information 20131 and the table information 20451 obtained from the forwarding table 204, the table search key information 20131 is output to the information comparison unit 2032. Output as the table search key information 20131 are VLAN ID/tag information 6202 (information such as a node address of a node to which a destination client is connected) when conducting search of the tag forwarding table memory 2041, the destination MAC address 601 and the VLAN tag 606 when searching the MAC forwarding table memory 2043, and the VLAN ID/tag information 6202 and the VLAN ID 6064 when searching the broadcast forwarding table memory 2042. Only in a case of an Ethernet (R) frame with a forwarding tag directed to the node in question, an instruction is given to the information comparison unit 2032 to output tag deletion as the tag control information 20322.

The information comparison unit 2032 compares a result of the search of the forwarding table 204 by the table management unit 2031 (the table information 20451) and the table search key information 20131 to be searched and when they agree with each other, determines an output port based on the output port information stored in the entry of the table. As described in the foregoing, according to a table to be searched, received from the table management unit 2031 is information such as input port information of a frame, and the VLAN ID/tag information 6202, the destination MAC address 601 and the VLAN tag 606 or VLAN ID 6064 (table search key information), while from the forwarding table 204, received is a result of table read instruction made to the forwarding table 204 by the table management unit 2031 as the table information 20451 to compare the table search key information 20131 and the table information 20451 according to a type of each table and output the tag information 20323 and the tag control information 20322 to the frame rewrite unit when the information agree with each other and further output the output port information stored in the entry of the table as the output port information 20321.

To output the output port information 20321, it is compared with the input port information, and if they are the same port information, the output port information is not output in order to prevent the frame from looping, and the frame is discarded. The operation contents when each table is referred are described below.

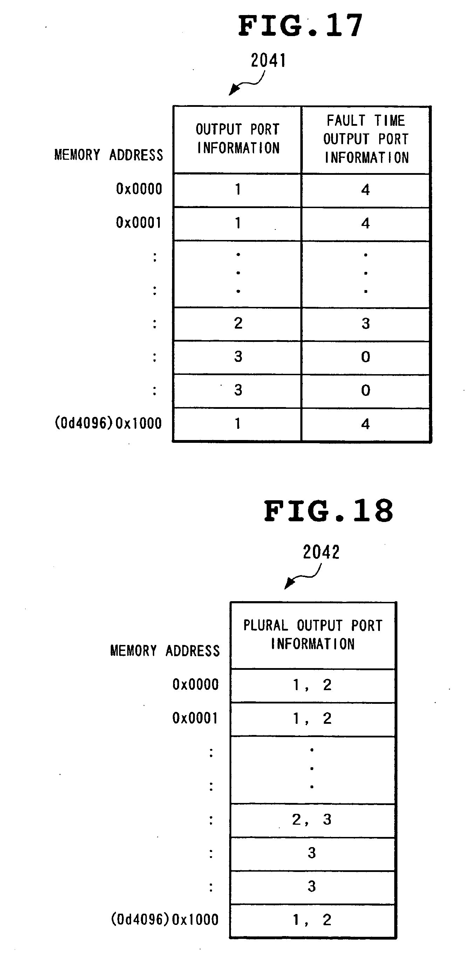

Operation at the time of referring to the tag forwarding table memory 2041 is as follows. Since memory addresses (0×0000 ~ 0×1000) of the tag forwarding table memory 2041 are correlated with the values of the VLAN ID/tag information 6202, that is, since the VLAN ID/tag information 6202 is a memory address to be referred to, no information comparison is required. Therefore, the output port information and the fault-time output port information of the tag forwarding table memory 2041 (see Fig. 17) existing at an address (entry) indicated by a value stored in the VLAN ID/tag information 6202 is output to the output port information 20321. When comparing the table search key information 20131 and the table information 20451, if they fail to agree with each other, entry mishit information is output to the table management unit 2031.

When referring to the MAC forwarding table memory 2043, retrieval header information is compared with MAC destination address and destination's first stage TAG information on the table entry of the MAC forwarding table memory 2043 of Fig. 16, and if they agree, output port information and fault output port information described in the table entry are output to output port information 20321, tag information is output as the tag information 20323, and tag control information is output as the tag control information 20322. If they did not agree, entry mishit information is output to the table management unit 2031.

When referring to the broadcast forwarding table memory 2042, operation is executed as follows. Since memory addresses (0×0000 ~ 0×1000) of the broadcast forwarding table memory 2042 are correlated with the values of the VLAN ID/tag information 6202 or the VLAN ID 6064, that is, since the table search key information 20131 is a memory address to be referred to by the VLAN ID/tag information 6202 or the VLAN ID 6064, it is not necessary to compare the information. It is checked whether port numbers not registered as plural output port information do not agree with input port information, and if they agree, the frame is discarded, and if they do not agree, plural output port information of the broadcast forwarding table memory 2042 of Fig. 18 are output as the output port information 20321. If there is no entry at the reference memory address destination, entry mishit information is output to the table management unit 2031.

Fig. 15 is a block diagram showing in detail a configuration of the forwarding table 204 shown in Fig. 10.

Information for transferring the frame is stored as table information in the forwarding table 204 of Fig. 15.

The table memory read control circuit 2046 reads a table address to be read from the table search unit 203 and outputs the result. The reading process of each table is made as follows.
(1) At the time of reading into the tag forwarding table memory 2041 of Fig. 17, the VLAN ID tag information 6202 is received as a table read address, the same memory address as that information is referred, and output port information and fault-time output port information which are entered there are output to memory information output circuit 2045.
(2) At the time of reading into the MAC forwarding table memory 2043 of Fig. 16, after the table read address is received, its address is determined as a memory address, the aging management table 2044 shown in Fig. 19 is referred, and MAC-Tag entry management information and MAC-Port entry management information are referred. Then, if two entries are not invalid, the same memory address is used to access the MAC forwarding table memory 2043, the table information is read, and the table entry information is output to the memory information output circuit 2045. If both the two entries are invalid, the MAC forwarding table memory 2043 is not referred, and the absence of entry is output as the entry hit information 20312.
(3) At the time of reading into the broadcast forwarding table memory 2042 of Fig. 18, the VLAN ID tag information 6202 or the VLAN ID 6064 is received as an table read address, the same memory address as that information is referred, the output port information and the fault-time output port information which are entered there are output to the memory information output circuit 2045.

The memory information output circuit 2045 outputs as the table information 20451 the table entry information which was read by the table memory read control circuit 2046 to the table search unit 203.

Fig. 16 is a block diagram showing in detail a configuration of the MAC forwarding table memory 2043 shown in Fig. 15.

The MAC forwarding table memory 2043 has the individual entries stored by the table configuration of Fig. 16 and is used to store transfer destination information of IEEE802.3 Ethernet frame and IEEE803.3 VLAN Tagged Ethernet frame. The memory address range is arbitrary and has the same memory address range as the aging management table 2044. According to this block configuration, an example of the memory address range is 0x00000 to Ox7FFFF and can store a maximum of 8388706. For the MAC destination address, the frame destination MAC address 601 is stored, and for the destination first stage TAG information, information corresponding to the VLAN tag 606 of the frame is stored. As entry types, two entry types, MAC→Tag indicating the entry having the occurrence of the tag 620 imparting process and MAC→Port not involving the occurrence of a tag processing are managed. For output port information, a port number of a transfer destination is stored, for a fault-time output port number, an output port number at the time of occurrence of a fault is stored, for TAG control information, the presence or not of tag insertion operation to the frame is stored, and for TAG information, tag information to be inserted at the time of tag insertion is stored.

Fig. 17 is a block diagram showing in detail a configuration of the tag forwarding table memory 2041 shown in Fig. 15. The tag forwarding table memory can be formed by a method using the spanning tree protocol recited in Literature 3.

The tag forwarding table memory 2041 stores the individual entries by the table structure of Fig. 17 and is used to store transfer destination information of forwarding-tagged frames. The memory address range is 0×0000 to 0×1000, and a maximum of 4096 entries are stored. The memory address is managed so as to correlate with a value of the VLAN 6202. For output port information, frame's transfer destination port numbers are stored, and for fault-time output port information, port information to be transferred when the output port has a failure is stored.

Fig. 18 is a block diagram showing in detail a configuration of the broadcast table memory 2042 shown in Fig. 15. The broadcast forwarding table can be formed by using a conventional existing spanning tree protocol.

The broadcast forwarding table memory 2042 has the table configuration of Fig. 18 to store individual entries and is used to store broadcast transfer destination information of the broadcast-tagged Ethernet frame, IEEE802.3 Ethernet frame and IEEE803.3 VLAN Tagged Ethernet frame. The memory address range is 0x0000 to 0x1000, and a maximum of 4096 entries are stored. In addition, the memory address is managed so as to correlate with a value of the VLAN ID/tag information 6202 or the VLAN ID 6064. For plural output port information, plural port numbers which may perform broadcast transfer are stored.

Fig. 19 is a block diagram showing in detail a configuration of the aging management table 2044 shown in Fig. 15.

The aging management table 2044 has the configuration of Fig. 19 to store the individual entries and is used to manage the entry access states of the MAC forwarding table memory 2043 and the presence or not of the entries. The memory address range is arbitrary and has the same memory address range as MAC forwarding table memory 2043. In the MAC-TAG entry management information, a state of access of the entry that an entry type of MAC forwarding table memory is MAC→Tag and information on the presence or not of entry are stored, and no hit indicates an unused entry, the hit indicates an entry used for transfer, the entry invalid indicates that the entry is invalid, and the entry protected indicates that the entry cannot be removed. Similarly, in the MAC-Port entry management information, a state of access of the entry that an entry type of MAC forwarding table memory is MAC→Port and information on the presence or not of entry are stored.

Aging control unit 2047 performs an aging operation for the entry of the aging management table 2044. The aging operates as follows. Information on application of aging to which an entry type of MAC→Port or MAC - Tag and also an aging request are received as MAC/TAG aging control 3022 from the CPU 30. Upon receiving the request, the aging control unit 2047 accesses the aging management table 2044, reads all information on subject entry types, changes the contents of entry to the no hit when information is stored as a hit, changes the contents of entry to the entry invalid when information is stored as no hit and notifies its memory address to the CPU 30.

Table memory write control circuit 2048 operates to write the entry into each table. When a memory address of any of the MAC forwarding table memory 2043, tag forwarding table 2041 and the broadcast table memory 2042 is input from table write address 3011, and the table write information 3012 is written as table entry into the memory address.

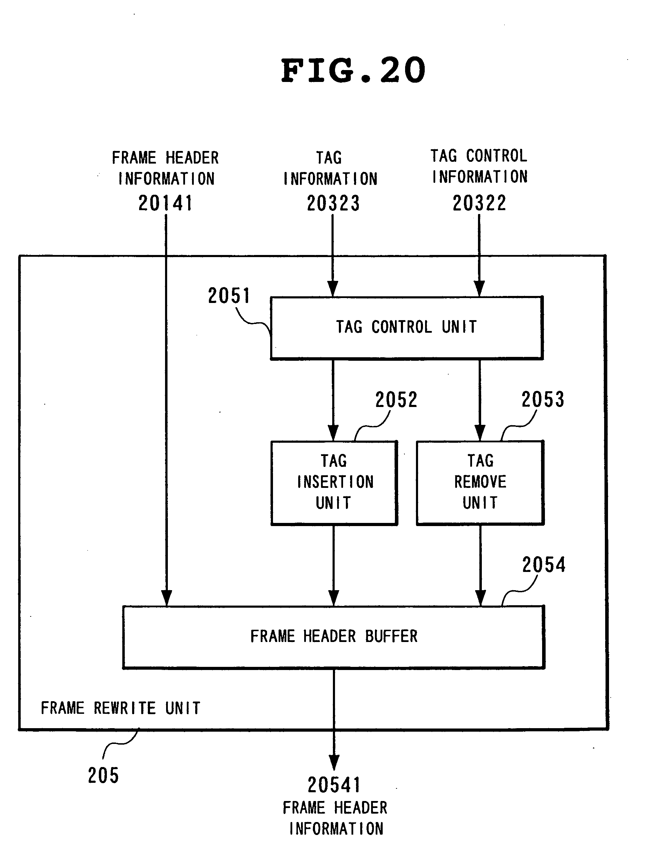

Fig. 20 is a block diagram showing in detail a configuration of the frame rewrite unit 205 shown in Fig. 10.

The frame rewrite unit 205 of Fig. 20 operates to rewrite the header contents of the frame.

Frame header buffer 2054 is used as a buffer for storage and rewrite of the header information of the frame. Information of the frame header information 20141 is input to the frame header buffer 2054, tag insertion to or remove from the frame header is made by tag insertion unit 2052 or tag remove unit 2053, then the rewritten frame header is output as frame header information 20541. If there is no operation by the tag insertion unit 2052 or the tag remove unit 2053, frame header information 141 is output as it is as the frame header information 20541.

Tag control unit 2051 controls the insertion and remove of the tag with respect to the header of the frame. For a frame which needs header rewrite processing, tag operation information is received as the tag control information 20322, and tag information necessary for processing of the tag is received as the tag information 20323 from the table search unit 203. When the tag control information 20322 is tag insertion instructions, the tag information 20323 is output to the tag insertion unit 2052 to insert the tag information 20323 to the frame header. When it is tag remove instructions, the tag remove instructions are output to the tag remove unit 2053 to remove the tag information of the frame header.

The tag insertion unit 2052 inserts the tag to the header of the frame. After receiving the tag information 20323 from the tag control unit 2051, the tag insertion unit 2052 operates to insert the tag to the frame header information 20141 which is stored in the frame header buffer 2054.

The tag remove unit 2053 removes the tag from the header of the frame. After receiving tag remove instructions from the tag control unit 2051, the tag remove unit 2053 operates to remove the tag from the frame header information 20141 stored in the frame header buffer 2054.

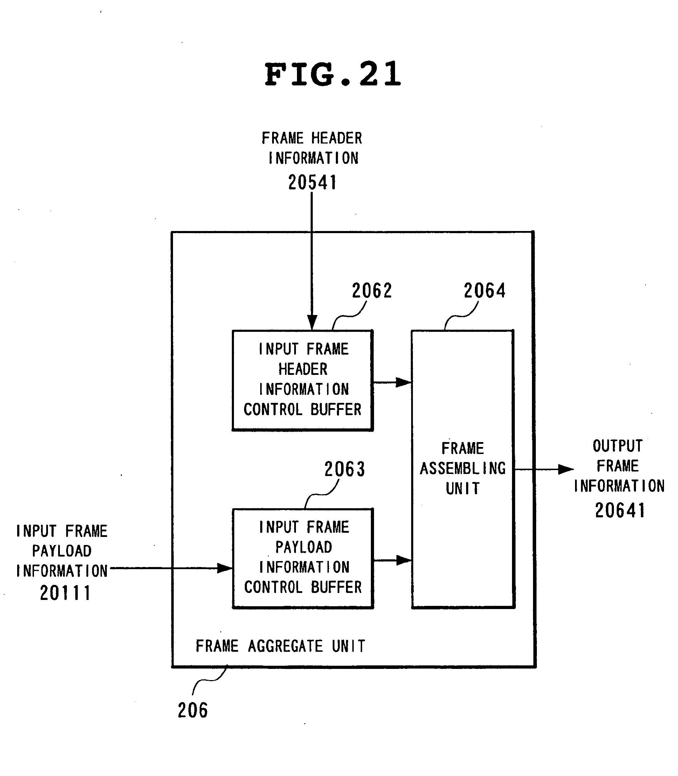

Fig. 21 is a block diagram showing in detail a configuration of the frame aggregate unit 206 shown in Fig. 10.

The frame aggregate unit 206 of Fig. 21 combines the rewritten frame header and frame payload information to reconfigure an outputable frame.

The rewritten frame header information is stored in input frame header information control buffer 2062. When the frame header information 20541 is received, a frame header information acceptable state is notified to frame assembly unit 2064.

Frame payload information is stored in input frame payload information control buffer 2063. After the input frame payload information 20111 is received, a frame payload information acceptable state is notified to the frame assembly unit 2064.

The frame assembly unit 2064 assembles the frame header information and the payload information. After receiving the information acceptance notice from the input frame header information control buffer 2062 and the input frame payload information control buffer 2063, the header information and the payload information are read from the buffer, and the frame header and the payload information are combined and output as output frame information 20641.

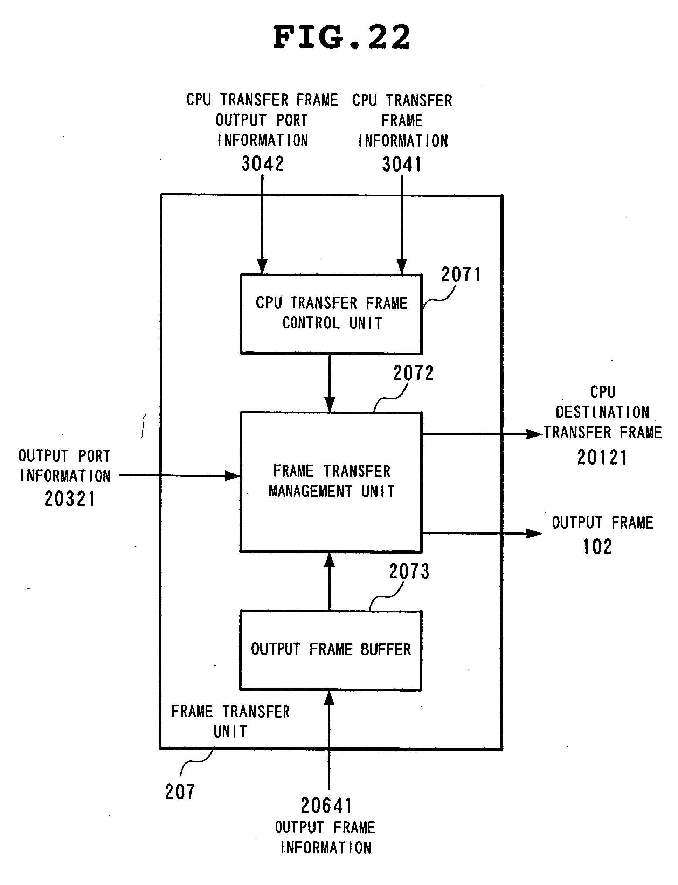

Fig. 22 is a block diagram showing in detail a configuration of the frame transfer unit 207 shown in Fig. 10.

The frame transfer unit 207 of Fig. 22 transfers the frame according to the output port information.

Frame transfer management unit 2072 transfers the frame to the designated output port. When the output port information 20321 is received from the table search unit 203, the frame stored in output frame buffer 2073 is output as output frame 102 to the port of its output port number. At this time, if the output port number indicates addressing to the CPU, the frame is output as the CPU destination transfer 20121.

And, after receiving CPU transfer frame information 3041 and CPU transfer frame output port information 3042, which are used if there is a frame transmission request from the CPU, from CPU transfer frame control unit 2071, the CPU transfer frame information 3041 is output as the output frame 102 to the designated port number.

The output frame information 20641 assembled by the frame aggregate unit 206 is stored in the output frame buffer 2073, and the frame in the buffer is output as the output frame 102 by the frame transfer management unit 2072.

The CPU transfer frame control unit 2071 receives from the CPU 30 frame information desired to be transferred as the CPU transfer frame information 3041 and output port information to be transferred as the CPU transfer frame output port information 3042 and gives frame transfer instructions to the frame transfer management unit 2072.

Fig. 23 is a block diagram showing a configuration of processing to be realized by software in the CPU 30 shown in Fig. 10.

The network control program 304 performs the following three operations.
(1) It receives a CPU destination transfer frame which is sent by the control frame receive unit 2012 and transfers the frame to the equipment control program 305, the learning management program 302 or the spanning tree control program 303 according to a designation MAC address of the received frame.
(2) Simultaneously with (1), the CPU transfer frame output port information 3042 and the CPU transfer frame information 3041 are used if necessary to retransfer the frame received in (1).
(3) The frame whose transmission was requested by the equipment control program 305, the learning management program 302 or the spanning tree control program 303 is written to the CPU transfer frame output port information 3042 and the CPU transfer frame information 3041.

When the frame received as the CPU destination transfer frame 20121 by the network control program 304 has a destination MAC address of 00-00-4C-00-00-00, the frame is transferred to the learning management program 302 and, at the same time, the CPU transfer frame output port information 3042 and the CPU transfer frame information 3041 are used to transfer the frame for broadcast.

When the frame received as the CPU destination transfer frame 20121 by the network control program 304 has a destination MAC address of 01-80-C2-00-00-00, the frame is transferred to the spanning tree control program 303.

When the frame received as the CPU destination transfer frame 20121 by the network control program 304 has a destination MAC address other than the above addresses, the frame is transferred to the equipment control program 305.

The spanning tree control program 303 performs the following three operations.
(1) According to a high-speed spanning tree protocol (IEEE802.1W) or a spanning tree protocol (IEEE802.1D), a BPDU frame is exchanged through the adjacent node and the network control program 304 to construct a spanning tree. Setting required for the tree construction is made by the equipment control program 305.
(2) The tag forwarding table memory 2041, the broadcast forwarding table 2042 and the memory duplicate information 3013 which is a duplicate on the side of software of the above two memories are set from the port information (alternate port, root port, designated port, etc.) of the spanning tree constructed in (1) through the forwarding table control program 301.
(3) If a route port change is detected by the BPDU exchange, a route port change (event 14) is notified to the learning management program 302.

The equipment control program 305 accepts the setting through the console I/O 51 or a setting interface using TELNET, SSH and HTTP provided via the network control program 304 and notifies the frame type judgment unit 2011 of the setting information through the learning management program 302, the spanning tree control program 303 and port configuration information 3051.

The forwarding table control program 301 performs the following operation.
(1) According to the instructions from the spanning tree control program 303, the table write information 3012 and the table write address 3011 are used to make entry write or entry substitution of the tag forwarding table memory 2041 and the broadcast forwarding table memory 2042.
(2) Simultaneously with (1), the memory duplicate information 3013 is used to perform entry write or entry substitution of the software table (the tag forwarding table memory 70131, the broadcast forwarding table memory 70132, the MAC forwarding table memory 70133 and the TAG address management table 70134 as duplicate information on the main memory 40).
(3) According to the instructions from the learning management program 302, the table write information 3012 and the table write address 3011 are used to perform entry write or entry substitution of the MAC forwarding table memory 2043.
(4) Simultaneously with (3), the memory duplicate information 3013 is used to perform entry write or entry substitution of the software table.
(5) According to the instructions from the learning management program 302, the memory duplicate information 3013 is used to perform an entry search in the software table.
(6) According to the instructions from the network control program 304, the memory duplicate information 3013 is used to perform an entry search in the software table.

The learning management program 302 receives the learning frame transmission request 20231, an aging trigger from timer 306, a learning frame from the network control program 304, and a spanning tree change notice from the spanning tree control program 303, activates the events shown below, and performs registration, substitution and remove of the MAC forwarding table memory 2043 and its duplicate information.
(1) When the learning frame transmission request 20231 reaches the learning management program 302, event 01 is activated.
(2) When the learning frame reaches the learning management program 302 from the network control program 304, event 03 is activated.
(3) When the port learning aging trigger reaches the learning management program 302 from the timer 306, event 12 is activated.
(4) When the tag learning aging trigger reaches the learning management program 302 from the timer 306, event 13 is activated.
(5) When a route node change notice reaches the learning management program 302 from the spanning tree control program 303, event 14 is activated.
(6) When an initialization request reaches from the equipment control program 305, event 00 is activated.

The timer 306 generates the port learning aging trigger or the tag learning aging trigger every time determined by the equipment control program 305 to notify the learning management program 302.

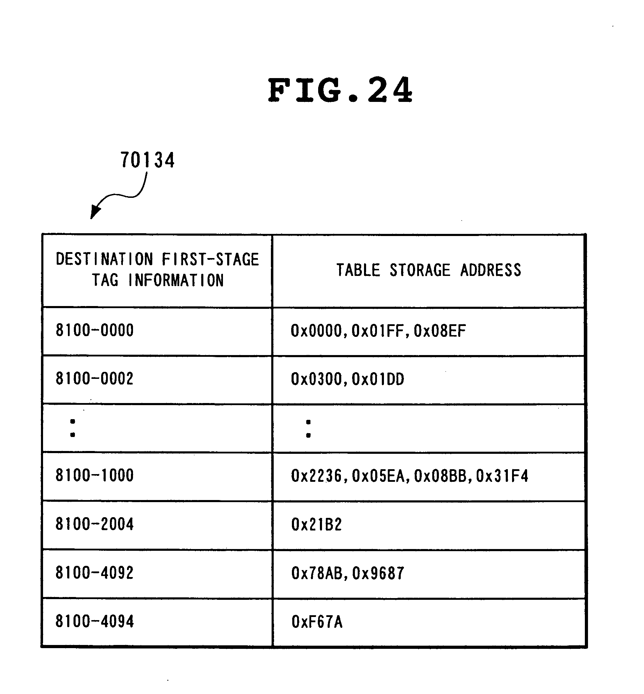

Fig. 24 is a table showing a configuration of the TAG address management table 70134 contained in the memory duplicate information 3013 shown in Fig. 23.

The TAG address management table 70134 is comprised of two cells for destination first-stage TAG information and table storage address.

The destination first-stage TAG information includes TAG which becomes a search key of the TAG address management table 70134. All VLAN IDs contained in the TAG are determined to be even numbers. In case of registering an odd-number ID, one is deducted from the ID value to be registered for registration and search in an even-numbered address.

The reason for this arrangement is as follows. There is a case where a plurality of spanning trees exist in one network and one node serves as a route node of the plurality of spanning trees. In such a case, each node has a plurality of node IDs corresponding to the respective spanning trees. At the time of learning, however, it is desirable that each node should have one node ID. This is because when one node has a plurality of IDs, learning might be conducted seizing these plurality of IDs as separate nodes.

Aiming at preventing such inconvenience, the foregoing is premised on a case of two spanning tress where an even-numbered address is used as a representative address of each node.

Therefore, other than the above-described method using an even-numbered address, any method can be employed that can determine one representative address.

In the table storage address, there are indicated the addresses in the MAC forwarding table memory 70133 (duplicate information on a main memory of the MAC forwarding table memory 2043) of the entries including TAG described in the destination first-stage TAG information. The number of addresses included in its cell is not particularly limited.

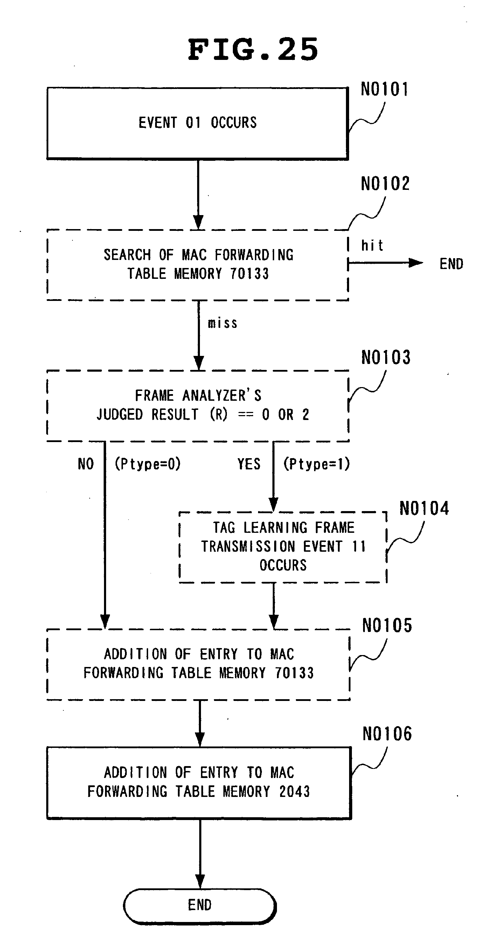

Fig. 25 is a flow chart illustrating in detail an operation of the event 01 by the learning management program 302 shown in Fig. 23.

The event 01 is activated when the learning frame transmission request 20231 reaches the learning management program 302. This event is software processing for adding the entry to the MAC forwarding table memory 70133 which is duplicate information on the MAC forwarding table memory 2043 and the main memory 40 so that the destination port can be searched in view of the MAC DA and the tag.

In step N0101, processing of the event 01 is started. Notified from the learning management program is such table search key information as a result of judgment (existence/non-existence and a type of a tag, etc.) made by the frame analyzer 201, the port to which the frame is input, the source MAC address and the tag information. The process advances to step N0102.

In step N0102, the MAC forwarding table memory 70133 is searched through the forwarding table control program 301 to check whether information to be registered has been given in the table. If the search results in hit, the processing is terminated, but if mishit, the process advances to step N0103.

In step N0103, the judged result by the frame analyzer 201 notified in the step N0101 is examined, and if the frame to be learnt has been input from the uplink side (Ptype = 0), the process moves to step N0105. If it is input from the downlink (Ptype = 1), the process moves to step N0104.

In the step N0104, event 11 is activated, the learning frame is broadcasted to another node. When the event is activated, the source MAC address and tag information notified in the step N0101 are notified. Then, the process moves to step N0105.

In the step N0105, an entry is added as the memory duplicate information 3013 to the MAC forwarding table memory 70133 on the main memory 40 through the forwarding table control program 301. At this time, the source MAC address received in the step N0101 is set for the MAC destination address, the tag information received in the step N0101 is set for the destination first-stage TAG information, and the input port notified in the step N0101 is set for the output port information. Then, the process moves to step N0106.

In the step N0106, an entry is added to the MAC forwarding table memory 2043 through the forwarding table control program 301. At this time, the source MAC address received in the step N0101 is set for MAC destination address, the tag information received in the step N0101 is set for destination first-stage TAG information, and the input port notified in the step N0101 is set for output port information. Thus, the process of the event 01 is terminated.

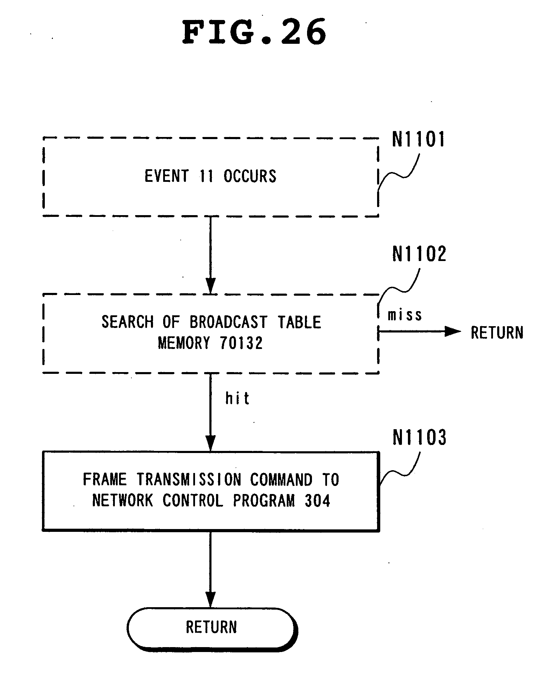

Fig. 26 is a flow chart illustrating in detail an operation of event 11 in the learning management program 302 shown in Fig. 23.

The event 11 is activated to send the learning frame in the event 01 or event 05. This event is learning frame transfer request processing as a part of software processing for adding an entry to the MAC forwarding table memory 2043 and the MAC forwarding table memory 70133 which is duplicate information on the main memory 40 so that a tag to be added can be retrieved in view of the MAC DA and tag.

In step N1101, processing of event 11 is started. At the start, source MAC address and tag are notified. The process moves to step N1102.

In the step N1102, the broadcast forwarding table memory 2042 on the main memory 40 is searched as the memory duplicate information 3013 through the forwarding table control program 301 to search an output destination port of the learning frame. At this time, since memory addresses (0×0000 ~ 0×1000) (entries) of the broadcast forwarding table memory 70132 are correlated with the values stored in the VLAN ID/tag information 6202, that is, the VLAN ID/tag information 6202 is a memory address to be referred to, no information comparison is required. Therefore, plural output port information of the broadcast forwarding table memory 2042 existing at an address (entry) indicated by a value stored in the VLAN ID/tag information 6202 is output as an output destination port.

If the search results in mishit, the processing is terminated, and the process returns to the event procedure of event 11 activation source. If there is a hit, the process moves to step N1103.

In the step N1103, the network control program 304, the CPU transfer frame output port information 3042 and the CPU transfer frame information 3041 are used to request the CPU transfer frame control unit 2071 for transmission of a learning frame having a source tag indicating an own node address and a VLAN tag given in the step N1101 added to the port searched in the step N1102. Thus, the processing of the event 11 is terminated, and the process returns to the event procedure of event 11.

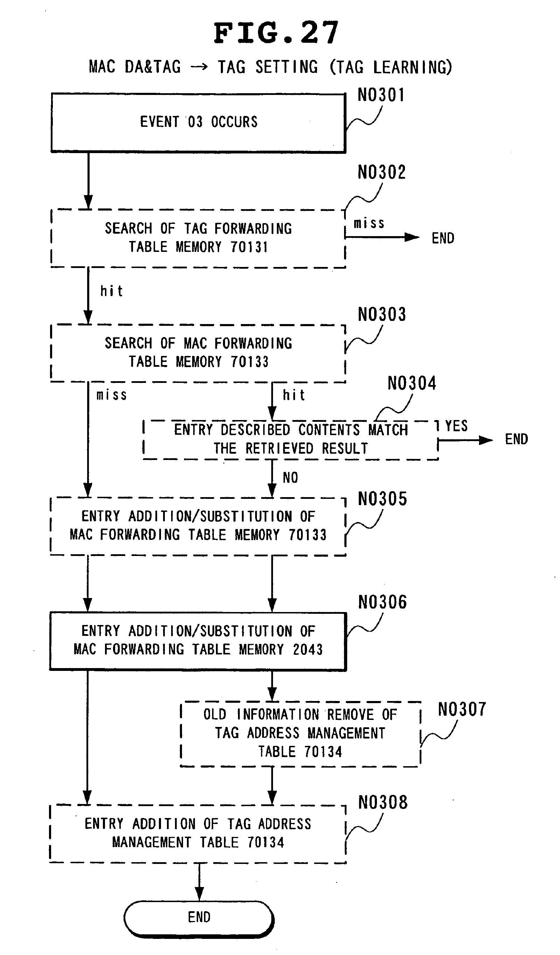

Fig. 27 is a flow chart illustrating in detail an operation of event 03 according to the learning management program 302 shown in Fig. 23.

The event 03 is activated when the learning frame reaches the learning management program 302 from the network control program 304. This event is software processing for adding an entry to the MAC forwarding table memory 2043 and the MAC forwarding table memory 70133 which is duplicate information on the main memory 40 according to the MAC DA and the tag so that the tag to be added can be searched.

In step N0301, processing of the event 03 is started. On start-up, header information such as a judged result (existence/non-existence and a type of a tag, etc.) obtained by the frame analyzer 201, an input port, a MAC address, the tag 1 (information such as a node address of a node to which a destination client is connected that is stored in the tag 620) and the tag 2 (information stored in the VLAN tag 606) are notified as the CPU destination transfer frame 20121 by the frame analyzer. The process moves to step N0302 (in a case where two tags are added as of the frame 63).

In the step N0302, the tag forwarding table memory 70131, which is on the main memory 40 as the memory duplicate information 3013, is searched through the forwarding table control program 301 to search for an output destination port corresponding to the tag 1. If the search is a mishit, the processing is terminated. If it is a hit, the process moves to step N0303.

In the step N0303, the MAC forwarding table memory 2043, which is on the main memory 40 as the memory duplicate information 3013, is searched through the forwarding table control program 301 so as to search for the MAC address notified in the step N0301, an additional tag to and tag 2, an output port and a spare output port. If the search is a mishit, the process moves to step N0305. If it is a hit, the process moves to step N0304.

In the step N0304, it is checked whether the output port and spare output port searched in the step N0302 and the output port and spare output port searched in the step N0303 are in perfect match and whether the tag 1 notified in the step N0301 and the additional tag searched in the step N0303 are in match. If there is a perfect match, the processing is terminated, but if not, the process moves to step N0305.

In the step N0305, an entry is added to the MAC forwarding table memory 70133, which is on the main memory 40 as the memory duplicate information 3013, through the forwarding table control program 301. At this time, the MAC address received in the step N0301 is added to the MAC destination address, the tag 2 received in the step N0301 is added to the destination's first stage TAG information, the port retrieved in the step N0303 is added to the output destination port and spare output port, and the tag 1 (information such as a node address of a node to which the destination client is connected) notified in the step N0301 is added to the tag to be added (TAG information). The process moves to step N0306.

In the step N0306, an entry is added to the MAC forwarding table memory 2043 through the forwarding table control program 301. At this time, the MAC address received in the step N0301 is added to the MAC destination address, the tag 2 received in the step N0301 is added to the destination's first stage TAG information, the port searched in the step N0303 is added to the output destination port and spare output port, and the tag 1 (information such as a node address of a node to which the destination client is connected) notified in the step N0301 is added to the tag (the TAG information in Fig. 16) to be added. The process moves to step N0307 or step N0308.

In the step N0304, when the contents recited in the entry fail to agree with the search result, the process moves to step N0307 after the processing in the step 0306. In the step N0307, the entry is removed from the TAG address management table 70134, which is on the main memory 40 as the memory duplicate information 3013, through the forwarding table control program 301. At this time, the tag 1 received in the step N0301 is designated for an index tag (the destination's fist stage TAG information in Fig. 24), and the entry address (the memory address in Fig. 16) obtained in the step N0303 is designated for a memory address. The process moves to step N0308. In the step N0308, an entry is added to the TAG address management table 70134, which is on the main memory 40 as the memory duplicate information 3013, through the forwarding table control program 301. At this time, the additional tag searched in the step N0303 is designated for the index tag, and the entry address (the memory address in Fig. 16) obtained in the step N0305 is designated for a memory address. But, the additional tag value shall always be an even number. Thus, the process of the event 03 is terminated.

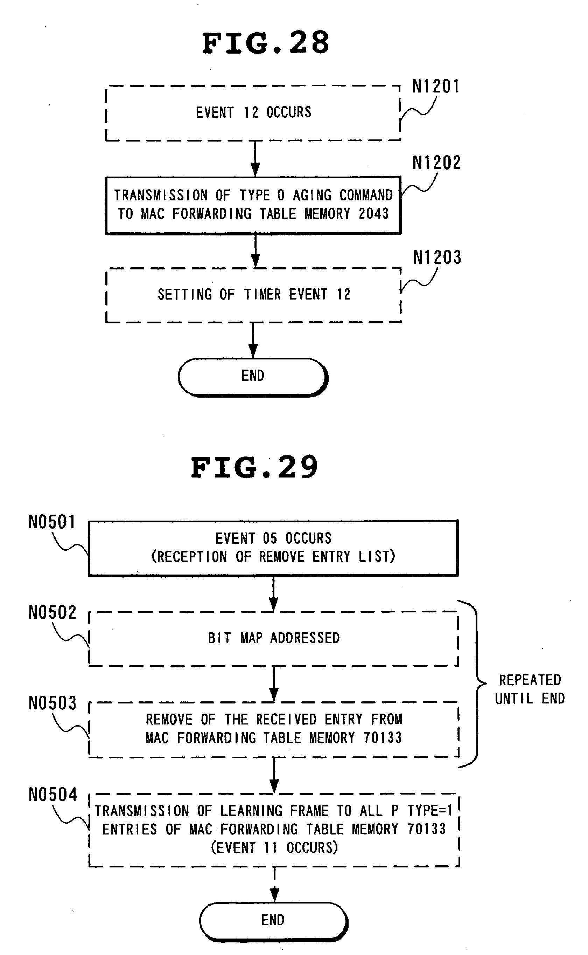

Fig. 28 is a flow chart illustrating in detail an operation of the event 12 by the learning management program 302 shown in Fig. 23.

The event 12 is activated when a timer event is generated by the timer 306. This event is part of software processing to perform aging processing of an entry for search of a destination port in view of the MACDA and tag among the entries described in the MAC forwarding table memory 2043 and the MAC forwarding table memory 70133 which is duplicate information on the main memory 40.

In step N1201, processing of event 12 is started. On start-up, offset address is notified. The process is moved to step N1202.

In the step N1202, aging request of the MAC forwarding table memory 2043 and the MAC SA table cache 2025 on the side of hardware is made according to the learning aging request 3021 and the MAC/TAG aging request 3022. The process moves to step N1203.

In the step N1203, the generation of event 12 is reserved into the timer 306 after a lapse of time designated through the equipment control program 305. At this time, a memory offset address is also registered. Thus, processing of the event 12 is terminated.

Fig. 29 is a flow chart illustrating in detail an operation of event 05 in the learning management program 302 shown in Fig. 23.

The event 05 is activated when an aging completion notice reaches from the MAC/TAG aging control 3022 after the aging request is made through the MAC/TAG aging control 3022 in the event 12. This event is part of software processing for aging processing of an entry to search a destination port from the MAC DA and tag among the entries described in the MAC forwarding table memory 2043 and the MAC forwarding table memory 70133 which is duplicate information on the main memory 40.

In the step N0501, processing of the event 05 is started. On start-up, a result code (information about whether MAC->Port or MAC-Tag is to be aged), offset address and bit map (information about which entry is deleted) are notified. The process moves to step N0502.

In the step N0502, entry address (memory address of the deleted MAC forwarding table memory 2043) is generated in view of the offset and bit map notified in the step N0501. The process moves to step N0503.

In the step N0503, the entry of the entry address generated in the step N0502 is removed from the MAC forwarding table memory 70133, which is on the main memory 40 as the memory duplicate information 3013, through the forwarding table control program 301.

Processing in the step N0502 and step N0503 is performed on all addresses (an address of a deleted entry which is indicated by an offset and a bit map) notified as the subjects to be removed in the step N0501. After the processing on all addresses is completed, the process moves to step N0504.

In the step N0504, event 11 is activated to send the learning frame to all entries, whose entry type is set to MAC->Port within the MAC forwarding table memory 70133. MAC DA and VLAN TAG are given as an argument to the event 11. After the processing on all entries is completed, the event 05 is also terminated.

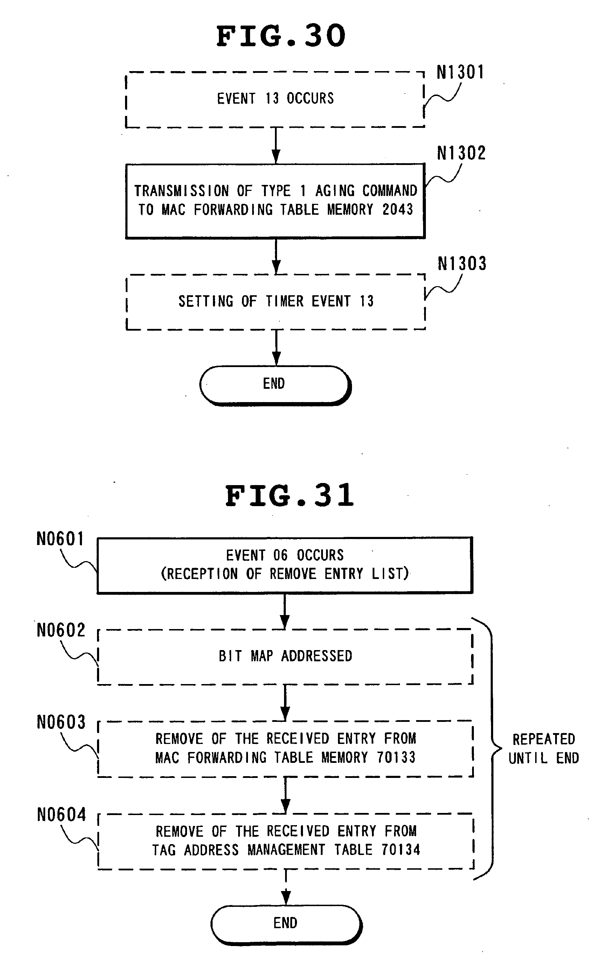

Fig. 30 is a flow chart illustrating in detail an operation of the event 13 according to the learning management program 302 shown in Fig. 23.

The event 13 is activated when a timer event is caused by the timer 306. This event is part of the software processing for aging processing of an entry to search a tag to be added in view of the MAC DA and tag among the entries described in the MAC forwarding table memory 2043 and the MAC forwarding table memory 70133 which is duplicate information on the main memory 40.

In step N1301, processing of the event 13 is started. On start-up, an offset address (start address whose deletion is to be started) is notified. The process moves to step N1302.

In the step N1302, an aging request is made on the MAC forwarding table memory 2043 on the side of hardware by the MAC/TAG aging request 3022. The process moves to step N1303.

In the step N1303, the occurrence of event 13 is reserved to the timer 306 after a lapse of time designated through the equipment control program 305. At this time, a memory offset address is also registered. Then, the processing of the event 13 is terminated.

Fig. 31 is a flow chart illustrating in detail an operation of event 06 according to the learning management program 302 shown in Fig. 23.

After an aging request is made in the event 13 through the MAC/TAG aging control 3022, event 06 is activated when an aging completion notice arrives from the MAC/TAG aging control 3022. This event is part of software processing for aging processing of an entry to retrieve a tag to be added according to the MACDA and tag among the entries described in the MAC forwarding table memory 2043 and the MAC forwarding table memory 70133 which is duplicate information on the main memory 40.

In step N0601, processing of event 06 is started. On start-up, a result code, offset address and bit map are notified. The process moves to step N0602.

In the step N0602, an entry address is generated according to the offset and bit map notified in the step N0601. The process moves to step N0603.

In the step N0603, the entry of the entry address generated in the step N0602 is removed from the MAC forwarding table memory 70133, which is on the main memory 40 as the memory duplicate information 3013, through the forwarding table control program 301. The process moves to step N0604.

In the step N0604, the entry of the entry address generated in the step N0603 is removed from the TAG address management table 70134, which is on the main memory 40 as the memory duplicate information 3013, through the forwarding table control program 301.

The processing in the step N0602, step N0603 and step N0604 is performed on all addresses (an address of a deleted entry which is indicated by an offset and a bit map) notified as the subjects to be removed in the step N0601. After all addresses are completed, the event 06 is terminated.

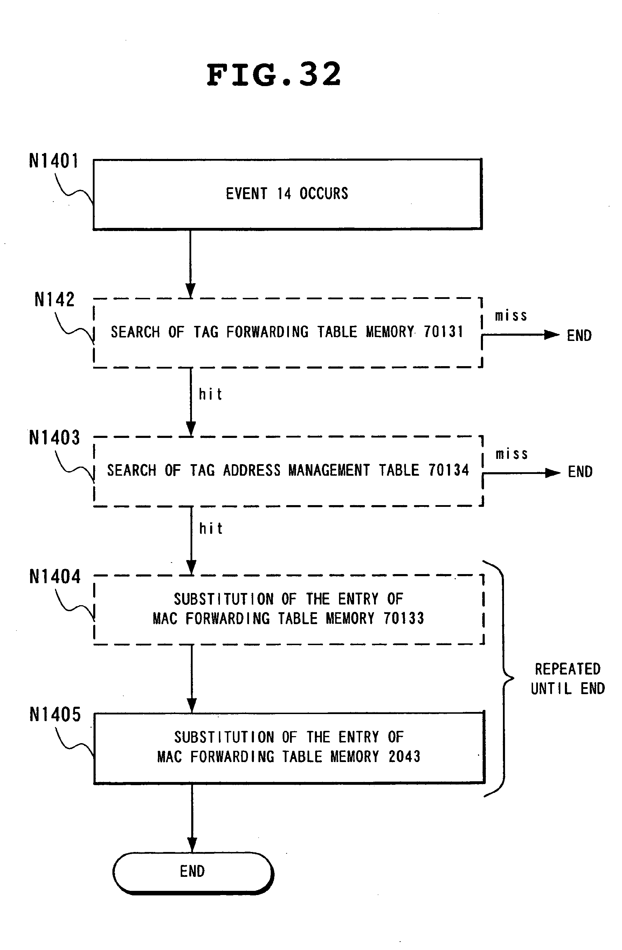

Fig. 32 is a flow chart illustrating in detail an operation of event 14 according to the learning management program 302 shown in Fig. 23.

The event 14 is activated when a change in spanning tree topology is detected by the spanning tree control program 303, and a route port, namely a frame output port, is changed. This event is software processing for rewriting an output destination port and a spare output destination port described on the MAC forwarding table memory 2043 which has to be changed because of a change in tree topology and the MAC forwarding table memory 70133 which is duplicate information on the main memory 40.

In step N1401, processing of the event 14 is started. On start-up, a tag subject to the topology change is notified. The process moves to step N1402.

In step N1402, the tag forwarding table memory 70131, which is on the main memory 40 as the memory duplicate information 3013, is searched through the forwarding table control program 301 to search an output destination port corresponding to a tag to be changed notified in the step N1401. If the search is a mishit, the processing is terminated. If it is a hit, the process moves to step N1403.

In the step N1403, the TAG address management table 70134 is searched, and an entry address of the entry which has a tag to be changed notified in the step N1401 determined as an additional tag on the MAC forwarding table memory 70133 is searched. If the search mishits, the processing is terminated, and if the search is a hit, the process moves to step N1404.

In the step N1404, the entry of the MAC forwarding table memory 70133, which is on the main memory 40 as the memory duplicate information 3013, is substituted through the forwarding table control program 301. At this time, the port searched in the step N1402 is determined for the output destination port and spare output port, and other items are not substituted. The process moves to step N1405.

In the step N1405, the entry of the MAC forwarding table memory 2043, which is on the side of hardware, is substituted through the forwarding table control program 301. At this time, the port searched in the step N1402 is determined for the output destination port and spare output port, and other items are not substituted.

The operations of the step N1404 and step N1405 are performed on all address entries searched in the step N1403. After the substitution of all entries is completed, the event 14 is terminated.

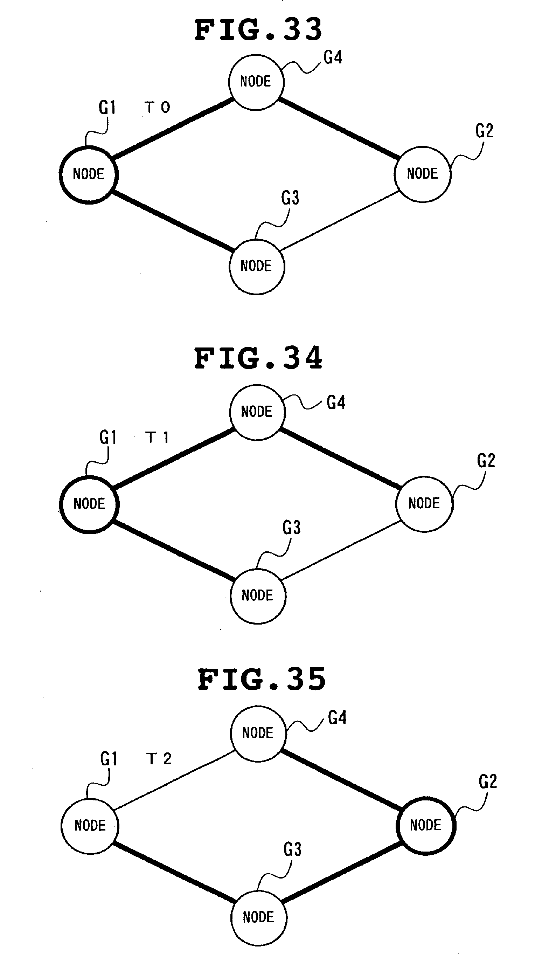

Then, with reference to Fig. 33 to Fig. 37, a spanning tree topology configuration example having a logical network created by shutting off the port not to produce a loop in the physical network configuration example shown in Fig. 1 by using a high-speed spanning tree protocol specified in IEEE802.1W or a spanning tree protocol specified in IEEE802.1D will be described.

In each of Fig. 33 to Fig. 37, a thin line is used to indicate the link when either of two ports having a prescribed link is connected is prohibited from sending or receiving the frame, and a thick line is used to indicate the link only when both of two ports having a prescribed link connected can send and receive the frame.

In the description below, the frame may actually flow the link of a thin line for simplification of the description, but the description in this specification will be made on the assumption that no frame flows the link of a thin line. It is to be understood that such a way of description does not affect on the essential matter of the operation of the node according to the invention.

Fig. 33 is a topology diagram showing a configuration example of a tree T0 which is a logical network created when a high-speed spanning tree protocol or a spanning tree protocol is used on the physical network shown in Fig. 1.

In this configuration example, the tree T0 has node G1 as a root node and a port between node G3 and node G2 shut off, so to have the topology as shown in Fig. 33. This tree is created by exchanging a BPDU frame with no tag added according to the high-speed spanning tree protocol. The root node is determined to be any one of the node G1 to the node G4 according to the high-speed spanning tree protocol. This logical network is used to transfer the frame not having a tag added.

Fig. 34 is a topology diagram showing a configuration example of tree T1 which is a logical network created when a high-speed spanning tree protocol or a spanning tree protocol is used on the physical network shown in Fig. 1.

In this configuration example, the tree T1 has the node G1 as the root node, and the port between the node G3 and the node G2 is shut off to form the topology shown in Fig. 34. This tree is created by exchanging a BPDU frame with tag g1 added according to the high-speed spanning tree protocol. In the tree T1, the root node is determined to be the node G1 by previously setting so that the node G1 is always a root node. This logical network is used to transfer the frame having the added tag g1 indicating that the node G1 is a destination. In other words, the frame with the expansion tag g1 added is transferred through the tree T1 as a path.

Fig. 35 is a topology diagram showing a configuration example of tree T2 which is a logical network created when a high-speed spanning tree protocol or a spanning tree protocol is used on the logical network shown in Fig. 1.

In this configuration example, the tree T2 has the node G2 determined as the root node, and the port between the node G1 and the node G4 is shut off to form the topology shown in Fig. 35. This tree is created by exchanging the BPDU frame having the added tag g2 according to the high-speed spanning tree protocol. In the tree T2, the root node is determined to be the node G2 by previously setting so that the node G2 is always the root node. This logical network is used to transfer the frame having the added tag g2 which represents that the node G2 is a destination. In other words, the frame with the expansion tag g2 added is transferred through the tree T2 as a path.

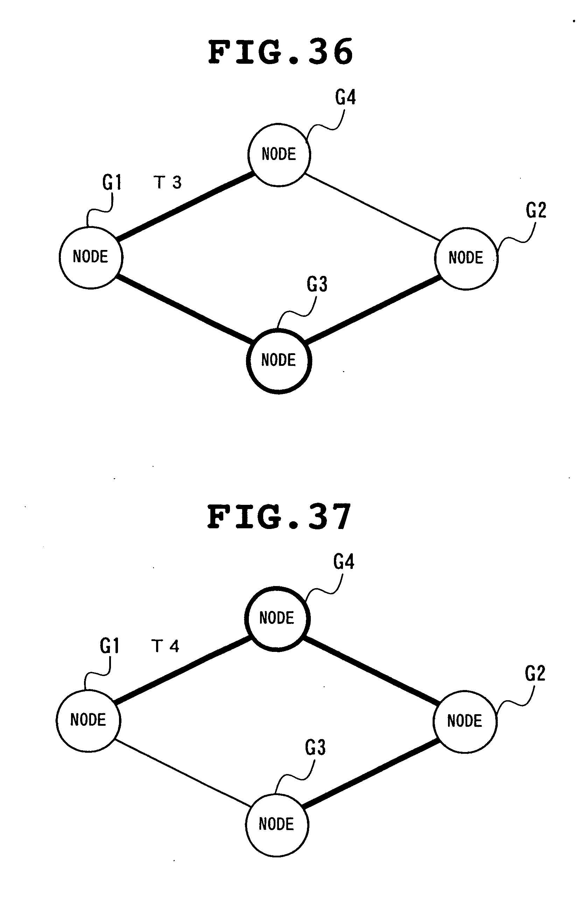

Fig. 36 is a topology diagram showing a configuration example of the tree T3 which is a logical network created when a high-speed spanning tree protocol or a spanning tree protocol is used on the logical network shown in Fig. 1.

In this configuration example, the tree T3 has the node G3 determined as the root node, and the port between the node G2 and the node G4 shut off to form the topology shown in Fig. 36. This tree is created by exchanging the BPDU frame having the added tag g3 according to the high-speed spanning tree protocol. In the tree T3, the root node is determined to be the node G3 by previously setting so that the node G3 is always the root node. This logical network is used to transfer the frame having the added tag g3 which represents that the node G3 is a destination. In other words, the frame with the expansion tag g3 added is transferred through the tree T3 as a path.

Fig. 37 is a topology diagram showing a configuration example of the tree T4 which is a logical network created when a high-speed spanning tree protocol or a spanning tree protocol is used on the logical network shown in Fig. 1.

In this configuration example, the tree T4 has the node G4 determined as the root node, and the port between the node G1 and the node G3 shut off to form the topology shown in Fig. 37. This tree is created by exchanging the BPDU frame having the added tag g4 according to the high-speed spanning tree protocol. In the tree T4, the root node is determined to be the node G4 by previously setting so that the node G4 is always the root node. This logical network is used to transfer the frame having the added tag g4 which represents that the node G4 is a destination. In other words, the frame with the expansion tag g4 added is transferred through the tree T4 as a path.

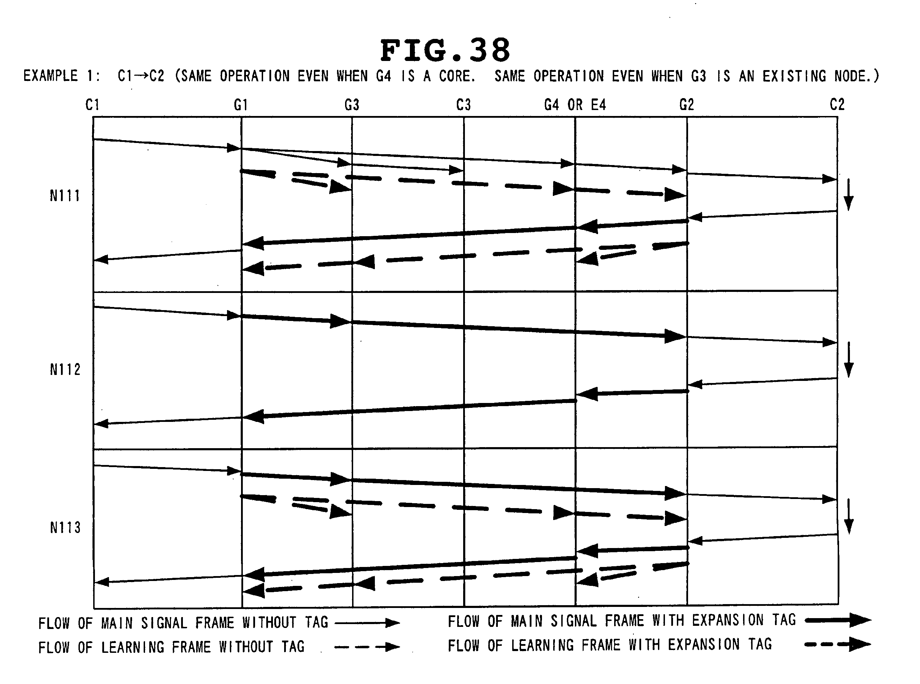

Then, operation examples 1 to 3 of this embodiment will be described with reference to Fig. 38 to Fig. 40.

In the following sequence diagrams, a main signal frame sequence is indicated by a solid line, and a learning frame sequence is indicated by a broken line. A sequence of the frame having the added expansion tag is indicated by a thick line, and a sequence of the frame not having an added expansion tag is indicated by a thin line.

Fig. 38 is a sequence diagram showing an exchange of frames between the individual nodes and the client when client C1 under the control of the node G1 sends PING REQUEST to client C2 under the control of the node G2 and the client C2 sends back PING REPLY to the client C1. This is determined as operation example 1.

Sequence N111 is an operation immediately after the startup of a network operation or after a lapse of adequately long time after the termination of the previous communications between the client C1 and the client C2, and is a communication sequence between the client C1 and the client C2 where MAC address c1 of the client C1 and address g1 of a node to which the client C1 belongs, MAC address c2 of the client C2 and address g2 of node to which client C2 belongs are not learned by the individual nodes of nodes G1 to G4. Here, an example shows that the client C1 sends ICMP ECHO REQUEST frame to the client C2, and the client C2 replies back ICMP ECHO REPLY frame.

First, the client C1 sends the client C2 the ICMP ECHO REQUEST frame having a destination MAC of c2 and a source MAC of c1. This frame will be referred to as the main signal frame in the following description.

The node G1 receives the frame from a downlink port. The destination MAC is used as a key to search a tag to be added and an output port, but the search does not make a hit because the learning of MAC address c2 has not completed. Therefore, the node G1 broadcasts the main signal frame along the tree T0. At this time, an operation of adding or removing the tag to or from the frame is not performed. As a result, the main signal frame is transferred to both the node G3 and the node G4.

Because the frame having an unlearned source MAC c1 added arrives from the downlink side, the node G1 learns that the MAC address c1 is connected to the port of the downlink side and broadcasts the learning frame having the address g1 of the source node G1 added as an expansion tag address to the uplink side along the tree T1. As a result, the learning frame is transferred to both the node G3 and the node G4.

The node G3 receives from the uplink port the main signal frame which is sent from the node G1 to the destination MAC c2. At this time, it is learned that the frame addressed to the destination MAC address c1 may be sent to the uplink port to which the node G1 is connected. And, the output port is searched with the destination MAC c2 used as a key, but the search does not result in a hit because the learning on the MAC address c2 has not completed. Therefore, the node G3 broadcasts the main signal frame to the tree T0 and the port on the downlink side. At this time, no operation is performed to add or remove a tag to or from the frame. As a result, the main signal frame is transferred to the client c3 under the control of the node G3 from the downlink port.

The node G3 receives the learning frame which is sent from the uplink side by the node G1 and learns that the client C1 having the MAC address c1 is connected to the downlink side of the node G1 having the expansion tag address g1. This learning upon arrival of the learning frame has precedence over the learning upon arrival of the main signal frame described above. Thus, when another frame addressed to the c1 is received from the downlink side, the expansion forwarding tag g1 is added to the frame to transfer to the root port side of the tree T1. At the same time, the received learning frame is broadcasted to the uplink side along the tree T1. But, the tree T1 is interrupted at the node G3, resulting in no further transfer of the learning frame from the node G3 to the next node.

The client C3 receives the main signal frame of the destination MAC c2 which is transferred by the node G3 but discards this frame because the destination MAC address does not match own MAC address c3.

The node G4 receives from the uplink port the main signal frame which is sent from the node G1 to the designation MAC c2. At this time, it is learned that the frame addressed to the destination MAC address c1 may be sent to the uplink port to which the node G1 is connected. And, the output port is searched with the destination MAC c2 used as a key, but the search does not make a hit because the learning on the MAC address c2 has not completed. Therefore, the node G4 broadcasts the main signal frame to the tree T0 and the port on the downlink side. At this time, no operation to add or remove a tag to or from the frame is performed. As a result, the main signal frame is transferred from the uplink port to the node G2 along the tree T0.

The node G4 receives the learning frame which is sent by the node G1 from the uplink side and learns that the client C1 having the MAC address c1 is connected to the downlink side of the node G1 having expansion tag address g1. This learning upon arrival of the learning frame has precedence over the learning upon arrival of the main signal frame described above. Thus, when a frame addressed to the c1 is received from the downlink side from then on, the expansion forwarding tag g1 is added to the frame to transfer to the root port side of the tree T1. At the same time, the received learning frame is broadcasted to the uplink side along the tree T1. As a result, the learning frame is transferred to the node G2.

The node G2 receives from the uplink port the main signal frame addressed to the destination MAC c2 sent from the node G4. At this time, it is learned that the frame addressed to the destination MAC address c1 may be sent to the uplink port to which the node G4 is connected. And, the output port is searched with the destination MAC c2 used as a key, but the search does not make a hit because the learning on the MAC address c2 has not completed. Therefore, the node G2 broadcasts the main signal frame to the tree T0 and the port on the downlink side. At this time, no operation is performed to add or remove a tag to or from the frame. As a result, the main signal frame is transferred to the client C2 under the control of the node G2 from the downlink port.

The node G2 receives from the uplink side the learning frame sent by the node G4 and learns that the client C1 having the MAC address c1 is connected to the downlink side of the node G1 having the expansion tag address g1. This learning upon arrival of the learning frame has precedence over the learning upon arrival of the main signal frame described above. Thus, when a frame addressed to the c1 is received from the downlink side from then on, the expansion forwarding tag g1 is added to the frame to transfer to the root port side of the tree T1. At the same time, the received learning frame is broadcasted to the uplink side along the tree T1. But, because the tree T1 is interrupted at the node G2, the learning frame is not transferred from the node G2 to the next node.

The client C2 receives the main signal frame of the destination MAC address c2 transferred by the node G2. Because the destination MAC address matches own MAC address c2, this frame is given to an application or another program.

In this example, the frame sent from the client C1 is determined to be the ICMP ECHO REQUEST, so that the basic software of the client C2 creates an ICMP ECHO REPLY frame having the destination MAC address c1 and the source MAC address c2 to send to the node G2. This frame is referred to as the main signal frame in the following description.

The node G2 receives the frame from the downlink port. When a tag to be added and an output port are searched with the destination MAC used as a key, it is seen by the previous learning operation that the expansion forwarding tag g1 may be added to the frame of the destination MAC address c1 to transfer to the root port side of the tree T1. Therefore, the node G2 adds the expansion forwarding tag g1 to the frame and transfers to the node G4.

At the same time, the node G2 learns that the MAC address c2 is connected to the port on the downlink side because a frame having an unlearned source MAC address c2 added has arrived from the downlink side and, at the same time, broadcasts the learning frame having the address g2 of the source node G2 added as an expansion tag address to the uplink side along the tree T2. As a result, the learning frame is transferred to both the node G3 and the node G4.

The node G4 receives from the uplink port the main signal frame of the destination expansion tag g1 sent from the node G2. And, the output port is retrieved with the destination expansion tag g1 used as a key. Then, because the output port to the expansion forwarding tag g1 is always set to the root port side of the spanning tree T1, the node G4 transfers the received frame from the uplink port to the node G1. At this time, no change is made to the frame. Therefore, no operation is made to add or remove a tag or to rewrite the MAC address.

The node G4 receives the learning frame sent by the node G2 from the uplink side and learns that the client C2 having the MAC address c2 is connected to the downlink side of the node G2 having the expansion tag address g2. Thus, when a frame addressed to the c2 is received from the downlink side from then on, the expansion forwarding tag g2 is added to the frame so to transfer to the root port side of the tree T2. At the same time, the received learning frame is broadcasted to the uplink side along the tree T2. But, the tree T2 is interrupted at the node G4, resulting in no transfer of the learning frame from the node G4 to the next node.

The node G3 receives the learning frame which is sent by the node G2 from the uplink side and learns that the client C2 having the MAC address c2 is connected to the downlink side of the node G2 having the expansion tag address g2. Thus, when a frame addressed to the c2 is received from the downlink side from then on, the expansion forwarding tag g2 is added to the frame so to transfer to the root port side of the tree T2. At the same time, the received learning frame is broadcasted to the uplink side along the tree T2. As a result, the learning frame is transferred to the node G1.

The node G1 receives from the uplink port the main signal frame of the destination expansion tag g1 sent from the node G4. And, the address g1 indicated on the destination expansion tag is own address, so that this expansion tag is removed, and the output port on the downlink side is searched with the destination MAC c1 used as a key. Then, it is seen by the previous learning operation that the node having the destination MAC address c1 is connected to which port of the downlink side. Therefore, the node G1 transfers the frame to the downlink port to which the client C1 is connected.

The node G1 receives the learning frame which is sent by the node G3 from the uplink side and learns that the client C2 having the MAC address c2 is connected to the downlink side of the node G2 having the expansion tag address g2. Thus, when the node G1 receives a frame addressed to the c2 from the downlink side from then on, it adds the expansion forwarding tag g2 to the frame to transfer to the root port side of the tree T2. At the same time, it broadcasts the received learning frame to the uplink side along the tree T1. But, the tree T2 is interrupted at the node G1, resulting in no transfer of the learning frame from the node G1 to the next node.

The client C1 receives the main signal frame of the destination MAC address c1 transferred by the node G1 and gives the frame to an application or another program because the destination MAC address matches own MAC address c1. In this example, the frame is given to a PING program in the basic software, and the result of a PING command is shown.

Thus, the communication sequence between the client C1 and the client C2 was described under the condition that it is immediately after the start-up of the network operation or it has passed a long time sufficient from the termination of previous communications between the client C1 and the client C2, and the MAC address c1 of the client C1 and the address g1 of the node to which the client C1 belongs and also the MAC address c2 of the client C2 and the address g2 of the node to which the client C2 belongs are not learned by each of the nodes G1 to G4.

Sequence N112 is a communication sequence between the client C1 and the client C2 when it has not passed a long time after the termination of the previous communications between the client C1 and the client C2, and the MAC address c1 of the client C1 and the address g1 of the node to which the client C1 belongs and also the MAC address c2 of the client C2 and the address g2 of the node to which the client C2 belongs have been learned by each of the nodes G1 to G4.

Here, an example in which the client C1 sends an ICMP ECHO REQUEST frame to the client C2 and the client C2 sends back an ICMP ECHO REPLY frame will be described.

First, the client C1 sends to the client C2 the ICMP ECHO REQUEST frame having destination MAC of c2 and the source MAC of c1. This frame will be called the main signal frame in the following description.

The node G1 receives the main signal frame from the downlink port. When a tag to be added and an output port are searched with the destination MAC used as a key, it is seen by learning that it is advisable to add the expansion forwarding tag g2 to the frame of the destination MAC address c2 to transfer to the root port side of the tree T2. Therefore, the node G1 adds the expansion forwarding tag g2 to the frame and transfers to the node G3.

The node G3 receives from the uplink port the main signal frame of the destination expansion tag g2 sent by the node G1. And, the output port is searched with the destination expansion tag g2 used as a key. Then, the output port for the expansion forwarding tag g2 is always set to the root port side of the spanning tree T2, so that the node G3 transfers the received frame from the uplink port toward the node G2. At this time, no change is made on the frame. Therefore, a tag is not added or removed, and the MAC address is not rewritten.

The node G2 receives from the uplink port the main signal frame of the destination expansion tag g2 sent by the node G3. And, the address g2 indicated on the destination expansion tag is own address, so that the expansion tag is removed, and the output port on the downlink side is searched with the destination MAC c2 used as a key. Then, it is seen by the previous learning operation that the node having the destination MAC address c2 is connected to which port of the downlink side. Therefore, the node G2 transfers the frame to the downlink port to which the client C2 is connected.

The client C2 receives the main signal frame of the destination MAC address c2 transferred by the node G2. This frame is given to an application or another program because the destination MAC address matches own MAC address c2.

In this example, the frame sent from the client C1 is determined to be the ICMP ECHO REQUEST, so that the basic software of the client C2 creates an ICMP ECHO REPLY frame having the destination MAC address c1 and the source MAC address c2 and sends to the node G2. This frame is called the main signal frame in the following description.

The node G2 receives the frame from the downlink port. When a tag to be added and an output port are searched with the destination MAC used as a key, it is seen that the expansion forwarding tag g1 is advisably added to the frame of the destination MAC address c1 to transfer to the root port side of the tree T1. Therefore, the node G2 adds the expansion forwarding tag g1 to the frame and transfers to the node G4.

The node G4 receives from the uplink port the main signal frame of the destination expansion tag g1 which is sent from the node G2. And, the output port is searched with the destination expansion tag g1 used as a key. Then, the output port to the expansion forwarding tag g1 is always set to the root port side of the spanning tree T1, so that the node G4 transfers the received frame from the uplink port to the node G1. At this time, no change is made on the frame. Therefore, a tag is not added or removed, and the MAC address is not rewritten.

The node G1 receives from the uplink port the main signal frame of the destination expansion tag g1 which is sent from the node G4. And, the address g1 indicated on the destination expansion tag is own address, so that this expansion tag is removed, and the output port on the downlink side is searched with the destination MAC c1 used as a key. Then, it is seen by the previous learning operation that the node having the destination MAC address c1 is connected to which port of the downlink side. Therefore, the node G1 transfers the frame to the downlink port to which the client C1 is connected.

The client C1 receives the main signal frame of the destination MAC address c1 which is transferred by the node G1. This frame is given to an application or another program because the destination MAC address matches own MAC address c1. This frame is given to an application or another program. In this example, the frame is given to the PING program in the basic software, and the result of the PING command is shown.

Thus, the communication sequence between the client C1 and the client C2 was described under the condition that it has not passed a long time after the termination of previous communications between the client C1 and the client C2, and the MAC address c1 of the client C1 and the address g1 of the node to which the client C1 belongs and also the MAC address c2 of the client C2 and the address g2 of the node to which the client C2 belongs have been learned by each of the nodes G1 to G4.

Sequence N113 is a communication sequence between the client C1 and the client C2 when the MAC learning aging time which is previously set on a timer through an equipment control program has passed from the start of communications between the client C1 and the client C2 or from the start of the previous MAC learning aging but a TAG learning aging time which is previously set on a timer through the equipment control program has not passed.

In this case, the MAC address c1 of the client C1 and the MAC address c2 of the client C2 have been learned, but it is set to retransmit the learning frame, and the address g1 of the node to which the client C1 belongs and the address g2 of the node to which the client C2 belongs have been learned by each of the nodes G1 to G4 in the same way as the sequence N112.

Here, an example in which the client C1 sends an ICMP ECHO REQUEST frame to the client C2, and the client C2 sends back an ICMP ECHO REPLY frame will be described.

First, the client C1 sends an ICMP ECHO REQUEST frame which has a destination MAC of c2 and a source MAC of c1 to the client C2. This frame is called the main signal frame in the following description.

The node G1 receives the main signal frame from the downlink port. When a tag to be added and an output port are searched with the destination MAC used as a key, it is seen from the learning that the expansion forwarding tag g2 may be added to the frame of the destination MAC address c2 to transfer to the root port side of the tree T2. Therefore, the node G1 adds the expansion forwarding tag g2 to the frame and transfers to the node G3.

Because the frame which is added the source MAC address c1 requiring retransmission of the learning frame has arrived from the downlink side, the node G1 broadcasts the learning frame having the address g1 of the source node G1 added as an expansion tag address to the uplink side along the tree T1. As a result, the learning frame is transferred to both the node G3 and the node G4.

The node G3 receives from the uplink port the main signal frame of the destination expansion tag g2 which is sent from the node G1. And, the output port is retrieved with the destination expansion tag g2 used as a key. Then, the node G3 transfers the received frame from the uplink port toward the node G2 because the output port to the expansion forwarding tag g2 is always set to the root port side of the spanning tree T2. At this time, no change is added to the frame. Therefore, a tag is not added or removed, and the MAC address is not rewritten.

The node G3 receives the learning frame which is sent by the node G1 from the uplink side and relearns that the client C1 having the MAC address c1 is connected to the downlink side of the node G1 having the expansion tag address g1. This relearning prevents the contents of learning on the client C1 from disappearing from the node G3 by aging. At the same time, the received learning frame is broadcasted to the uplink side along the tree T1. But, the tree T1 is interrupted at the node G3, resulting in no transfer of the learning frame from the node G3 to the next node.

The node G4 receives the learning frame sent by the node G1 from the uplink side and relearns that the client C1 having the MAC address c1 is connected to the downlink side of the node G1 having the expansion tag address g1. This relearning prevents the contents of learning on the client C1 from disappearing from the node G3 by aging. At the same time, the received learning frame is broadcasted to the uplink side along the tree T1. As a result, the learning frame is transferred to the node G2.

The node G2 receives from the uplink port the main signal frame of the destination expansion tag g2 which is sent from the node G3. And, the address g2 indicated on the destination expansion tag is own address, so that the expansion tag is removed, and the output port on the downlink side is searched with the destination MAC c2 used as a key. Then, it is seen by the previous learning operation that the node having the destination MAC address c2 is connected to which port of the downlink side. Therefore, the node G2 transfers the frame to the downlink port to which the client C2 is connected.

The node G2 receives from the uplink side the learning frame sent by the node G4 and relearns that the client C1 having the MAC address c1 is connected to the downlink side of the node G1 having the expansion tag address g1. This relearning prevents the contents of learning on the client C1 from disappearing from the node G3 by aging. At the same time, the received learning frame is broadcasted to the uplink side along the tree T1. But, the tree T1 is interrupted at the node G2, resulting in no transfer of the learning frame from the node G2 to the next node.

The client C2 receives the main signal frame of the destination MAC address c2 transferred by the node G2. This frame is given to an application or another program because the destination MAC address matches own MAC address c2.

In this example, the frame sent from the client C1 is determined to be the ICMP ECHO REQUEST, so that the basic software of the client C2 creates an ICMP ECHO REPLY frame of the destination MAC address c1 and the source MAC address c2 and sends to the node G2. This frame is called the main signal frame in the following description.

The node G2 receives the frame from the downlink port. When a tag to be added and an output port are searched with the destination MAC used as a key, it is seen that the expansion forwarding tag g1 may be added to the frame of the destination MAC address c1 to transfer to the root port side of the tree T1. Therefore, the node G2 adds the expansion forwarding tag g1 to the frame and transfer to the node G4.

Because the frame having the added source MAC address c2 requiring the retransmission of the learning frame has arrived from the downlink side, the node G2 broadcasts the learning frame having the source tag address g2 added to the uplink side along the tree T1. As a result, the learning frame is transferred to both the node G3 and the node G4.

The node G4 receives from the uplink port the main signal frame of the destination expansion tag g1 sent from the node G2. And, the output port is retrieved with the destination expansion tag g1 used as a key. Then, because the output port to the expansion forwarding tag g1 is always set to the root port side of the spanning tree T1, the node G4 transfers the received frame from the uplink port toward the node G1. At this time, no change is made to the frame. Therefore, a tag is not added or removed, and the MAC address is not rewritten.

The node G4 receives the learning frame sent by the node G2 from the uplink side and relearns that the client C2 having the MAC address c2 is connected to the downlink side of the node G2 having the expansion tag address g2. This relearning prevents the contents of learning on the client C2 from disappearing from the node G4 by aging. At the same time, the received learning frame is broadcasted to the uplink side along the tree T2. But, the tree T2 is interrupted at the node G4, resulting in no transfer of the learning frame from the node G4 to the next node.

The node G3 receives the learning frame sent by the node G2 from the uplink side and relearns that the client C2 having the MAC address c2 is connected to the downlink side of the node G2 having the expansion tag address g2. This relearning prevents the contents of learning on the client C2 from disappearing from the node G3 by aging. At the same time, the received learning frame is broadcasted toward the uplink side along the tree T2. As a result, the learning frame is transferred to the node G1.

The node G1 receives from the uplink port the main signal frame of the destination expansion tag g1 which is sent from the node G4. And, the address g1 indicated on the destination expansion tag is own address, so that this expansion tag is removed, and the output port on the downlink side is searched with the destination MAC c1 used as a key. Then, it is seen by the previous learning operation that the node having the destination MAC address c1 is connected to which port of the downlink side. Therefore, the node G1 transfers the frame to the downlink port to which the client C1 is connected.

The node G1 receives the learning frame sent by the node G3 from the uplink side and relearns that the client C2 having the MAC address c2 is connected to the downlink side of the node G2 having the expansion tag address g2. This relearning prevents the contents of learning on the client C2 from disappearing from the node G1 by aging. And, at the same time, the received learning frame is broadcasted to the uplink side along the tree T1. But, the tree T2 is interrupted at the node G1, resulting in no transfer of the learning frame from the node G1 to the next node.

The client C1 receives the main signal frame of the destination MAC address c1 which is transferred by the node G1. This frame is given to an application or another program because the destination MAC address matches own MAC address c1. In this example, the frame is given to the PING program in the basic software, and the result of the PING command is shown.

Thus, the communication sequence between the client C1 and the client C2 was described under the condition that MAC learning aging time previously set on a timer through the equipment control program has passed after the start of communications between the client C1 and the client C2 or the start of the previous MAC learning aging but the TAG learning aging time previously set on the timer through the equipment control program has not passed.

This learning frame retransmission operation is performed to prevent the contents of address learning of each relay node from disappearing by aging in an asymmetrical network. This operation makes it possible to send an asymmetrical main signal frame to the Ethernet while maintaining the learning information.

Although the foregoing description has been made of PING, other frame transfer can be executed in an ordinary manner after executing the foregoing learning.

The node G4 in this operation example can be replaced with node E4 which has a simplified structure of the node G4. The simplified node E4 is different from the node G4 on the following four points: (1) not having the memory duplicate information 3013, (2) not having the MAC forwarding table memory 2043, (3) not having the learning management program 302 and the timer 306, and (4) not sending or receiving the learning frame.

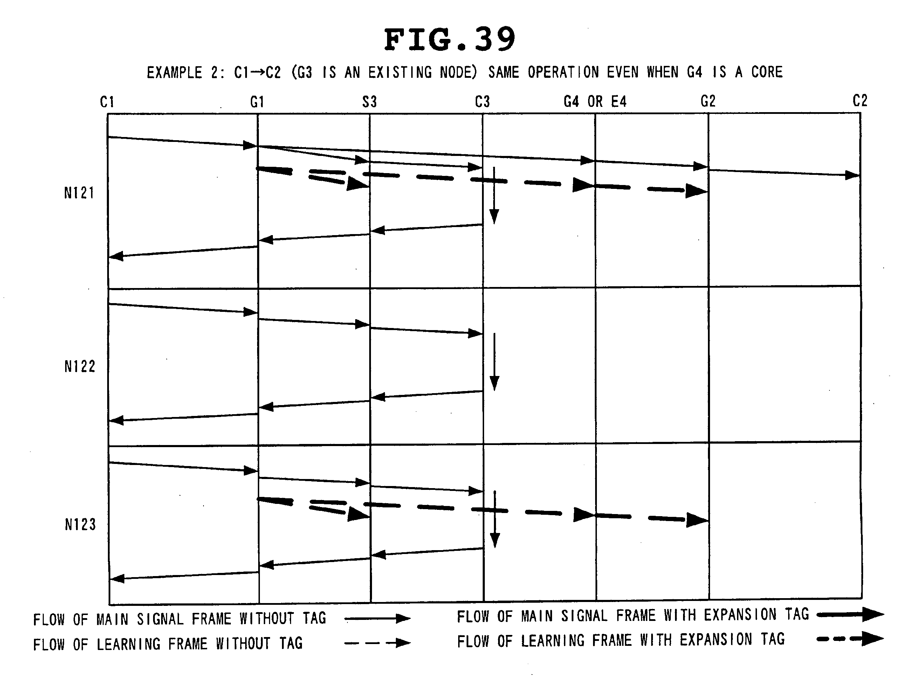

Then, a second operation example of this embodiment will be described with reference to Fig. 39.

Fig. 39 is a sequence diagram showing the exchange of frames between the individual nodes and the clients when the client C1 sends PING REQUEST to client C3 and the client C3 sends back PING REPLY to the client C1. This is determined as operation example 2.

In the sequence of Fig. 39, when the node G1, the node G2 and the node G4 are the same as the nodes in the sequence of Fig. 38, the node G3 is replaced with node S3 which is an existing ordinary Ethernet switch.

The existing node S3 is different from the node G3 on three points: (1) not having the tag forwarding table memory 2041 and the tag forwarding table memory 70131 which is a table in its memory duplicate information 3013, (2) not inserting or removing the expansion tag to or from a particular destination MAC address, and (3) not sending or receiving the learning frame.

Sequence N121 is a communication sequence between the client C1 and the client C3, which is an operation immediately after the startup of a network operation or after a lapse of adequately long time after the termination of the previous communications between the client C1 and the client C3, and MAC address c1 of the client C1, address g1 of a node to which the client C1 belongs and MAC address c3 of the client C3 are not learned by each of the node G1, the node G2, the node S3 and the node G4. Here, an example shows that the client C1 sends an ICMP ECHO REQUEST frame to the client C3, and the client C3 replies back an ICMP ECHO REPLY frame.

First, the client C1 sends to the client C3 the ICMP ECHO REQUEST frame having a destination MAC of c3 and a source MAC of c1. This frame will be referred to as the main signal frame in the following description.

The node G1 receives the frame from the downlink port. A tag to be added and an output port are searched with the destination MAC used as a key, but the search does not make a hit because the learning on the MAC address c3 has not completed. Therefore, the node G1 broadcasts the main signal frame along the tree T0. At this time, no operation is made to add or remove a tag to or from the frame. As a result, the main signal frame is transferred to both the node S3 and the node G4.

Because the frame which has an unlearned source MAC c1 added has arrived from the downlink side, the node G1 learns that the MAC address c1 is connected to the port on the downlink side and also broadcasts the learning frame with the address g1 of the node G1 added as an expansion tag address to the uplink side along the tree T1. As a result, the learning frame is transferred to both the node S3 and the node G4.

The node G4 receives from the uplink port the main signal frame which is addressed to the destination MAC c3 sent from the node G1. At this time, the frame addressed to the destination MAC address c1 learns that it is advisable to send to the uplink port to which the node G1 is connected. And, the output port is searched with the destination MAC c3 used as a key, but the search does not make a hit because the learning on the MAC address c3 has not completed. Therefore, the node G4 broadcasts the main signal frame to the tree T0 and the port on the downlink side. At this time, no operation is made to add or remove a tag to the frame. As a result, the main signal frame is transferred from the uplink port to the node G2 along the tree T0.

The node G4 receives the learning frame sent by the node G1 from the uplink side and learns that the client C1 having the MAC address c1 is connected to the downlink side of the node G1 having the expansion tag address g1. This learning upon the arrival of the learning frame takes precedence over the above-described learning upon arrival of the main signal frame. Thus, when a frame addressed to the c1 is received from the downlink side from then on, the expansion forwarding tag g1 is added to the frame so to transfer to the root port side of the tree T1. At the same time, the received learning frame is broadcasted to the uplink side along the tree T1. As a result, the learning frame is transferred to the node G2.

The node G2 receives from the uplink port the main signal frame addressed to the destination MAC c3 sent from the node G4. At this time, it is learned that the frame addressed to the destination MAC address c1 may be sent to the uplink port to which the node G4 is connected. And, the output port is searched with the destination MAC c3 used as a key, but the search does not make a hit because the learning on the MAC address c3 has not completed. Therefore, the node G2 broadcasts the main signal frame to the tree T0 and the port on the downlink side. At this time, no operation is made to add or remove a tag to or from the frame. As a result, the main signal frame is transferred to the client C2 from the downlink port.

The node G2 receives the learning frame sent by the node G4 from the uplink side and learns that the client C1 having the MAC address c1 is connected to the downlink side of the node G1 having the expansion tag address g1. This learning upon the arrival of the learning frame takes precedence over the above-described learning upon the arrival of the main signal frame. Thus, when the frame addressed to the c1 is received from the downlink side from then on, the expansion forwarding tag g1 is added to the frame to transfer to the root port side of the tree T1. At the same time, the received learning frame is broadcasted to the uplink side along the tree T1. But, the tree T1 is interrupted at the node G2, resulting in no transfer of the learning frame from node G2 to the next node.

The client C2 receives the main signal frame of the destination MAC c3 transferred by the node G2 but discards it because the destination MAC address does not match own MAC address c2.

The node S3 receives the main signal frame addressed to the destination MAC c3 sent from the node G1. At this time, it is learned that the frame addressed to the destination MAC address c1 may be sent to the port to which the node G1 is connected. And, the output port is searched with the destination MAC c3 used as a key, but the search does not make a hit because the learning on the MAC address c3 has not completed. Therefore, the node S3 broadcasts the main signal frame to the tree T0 and the port on the downlink side. At this time, no operation is made to add or remove a tag to or from the frame. As a result, the main signal frame is transferred from the downlink port to the client C3.

The node S3 receives the learning frame sent by the node G1 from the uplink side and broadcasts the received learning frame to the uplink side along the tree T1. But, the tree T1 is interrupted at the node S3, resulting in no transfer of the learning frame from the node S3 to the next node.

The node S3 can receive the learning frame to transfer the frame by the network control program 304 but cannot update table information by the learning management program 302 according to the contents of the received frame. Therefore, it cannot be learnt from the learning frame that the client C1 having the MAC address c1 is connected to the downlink side of the node G1 having the expansion tag address g1.

The client C3 receives the main signal frame of the destination MAC address c3 transferred by the node S3. Because the destination MAC address matches own MAC address c3, this frame is given to an application or another program.

In this example, the frame sent from the client C1 is determined to be the ICMP ECHO REQUEST, so that basic software of the client C3 creates an ICMP ECHO REPLY frame of the destination MAC address c1 and the source MAC address c3 to send to the node S3. This frame is referred to as the main signal frame in the following description.

The node S3 receives the main signal frame sent from the client C3. At this time, it is learned that the frame addressed to the destination MAC address c3 may be sent to the port on the side to which the client C3 is connected. And, when the output port is searched with the destination MAC used as a key, it is seen by the previous learning operation that the frame addressed to the destination MAC address c1 may be transferred to a port to which the node G1 is connected. Therefore, the node S3 transfers the frame to the node G1.

The node G1 receives the main signal frame transferred by the node S3. At this time, it is learned that the frame addressed to the destination MAC address c3 may be sent to a port on the side to which the node S3 is connected. And, when the output port is searched with the destination MAC used as a key, it is seen by the previous learning operation that the frame addressed to the destination MAC address c1 may be transferred to the downlink port on the side to which the client C1 is connected. Therefore, the node G1 transfers the frame to the client C1.

The client C1 receives the main signal frame of the destination MAC address c1 transferred by the node G1. Because the destination MAC address matches own MAC address c1, this frame is given to an application or another program. In this example, the frame is given to the PING program in the basic software, and a result of the PING command is shown.

Thus, the communication sequence between the client C1 and the client C3 was described under the condition that it is immediately after the start-up of the network operation or it has passed a long time sufficient from the termination of previous communications between the client C1 and the client C3, and the MAC address c1 of the client C1, the address g1 of the node to which the client C1 belongs and also the MAC address c3 of the client C3 are not learned by each of the node G1, the node G2, the node S3 and the node G4.

Sequence N122 is a communication sequence between the client C1 and the client C3 when it has not passed a long time after the termination of the previous communications between the client C1 and the client C3, and the MAC address c1 of the client C1 and the address g1 of the node to which the client C1 belongs have been learned by each of the node G1, the node G2, the node S3 and the node G4 and also the MAC address c3 of the client C3 has been learned at each of the node G1 and the node S3.

Here, an example in which the client C1 sends an ICMP ECHO REQUEST frame to the client C3, and the client C3 replies back an ICMP ECHO REPLY frame will be described.

First, the client C1 sends the client C3 the ICMP ECHO REQUEST frame having a destination MAC of c3 and a source MAC of c1. This frame is referred to as the main signal frame in the following description.

The node G1 receives the main signal frame from the downlink port. When a tag to be added and an output port are searched with the destination MAC used as a key, it is seen by learning that the frame of the destination MAC address c3 may be transferred to the port on side of the node S3 without adding the expansion forwarding tag. Therefore, the node G1 is transferred as it is to the uplink port to which the node S3 is connected without performing an operation to add or remove a tag to or from the frame. At this time, it is relearned that the frame addressed to the destination MAC address c1 may be sent to the downlink port on the side to which the client C1 is connected.

The node S3 receives the main signal frame sent from the node G1. At this time, it is relearned that the frame addressed to the destination MAC address c1 may be sent to the port on the side to which the node G1 is connected. And, when the output port is searched with the destination MAC used as a key, it is seen by learning that the frame addressed to the destination MAC address c3 may be transferred to the port to which the client C3 is connected. Therefore, the node S3 transfers the frame to the port on the side to which the client C3 is connected.

The client C3 receives the main signal frame of the destination MAC address c3 which is transferred by the node S3. Because the destination MAC address matches own MAC address c3, this frame is given to an application or another program.

In this example, the frame sent from the client C1 is determined to be the ICMP ECHO REQUEST, so that the basic software of the client C3 creates an ICMP ECHO REPLY frame of the destination MAC address c1 and the source MAC address c3 and sends to the node S3. This frame is referred to as the main signal frame in the following description.

The node S3 receives the main signal frame sent from the client C3. At this time, it is relearned that the frame addressed to the destination MAC address c3 may be sent to the port on the side to which the client C3 is connected. And, when the output port is searched with the destination MAC used as a key, it is seen by the previous learning operation that the frame addressed to the destination MAC address c1 may be transferred to the port to which the node G1 is connected. Therefore, the node S3 transfers the frame to the node G1.

The node G1 receives the main signal frame transferred by the node S3. At this time, it is relearned that the frame addressed to the destination MAC address c3 may be sent to the uplink port on the side to which the node S3 is connected. And, when the output port is searched with the destination MAC used as a key, it is seen by the previous learning operation that the frame addressed to the destination MAC address c1 may be transferred to the downlink port on the side to which the client C1 is connected. Therefore, the node G1 transfers the frame to the client C1.

The client C1 receives the main signal frame of the destination MAC address c1 which is transferred by the node G1. Because the destination MAC address matches own MAC address c1, the frame is given to an application or another program. In this example, the frame is given to the PING program in the basic software, and the result of the PING command is shown.

Thus, the communication sequence between the client C1 and the client C3 was described under the condition that a long time has not passed after the termination of the previous communications between the client C1 and the client C3, and the MAC address c1 of the client C1 and the address g1 of the node to which the client C1 belongs have been learned by each of the node G1, the node G2, the node S3 and the node G4 and also the MAC address c3 of the client C3 has been learned by each of the node G1 and the node S3.

Sequence N123 is a communication sequence between the client C1 and the client C3 when MAC learning aging time which is previously set on a timer through an equipment control program has passed from the start of communications between the client C1 and the client C3 or from the start of the previous MAC learning aging but TAG learning aging time which is previously set on the timer through the equipment control program has not passed.

In this case, the MAC address c1 of the client C1 and the MAC address c3 of the client C3 have been learned but set to retransmit the learning frame, and the address g1 of the node to which the client C1 belongs has been learned by each of the node G1, the node G2, the node S3 and the node G4 in the same way as the sequence N122.

Here, an example in which the client C1 sends an ICMP ECHO REQUEST frame to the client C3, and the client C3 replies back an ICMP ECHO REPLY frame will be described.

First, the client C1 sends to the client C3 the ICMP ECHO REQUEST frame having a destination MAC of c3 and a source MAC of c1. This frame is referred to as the main signal frame in the following description.

The node G1 receives the main signal frame from the downlink port. When a tag to be added and an output port are searched with the destination MAC used as a key, it is seen by learning that the frame of the destination MAC address c3 may be transferred to the port on the side of the node S3 without adding the expansion forwarding tag. Therefore, the node G1 is transferred as it is to the uplink port to which the node S3 is connected without performing an operation to add or remove the tag to or from the frame. At this time, it is relearned that the frame addressed to the destination MAC address c1 may be sent to the downlink port on the side to which the client C1 is connected.

Because the frame with the source MAC address c1 requiring the retransmission of the learning frame has arrived from the downlink side, the node G1 broadcasts the learning frame having the node address g1 of the node G1 added as an expansion tag address to the uplink side along the tree T1. As a result, the learning frame is transferred to both the node S3 and the node G4.

The node G4 receives the learning frame which is sent by the node G1 from the uplink side and relearns that the client C1 having the MAC address c1 is connected to the downlink side of the node G1 having the expansion tag address g1. This relearning prevents the contents of learning on the client C1 from disappearing from the node G3 by aging. And, at the same time, the received learning frame is broadcasted to the uplink side along the tree T1. As a result, the learning frame is transferred to the node G2.

The node G2 receives the learning frame which is sent by the node G4 from the uplink side and relearns that the client C1 having the MAC address c1 is connected to the downlink side of the node G1 having the expansion tag address g1. This relearning prevents the contents of learning on the client C1 from disappearing from the node G3 by aging. At the same time, the received learning frame is broadcasted to the uplink side along the tree T1. But, because the tree T1 is interrupted at the node G2, the learning frame is not transferred from the node G2 to the next node as a result.

The node S3 receives the main signal frame which is sent from the node G1. At this time, it is relearned that the frame addressed to the destination MAC address c1 may be sent to the port on the side to which the node G1 is connected. And, when the output port is retrieved with the destination MAC used as a key, it is seen by learning that the frame addressed to the destination MAC address c3 may be transferred to the port to which the client C3 is connected. Therefore, the node S3 transfers the frame to the port on the side to which the client C3 is connected.

The node S3 receives the learning frame which is sent by the node G1 from the uplink side and broadcasts the received learning frame to the uplink side along the tree T1. But, the tree T1 is interrupted at the node S3, so that the learning frame is not transferred from the node S3 to the next node as a result.

The client C3 receives the main signal frame of the destination MAC address c3 which is transferred by the node S3. Because the destination MAC address matches own MAC address c3, this frame is given to an application or another program.

In this example, the frame sent from the client C1 is determined to be the ICMP ECHO REQUEST, so that the basic software of the client C3 creates an ICMP ECHO REPLY frame of the destination MAC address c1 and the source MAC address c3 and sends to the node S3. This frame is referred to as the main signal frame in the following description.

The node S3 receives the main signal frame which is sent from the client C3. At this time, it is relearned that the frame addressed to the destination MAC address c3 may be sent to the port on the side to which the client C3 is connected. And, when the output port is searched with the destination MAC used as a key, it is seen from the previous learning operation that the frame addressed to the destination MAC address c1 may be transferred to the port to which the node G1 is connected. Therefore, the node S3 transfers the frame to the node G1.

The node G1 receives the main signal frame which is transferred by the node S3. At this time, it is relearned that the frame addressed to the destination MAC address c3 may be sent to the uplink port on the side to which the node S3 is connected. And, when the output port is searched with the destination MAC used as a key, it is seen by the previous learning operation that the frame addressed to the destination MAC address c1 may be transferred to the downlink port on the side to which the client C1 is connected. Therefore, the node G1 transfers the frame to the client C1.

The client C1 receives the main signal frame of the destination MAC address c1 which is transferred by the node G1. Because the destination MAC address matches own MAC address c1, this frame is given to an application or another program. In this example, the frame is given to the PING program in the basic software, and the result of the PING command is shown.

Thus, the communication sequence between the client C1 and the client C3 was described under the condition that the MAC learning aging time previously set on a timer through the equipment control program has passed after the start of communications between the client C1 and the client C3 or the start of the previous MAC learning aging but the TAG learning aging time previously set on the timer through the equipment control program has not passed.

The node G4 in this operation example can be replaced with node E4 which has a simplified structure of the node G4. The simplified node E4 is different from the node G4 on the following four points: (1) not having the memory duplicate information 3013, (2) not having the MAC forwarding table memory 2043, (3) not having the learning management program 302 and the timer 306, and (4) not sending or receiving the learning frame.

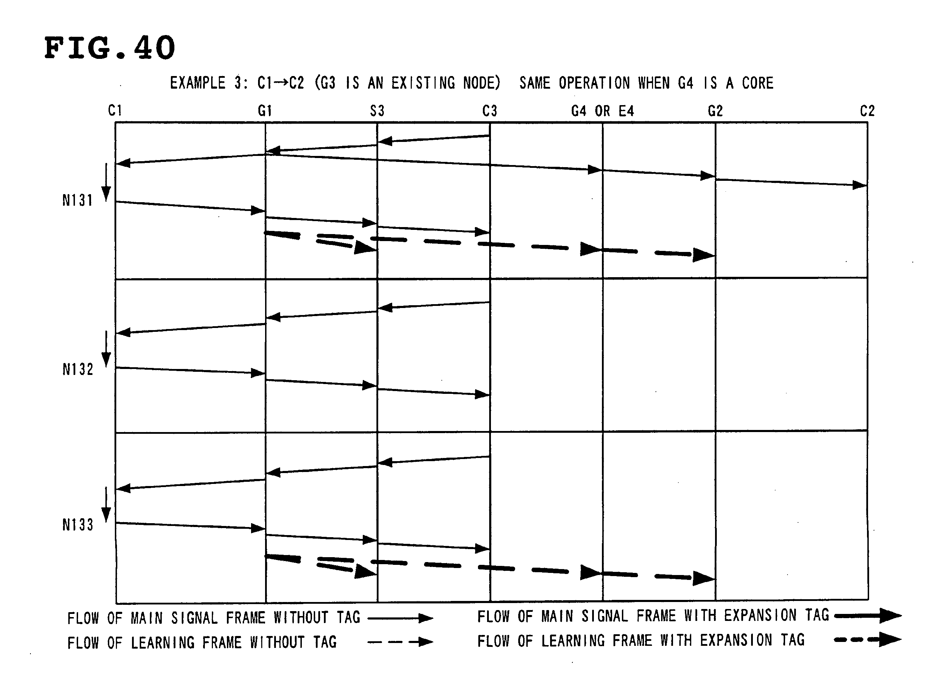

Then, a third operation example of this embodiment will be described with reference to Fig. 40.

Fig. 40 is a sequence diagram showing the exchange of frames between the individual nodes and the clients when the client C3 sends PING REQUEST to the client C1 and the client C1 sends back PING REPLY to the client C3. This is determined as operation example 3.

In the sequence of Fig. 40, when the node G1, the node G2 and the node G4 are the same as those of the sequence shown in Fig. 38, the node G3 may be replaced with node S3 which is an ordinary Ethernet switch.

The existing node S3 is different from the node G3 on the following three points: (1) not having the tag forwarding table memory 2041 and the tag forwarding table memory 70131 which is a table in its memory duplicate information 3013, (2) not inserting or removing the expansion tag to or from a particular destination MAC address, and (3) not sending or receiving a learning frame.

Sequence N131 is a communication sequence between the client C3 and the client C1 which is an operation immediately after the startup of a network operation or after a lapse of adequately long time after the termination of the previous communications between the client C3 and the client C1, and the MAC address c1 of the client C1, the address g1 of node to which the client C1 belongs and the MAC address c3 of client C3 are not learned by each of the node G1, the node G2, the node S3 and the node G4. Here, an example shows that the client C3 sends the ICMP ECHO REQUEST frame to the client C1, and the client C1 replies back the ICMP ECHO REPLY frame.

First, the client C3 sends to the client C1 ICMP ECHO REQUEST frame having the destination MAC of c1 and the source MAC of c3. This frame will be referred to as the main signal frame in the following description.

The node S3 receives the main signal frame addressed to the destination MAC c1 which is sent by the client C3. At this time, it is learned that the frame addressed to the destination MAC address c3 may be sent to the port to which the client C3 is connected. And, the output port is searched with the destination MAC c1 used as a key. But, the search does not make a hit because the learning on the MAC address c1 has not completed. Therefore, the node S3 broadcasts the main signal frame to the tree T0 and the port on the downlink side. At this time, no operation is made to add or remove the tag to or from the frame. As a result, the main signal frame is transferred to the node G1.

The node G1 receives the frame from the uplink port. A tag to be added and an output port are searched with the destination MAC c1 used as a key, but the search does not make a hit because the learning on the MAC address c1 has not completed. Therefore, the node G1 broadcasts the main signal frame to the tree T0 and the downlink port. At this time, no operation is made to add or remove a tag to or from the frame. As a result, the main signal frame is transferred to both the client C1 and the node G4.

The node G4 receives from the uplink port the main signal frame addressed to the destination MAC c1 which is sent by the node G1. At this time, it is learned that the frame addressed to the destination MAC address c3 may be sent to the uplink port to which the node G1 is connected. And, the output port is searched with the destination MAC c1 used as a key, but the search does not make a hit because the learning on the MAC address c1 has not completed. Therefore, the node G4 broadcasts the main signal frame to the tree T0 and the port on the downlink side. At this time, no operation is made to add or remove the tag to or from the frame. As a result, the main signal frame is transferred from the uplink port to the node G2 along the tree T0.

The node G2 receives from the uplink port the main signal frame addressed to the destination MAC c1 which is sent by the node G4. At this time, it is learned that the frame addressed to the destination MAC address c3 may be sent to the uplink port to which the node G4 is connected. And, the output port is searched with the destination MAC c1 used as a key. But, because the learning on the MAC address c1 has not completed, the search does not make a hit. Therefore, the node G2 broadcasts the main signal frame to the tree T0 and the port on the downlink side. At this time, no operation is made to add or remove the tag to or from the frame. As a result, the main signal frame is transferred from the downlink port to the client C2.

The client C2 receives the main signal frame of the destination MAC c1 which is transferred by the node G2, but because the destination MAC address does not match own MAC address c2, this frame is discarded.

The client C1 receives the main signal frame of the destination MAC address c1 which is transferred by the node G1. Because the destination MAC address matches own MAC address c1, this frame is given to an application or another program.

In this example, the frame sent from the client C3 is determined to be the ICMP ECHO REQUEST, so that the basic software of the client C1 creates an ICMP ECHO REPLY frame of the destination MAC address c3 and the source MAC address c1 and sends to the node G1. This frame is referred to as the main signal frame in the following description.

The node G1 receives the main signal frame from the downlink port. When a tag to be added and an output port are searched with the destination MAC used as a key, it is seen from the learning that the frame of the destination MAC address c3 may be transferred to the port on the side of the node S3 without adding the expansion forwarding tag. Therefore, the node G1 does not make an operation to add or remove a tag to or from the frame but transfers to the uplink port to which the node S3 is connected.

Because a frame having an unlearned source MAC c1 added has arrived from the downlink side, the node G1 learns that the MAC address c1 is connected to the port on the downlink side and also broadcasts the learning frame having the node address g1 of the node G1 added as an expansion tag address to the uplink side along the tree T1. As a result, the learning frame is transferred to both the node S3 and the node G4.

The node G4 receives the learning frame which is sent by the node G1 from the uplink side and learns that the client C1 having the MAC address c1 is connected to the downlink side of the node G1 having the expansion tag address g1. Thus, when a frame addressed to the c1 is received from the downlink side from then on, the expansion forwarding tag g1 is added to the frame, which is then transferred to the root port side of the tree T1. And, at the same time, the received learning frame is broadcasted to the uplink side along the tree T1. As a result, the learning frame is transferred to the node G2.

The node G2 receives the learning frame which is sent by the node G4 from the uplink side and learns that the client C1 having the MAC address c1 is connected to the downlink side of the node G1 having the expansion tag address g1. Thus, when the frame addressed to the c1 is received from the downlink side from then on, the expansion forwarding tag g1 is added to the frame, which is then transferred to the root port side of the tree T1. At the same time, the received learning frame is broadcasted to the uplink side along the tree T1. But, because the tree T1 is interrupted at the node G2, the learning frame is not transferred from the node G2 to the next node as a result.

The node S3 receives the main signal frame addressed to the destination MAC c3 which is sent from the node G1. At this time, it is learned that the frame addressed to the destination MAC address c1 may be sent to the port to which the node G1 is connected. And, when the output port is searched with the destination MAC used as a key, it is seen by the previous learning operation that the frame addressed to the destination MAC address c3 may be transferred to the port to which the client C3 is connected. Therefore, the node S3 transfers the frame to the client C3.

The node S3 receives the learning frame which is sent by the node G1 from the uplink side and broadcasts the received learning frame to the uplink side along the tree T1. But, because the tree T1 is interrupted at the node S3, the learning frame is not transferred from the node S3 to the next node as a result.

The node S3 can receive the learning frame to transfer it by the network control program 304 but cannot use the contents of the received frame to update the table information by the learning management program 302. Therefore, it cannot be learned by the learning frame that the client C1 having the MAC address c1 is connected to the downlink side of the node G1 having the expansion tag address g1.

The client C3 receives the main signal frame of the destination MAC address c3 which is transferred by the node S3. Because the destination MAC address matches own MAC address c3, this frame is given to an application or another program. In this example, the frame is given to the PING program in the basic software, and the result of the PING command is shown as a result.

Thus, the communication sequence between the client C3 and the client C1 was described under the condition that it is immediately after the start-up of the network operation or after a lapse of sufficiently long time from the termination of the previous communications between the client C3 and the client C1, and the MAC address c1 of the client C1 and the address g1 of the node to which the client C1 belongs and also the MAC address c3 of the client C3 are not learned by each of the node G1, the node G2, the node S3 and the node G4.

Sequence N132 is a communication sequence between the client C3 and the client C1 under the conditions that a long time has not passed after the termination of the previous communications between the client C3 and the client C1, the MAC address c1 of the client C1 and the address g1 of the node to which the client C1 belongs have been learned by each of the node G1, the node G2, the node S3 and the node G4, and also the MAC address c3 of the client C3 has been learned by each of the node G1 and the node S3.

Here, an example shows that the client C3 sends the ICMP ECHO REQUEST frame to the client C1, and the client C1 replies back the ICMP ECHO REPLY frame.

First, the client C3 sends to the client C1 the ICMP ECHO REQUEST frame having the destination MAC of c1 and the source MAC of c3. This frame will be referred to as the main signal frame in the following description.

The node S3 receives the main signal frame which is sent from the client C3. At this time, it is relearned that the frame addressed to the destination MAC address c3 may be sent to the port on the side to which the client C3 is connected. And, when the output port is searched with the destination MAC used as a key, it is seen by the previous learning operation that the frame addressed to the destination MAC address c1 may be transferred to the port to which the node G1 is connected. Therefore, the node S3 transfers the frame to the node G1.

The node G1 receives the main signal frame which is transferred by the node S3. At this time, it is relearned that the frame addressed to the destination MAC address c3 may be sent to the uplink port on the side to which the node S3 is connected. And, when the output port is searched with the destination MAC used as a key, it is seen by the previous learning operation that the frame addressed to the destination MAC address c1 may be transferred to the downlink port on the side to which the client C1 is connected. Therefore, the node G1 transfers the frame to the client C1.

The client C1 receives the main signal frame of the destination MAC address c1 which is transferred by the node G1. Because the destination MAC address matches own MAC address c1, this frame is given to an application or another program.

In this example, because the frame sent from the client C3 is determined as ICMP ECHO REQUEST, the basic software of the client C1 creates ICMP ECHO REPLY frame of the destination MAC address c3 and the source MAC address c1 and sends to the node G1. This frame will be referred to as the main signal frame in the following description.

The node G1 receives the main signal frame from the downlink port. When a tag to be added and an output port are searched with the destination MAC used as a key, it is seen from the learning that the frame of the destination MAC address c3 may be transferred to the port on the node S3 side without adding the expansion forwarding tag. Therefore, the node G1 is transferred as it is to the uplink port to which the node S3 is connected without performing an operation to add or remove the tag to or from the frame. At this time, it is relearned that the frame addressed to the destination MAC address c1 may be sent to the downlink port on the side to which the client C1 is connected.

The node S3 receives the main signal frame which is sent from the node G1. At this time, it is relearned that the frame addressed to the destination MAC address c1 may be sent to the port on the side to which the node G1 is connected. And, when the output port is searched with the destination MAC used as a key, it is seen by the learning that the frame addressed to the destination MAC address c3 may be transferred to the port to which the client C3 is connected. Therefore, the node S3 transfers the frame to the port on the side to which the client C3 is connected.

The client C3 receives the main signal frame of the destination MAC address c3 which is transferred by the node S3. Because the destination MAC address matches own MAC address c3, this frame is given to an application or another program. In this example, the frame is given to the PING program in the basic software, and the result of the PING command is shown.

Thus, the communication sequence between the client C3 and the client C1 was described under the conditions that a long time has not passed after the termination of the previous communications between the client C3 and the client C1, the MAC address c1 of the client C1 and the address g1 of the node to which the client C1 belongs have been learned by each of the node G1, the node G2, the node S3 and the node G4 and also the MAC address c3 of the client C3 has been learned by each of the node G1 and the node S3.

Sequence N133 is a communication sequence between the client C3 and the client C1 under the conditions that the MAC learning aging time previously set on a timer through the equipment control program has passed after the start-up of the communications between the client C3 and the client C1 or the start-up of the previous MAC learning aging but the TAG learning aging time previously set on the timer through the equipment control program has not passed.

In this case, the MAC address c1 of the client C1 and the MAC address c3 of the client C3 have been learned but are set to retransmit the learning frame, the address g1 of the node to which the client C1 belongs has been learned by each of the node G1, the node G2, the node S3 and the node G4 in the same way as the sequence N122.

Here, an example shows that the client C3 sends the ICMP ECHO REQUEST frame to the client C1, and the client C1 replies back the ICMP ECHO REPLY frame.

First, the client C3 sends to the client C1 the ICMP ECHO REQUEST frame having the destination MAC of c1 and the source MAC of c3. This frame will be referred to as the main signal frame in the following description.

The node S3 receives the main signal frame which is sent from the client C3. At this time, it is relearned that the frame addressed to the destination MAC address c3 may be sent to the port on the side to which the client C3 is connected. And, when the output port is searched with the destination MAC used as a key, it is learned from the previous learning operation that the frame addressed to the destination MAC address c1 may be transferred to the port to which the node G1 is connected. Therefore, the node S3 transfers the frame to the node G1.

The node G1 receives the main signal frame which is transferred by the node S3. At this time, it is relearned that the frame addressed to the destination MAC address c3 may be sent to the uplink port on the side to which the node S3 is connected. And, when the output port is searched with the destination MAC used as a key, it is seen from the previous learning operation that the frame addressed to the destination MAC address c1 may be transferred to the downlink port on the side to which the client C1 is connected. Therefore, the node G1 transfers the frame to the client C1.

The client C1 receives the main signal frame of the destination MAC address c1 which is transferred by the node G1. Because the destination MAC address matches own MAC address c1, this frame is given to an application or another program.

In this example, the frame sent from the client C3 is determined as the ICMP ECHO REQUEST, so that the basic software of the client C1 creates an ICMP ECHO REPLY frame of the destination MAC address c3 and the source MAC address c1 and sends to the node G1. This frame is referred to as the main signal frame in the following description.

The node G1 receives the main signal frame from the downlink port. When a tag to be added and an output port are searched with the destination MAC used as a key, it is seen from the learning that the frame of the destination MAC address c3 may be transferred to the port on the node S3 side without adding the expansion forwarding tag. Therefore, the node G1 transfers the frame as it is to the uplink port to which the node S3 is connected without performing an operation to add or remove the tag to or from the frame.

Because a frame which is added the source MAC address c1 requiring the retransmission of the learning frame has arrived from the downlink side, the node G1 broadcasts the learning frame having the source tag address g1 added to the uplink side along the tree T1. As a result, the learning frame is transferred to both the node S3 and the node G4.

The node G4 receives the learning frame which is sent by the node G1 from the uplink side and relearns that the client C1 having the MAC address c1 is connected to the downlink side of the node G1 having the expansion tag address g1. Thus, when the frame addressed to the c1 is received from the downlink side from then on, the expansion forwarding tag g1 is added to the frame to transfer to the root port side of the tree T1. At the same time, the received learning frame is broadcasted to the uplink side along the tree T1. As a result, the learning frame is transferred to the node G2.

The node G2 receives the learning frame which is sent by the node G4 from the uplink side and relearns that the client C1 having the MAC address c1 is connected to the downlink side of the node G1 having the expansion tag address g1. Thus, when a frame addressed to the c1 is received from the downlink side from then on, the expansion forwarding tag g1 is added to the frame to transfer to the root port side of the tree T1. At the same time, the received learning frame is broadcasted to the uplink side along the tree T1. But, the tree T1 is interrupted at the node G2, resulting in no transfer of the learning frame from the node G2 to the next node.

The node S3 receives the main signal frame addressed to the destination MAC c3 which is sent from the node G1. At this time, it is relearned that the frame addressed to the destination MAC address c1 may be sent to the port to which the node G1 is connected. And, when the output port is searched with the destination MAC used as a key, it is seen from the previous learning operation that the frame addressed to the destination MAC address c3 may be transferred to the port to which the client C3 is connected. Therefore, the node S3 transfers the frame to the client C3.

The node S3 receives the learning frame sent by the node G1 from the uplink side and broadcasts the received learning frame to the uplink side along the tree T1. But, because the tree T1 is interrupted at the node S3, the learning frame is not transferred from the node S3 to the next node as a result.

The client C3 receives the main signal frame of the destination MAC address c3 transferred by the node S3. Because the destination MAC address matches own MAC address c3, this frame is given to an application or another program. In this example, the frame is given to the PING program in the basic software, and the result of the PING command is shown.

Thus, the communication sequence between the client C3 and the client C1 was described under the condition that the MAC learning aging time previously set on a timer through the equipment control program has passed from the start-up of the communications between the client C3 and the client C1 or the start-up of the previous MAC learning aging but the TAG learning aging time previously set on the timer through the equipment control program has not passed.

The node G4 in this operation example can be replaced with node E4 which has a simplified structure of the node G4. The simplified node E4 is different from the node G4 on the following four points: (1) not having the memory duplicate information 3013, (2) not having the MAC forwarding table memory 2043, (3) not having the learning management program 302 and the timer 306, and (4) not sending or receiving the learning frame.

Then, the effects of the embodiment will be described.

Conventionally, when an asymmetrical flow which has a different node where the flow passes depending on a direction is flown on a network according to the Ethernet, a learning process does not function, a frame reaches the destination but it is also transmitted to unnecessary destinations. Therefore, there were problems that the network became congestion and bandwidth usability became low.

In this embodiment, even when the asymmetrical flow is flown by sending the learning frame through a path opposite to the path where the main signal frame flows, the learning process can be functioned, the network congestion can be remedied from becoming congestion, and the bandwidth usability can be improved.

Conventionally, when a frame having a tag indicating a destination was transferred, it was necessary to previously set information about an expansion tag (a node address of a node to which the destination client is connected etc.) to be added for each node according to the destination MAC address.

In this embodiment, the destination MAC address and the expansion tag to be correspondingly added can be correlated in each node by containing tag information in the learning frame, and the setting operation can be automated.

The present invention was described above with reference to the preferable embodiment and examples, but the invention is not limited to such embodiments and examples but can be practiced in various modified modes without departing from the spirit and scope of its technical idea.

### (Second embodiment)

A second embodiment of the present invention will now be described in detail by referring to the drawings.

The second embodiment of the present invention differs from the first embodiment in two respects. The first respect is that, instead of transmitting a learning frame, the second embodiment adds an expansion tag containing the address of a source node to a unicast frame for which the destination is unknown, broadcast frame or multicast frame; on receiving a frame with said expansion tag, a node learns an association between a MAC address and a tag address by use of the expansion tag. The second respect is that the second embodiment does not transmit a learning frame to entries which remain unremoved when aging is completed. In the second embodiment, it is possible to omit the transmission of a learning frame because MAC□Tag learning is performed by use of a broadcast frame with an expansion tag containing the address of a source node (hereinafter referred to as a "source tag").

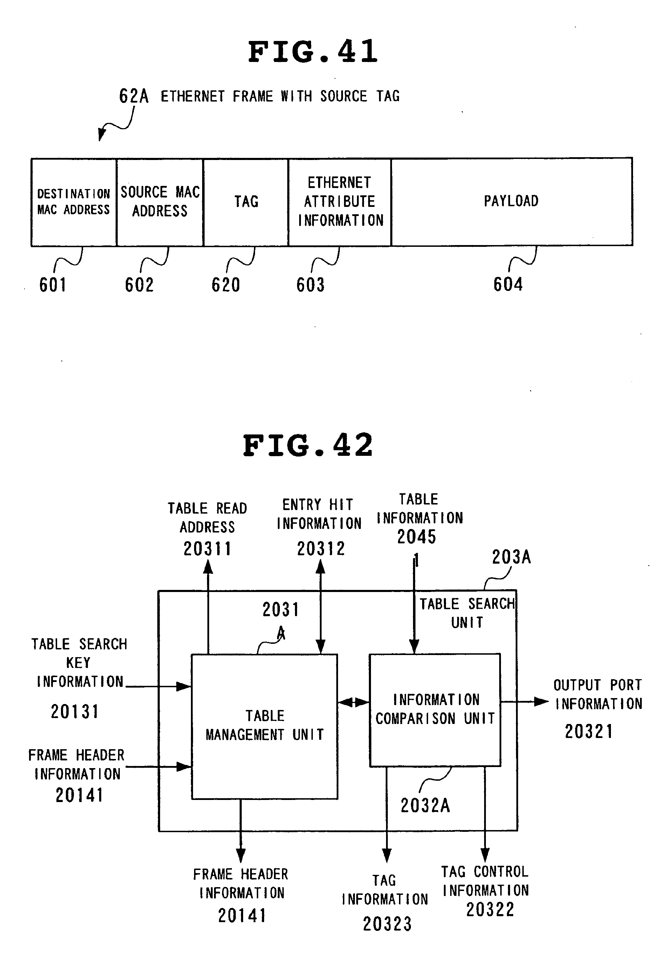

Fig. 41 is a block diagram showing a configuration of an Ethernet (R) frame 62A with a source tag, which is transferred over the network according to the first embodiment of the invention shown in Fig. 1.

The Ethernet (R) frame 62A with a source tag is similar to an Ethernet (R) frame 62 with a forwarding tag according to the first embodiment, except in that a bit indicating the source tag is added to the priority/tag identification information 6201 contained in the tag 620.

Fig. 42 is a block diagram showing in detail a configuration of the table search unit 203 according to the first embodiment shown in Fig. 10.

The table management unit 2031A differs from the table management unit 2031 according to the first embodiment shown in Fig. 14, with respect to the operation performed when a mishit in the MAC forwarding table is notified from the information comparison unit 2032 and the operation performed when a broadcast or multicast address is set in the MAC address 601 shown in Fig. 41.

The table management unit 2031 in the first embodiment receives a frame through the downlink port. The unit then searches the broadcast forwarding table 2042 using an input VLAN tag as a key if it is notified from the information comparison unit 2032 of the occurrence of a mishit in the MAC forwarding table 2043, or if a broadcast or multicast address has been set in the destination MAC address.

The table management unit 2031A in the second embodiment, however, determines the port through which it should send a frame by searching a broadcast forwarding table 2042 using the address of the own node as a key if it is notified from the information comparison unit 2032A of the occurrence of a mishit in the MAC forwarding table 2043 (that is, if a destination tag to be added is unknown), or if a broadcast or multicast address has been set in the destination MAC address.

The information comparison unit 2032A differs from the information comparison unit 2032 according to the first embodiment shown in Fig. 14, as to the operation that it performs if it is notified from the information comparison unit 2032 of the occurrence of a mishit in the MAC forwarding table, or if a broadcast or multicast address has been set in the destination MAC address 601 shown in Fig. 41.

If a mishit is detected in a search of the MAC forwarding table 2043, or if a broadcast or multicast address has been set in the destination MAC address, the information comparison unit 2032 according to the first embodiment notifies the result to the table management unit 2031 but does not specifically instruct the frame rewrite unit 205 to make a rewrite.

On the other hand, if a mishit is detected in a search of the MAC forwarding table 2043, or if a broadcast or multicast address has been set in the destination MAC address, the information comparison unit 2032 according to the second embodiment not only notifies the table management unit 2031 but also, by means of tag information 20323 and tag control information 20322, instructs the frame rewrite unit 205 to additionally insert into a frame a source tag containing the ID of the own node.

By the operation described above, if a mishit is detected in the MAC forwarding table 2043 by the frame search unit 203, or if a broadcast or multicast address has been set in the destination MAC address, an input frame will have a source tag additionally inserted and will be broadcast along a tree route formed with the own node as the root node.

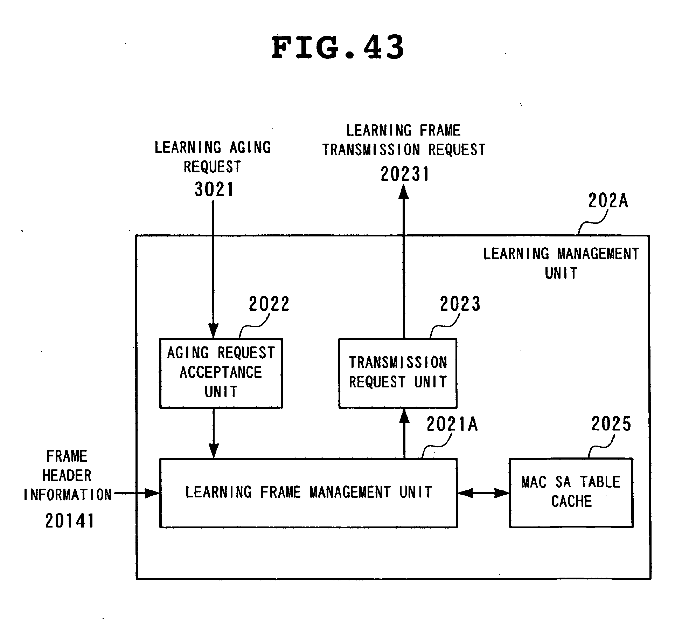

Fig. 43 is a block diagram showing in detail a configuration of the learning management unit 202A according to the second embodiment. The learning management unit 202A differs from the learning frame transmission management unit 202 according to the first embodiment shown in Fig. 12, in that the learning frame management unit 2021 is replaced with a learning frame management unit 2021A.

The learning frame management unit 2021A differs from the learning frame management unit 2021 according to the first embodiment shown in Fig. 12, with respect to the operation performed when the unit receives a frame with an expansion tag indicating a source address as frame header information (source tag).

On receipt of frame header information 20141, the learning frame management unit 2021 in the first embodiment always checks the source MAC address and then makes a request for the transmission of a learning frame, regardless of the header structure of the frame. In other words, the learning frame management unit 2021 first checks the MAC SA table cache 2025 to see whether the same MAC source address as the one in the frame header information is entered or not. Then, if there is no such entry, a learning frame transmission request 20231 is output together with the frame header information 20141 to the transmission request unit 2023.

The learning frame management unit 2021A in the second embodiment, on the other hand, checks the header structure of the frame on receiving frame header information 20141. If the frame has an expansion tag indicating the source node address (source tag), the unit does not search the MACSA cache table 2025. Instead, the unit always outputs a learning frame transmission request 20231 together with the frame header information 20141, as with the case in the first embodiment when the MAC SA cache table does not contain an entry of the same MAC source address.

On receiving frame header information 20141, the learning frame management unit 2021A checks the header structure of the frame, and if it finds that the frame is added an expansion tag indicating the source node address (source tag), it proceeds to check the MAC SA table cache 2025 as to whether the same MAC source address as the one in the frame header information is entered or not. If there is no such entry, it outputs a learning frame transmission request 20231 together with the frame header information 20141 to the transmission request unit 2023, as with the case of the learning frame management unit 2021. At the same time, it enters the MAC source address information in the MAC SA table cache 2025. If the checking reveals that the same MAC destination address has already been entered, no transmission request is output.

The learning frame management unit 2021A is also provided with a function of clearing to zero the MAC SA table cache 2025 according to a request from the aging request acceptance unit 2022. This operation is the same as the one performed by the learning frame management unit 2021.

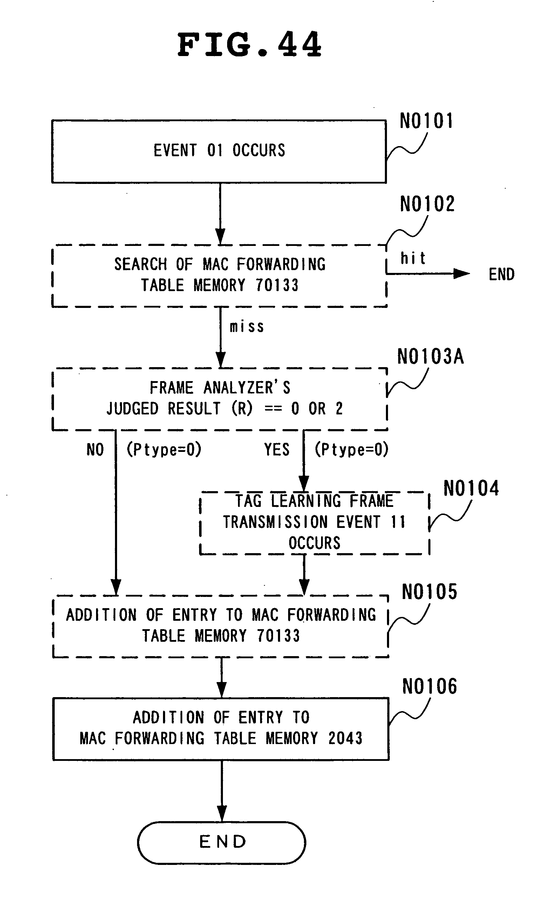

Fig. 44 is a flow chart illustrating in detail an operation of the event 01 by the learning management program 302 in the first embodiment shown in Fig. 23. Referring to Fig. 44, the second embodiment of the present invention differs from the first embodiment in two respects. The first respect is that whether a learning frame should be transmitted or not can be selected by changing the operational setup of the step N0103A in the first embodiment shown in Fig. 25. The second respect is that the setting, Ptype=0, is used so that, when an entry is written into the MAC forward table, it is always registered as an entry for which a learning frame is not transmitted.

The steps N0101, N0102, and N0104 to N0106 are the same as the step N0101, N0102, and N0104 to N0106 in the first embodiment shown in Fig. 25.

In the step N0103, the judged result by the frame analyzer 201 notified in the step N0101 is examined, and if the frame to be learnt has been input from the uplink side, the process moves to the step N0105. If it is input from the downlink, the process still moves to the step N0105 whenever the setting to disable the transmission of learning frames is being used. If it is input from the downlink and if the setting to enable the transmission of learning frames is being used, a learning frame is transmitted once by setting Ptype to 0. Then, after making a setting so that the subsequent periodic transmission of learning frames will not be performed automatically, the process moves to the step N0104.

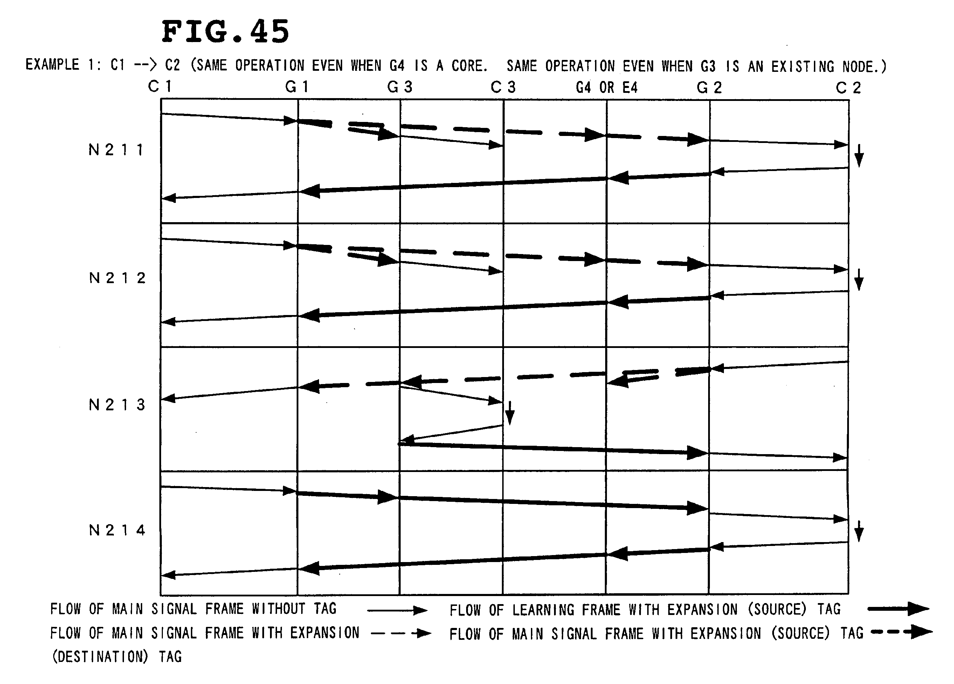

A first operation example of the second embodiment will be described with reference to Fig. 45.

In this and subsequent sequence diagrams, the sequence of a main signal frame with no expansion tag added is indicated by a thin solid line. The sequence of a main signal frame with an expansion tag (i.e., a forwarding tag with the address of a node to which the destination client is connected) is indicated by a thick solid line. The sequence of a main signal frame with an expansion tag (source tag) is indicated by a thick broken line. The sequence of a learning with an expansion tag (source tag) is indicated by a thin broken line.

Fig. 45 is a sequence diagram, showing the exchange of frames between nodes and clients, in which the client C1 sends PING REQUEST to client C2 and the client C2 sends back PING REPLY to the client C1 over the network according to the first embodiment in Fig. 1. It is assumed that the setting is such that no learning frames are transmitted.

The sequence N211 is a communication sequence between the clients C1 and C2, which is performed before the transmission of PING REQUEST from the client C1 to the client C2 in the sequence N212, and which involves two steps: the client C1 transmits ARP (Address Resolution Protocol) REQUEST to the client C2, and the client C2 responds to the client C1 with ARP REPLY.

At the start of the sequence N211, the communication status is as follows: a network operation has just started or an adequately long time has lapsed since the termination of the previous communication between the clients C1 and C2; MAC address c1 of the client C1 and address g1 of a node to which the client C1 belongs, as well as MAC address c2 of the client C2 and address g2 of node to which client C2 belongs, have not been learnt by the nodes G1 to G4; the ARP cache of each of the nodes C1, C2, and C3 has been cleared; and an ARP resolution is required before issuing a PING.

First, the client C1 sends to the client C2 an ARP REQUEST frame with a destination MAC for broadcast (i.e., destination MAC address is "ALL F") and a source MAC of c1. This frame is referred to as the ARP request frame in the following description.

The node G1 receives the frame through the downlink port. Since the destination MAC is a broadcast address, the node G1 adds the source tag g1 to the ARP REQUEST frame and broadcasts the frame along the tree T1 according to the first embodiment, shown in Fig. 34, formed with the own node as the root node. As a result, the ARP REQUEST frame, in the format of source tagged Ethernet (R) frame 62A shown in Fig. 41, is transferred to both the nodes G3 and G4.

Because a frame having an unlearnt source MAC c1 added has arrived from the downlink side, the node G1 learns that the MAC address c1 is connected to the port on the downlink side. A learning frame is not transmitted at this time, because the setting to disable the transmission of learning frames is being used.

The node G3 receives through the uplink port the ARP REQUEST frame with a source tag g1 which is sent from the node G1. The node G3 then broadcasts the ARP REQUEST frame to the tree T1 and the port on the downlink side. The frame to be transmitted to the downlink side is removed of the source tag before being sent out. At this time, no operation is made to add or remove the tag to or from the frame to be transmitted to the uplink side. As a result, the ARP REQUEST frame removed of the source tag is transferred through the downlink port to the client C3.

The node G3 learns that the client C1 having the MAC address c1 is connected to the downlink side of the node G1 having the expansion tag address g1. Thus, when a frame addressed to c1 is received from the downlink side from then on, the expansion forwarding tag g1 is added to the frame to transfer to the root port side of the tree T1.

The client C3 receives the ARP REQUEST frame transferred by the node G3 but discards this frame because the requested IP address does not match the own IP address.

The node G4 receives through the uplink port the ARP REQUEST frame with the source tag g1 sent from the node G1. The node G4 then broadcasts the ARP REQUEST frame to the tree T1 and the port on the downlink side. The frame to be transmitted to the downlink side is removed of the source tag before being sent out. At this time, no operation is made to add or remove the tag to or from the frame to be transmitted to the uplink side. As a result, the frame is transferred through the uplink port to the node G2 along the tree T1 without any tag operation performed.

The node G4 learns that the client C1 having the MAC address c1 is connected to the downlink side of the node G1 having the expansion tag address g1. Thus, when a frame addressed to c1 is received from the downlink side from then on, the expansion forwarding tag g1 is added to the frame to transfer to the root port side of the tree T1.

The node G2 receives through the uplink port the ARP REQUEST frame with the source tag g1 which is sent from the node G4. The node G2 then broadcasts the ARP REQUEST frame to the tree T1 and the port on the downlink side. The frame to be transmitted to the downlink side is removed of the source tag before being sent out. At this time, no operation is made to add or remove the tag to or from the frame to be transmitted to the uplink side. As a result, the main signal frame removed of the source tag is transferred through the downlink port to the client C2.

The node G2 learns that the client C1 having the MAC address c1 is connected to the downlink side of the node G1 having the expansion tag address g1. Thus, when a frame addressed to c1 is received from the downlink side from then on, the expansion forwarding tag g1 is added to the frame to transfer to the root port side of the tree T1.

The client C2 receives the ARP REQUEST frame transferred by the node G2 and confirms that the requested IP address matches the own IP address. The client C2 then generates an ARP REPLY frame with a destination MAC address of c1 and a source MAC address of c2 and sends the frame to the node G2. This frame is referred to as the ARP REPLY frame in the following description.

The node G2 receives the frame through the downlink port. When a tag to be added and an output port are searched for with the destination MAC used as a key, it is seen by the previous learning operation that the expansion forwarding tag g1 may be added to the frame addressed to the destination MAC address c1 to transfer to the root port side of the tree T1. Therefore, the node G2 adds the expansion forwarding tag g1 to the frame and transfer to the node G4.

Because a frame having an unlearnt source MAC c2 added has arrived from the downlink side, the node G2 learns that the MAC address c2 is connected to the port on the downlink side. A learning frame is not transmitted at this time, because the setting to disable the transmission of learning frames is being used.

The node G4 receives through the uplink port the ARP REPLY frame with the destination expansion tag g1 sent from the node G2. And, the output port is retrieved with the destination expansion tag g1 used as a key. Then, because the output port for the expansion forwarding tag g1 is always set to the root port side of the spanning tree T1, the node G4 transfers the frame received through the uplink port toward the node G1. At this time, no change is made to the frame. Therefore, a tag is not added or removed, and the MAC address is not rewritten.

The node G1 receives through the uplink port the ARP REPLY frame with the destination expansion tag g1 which is sent from the node G4. And, the address g1 indicated on the destination expansion tag is the own address, so that this expansion tag is removed, and the output port on the downlink side is searched for with the destination MAC c1 used as a key. Then, it is seen by the previous learning operation which port of the downlink side the node having the destination MAC address c1 is connected to. Therefore, the node G1 transfers the frame to the downlink port through which the client C1 is connected.

The client C1 receives the main signal frame addressed to the destination MAC address c1 which is transferred by the node G1. Since the destination MAC address matches the own MAC address c1, the client C1 receives this frame and passes it to the ARP module, which in turn records the MAC address corresponding to the destination IP address in the ARP table.

This completes the description of the communication sequence between the clients C1 and C2, which is performed before the transmission of PING REQUEST from the client C1 to the client C2 in the sequence N212 and which involves two steps: the client C1 transmits ARP REQUEST to the client C2, and the client C2 responds to the client C1 with ARP REPLY.

The sequence N212 is a communication sequence consisting of the exchange of ICMP ECHO REQUEST (PING REQUEST) and ICMP ECHO REPLY (PING REPLY) between the clients C1 and C2, which is performed under the following conditions: a long time has not lapsed since the exchange of ARP REQUEST and ARP REPLY between the clients C1 and C2; the address g1 of the node to which the client C1 belongs, corresponding to the MAC address c1 of the client C1, has been learnt by the nodes G2 to G4; the output port for the MAC address c1 of the client C1 has already been learnt by the node G1; and the output port for the MAC address c2 of the client C2 has already been learnt by the node G4. It should be noted that the address g2 of the node to which client C2 belongs, corresponding to the MAC address c2 of the client C2, has not been learnt by the nodes G1 to G3 yet.

First, the client C1 sends to the client C2 an ICMP ECHO REQUEST frame with a destination MAC of c2 and a source MAC of c1. This frame is referred to as the main signal frame in the following description.

The node G1 receives the main signal frame through the downlink port. The destination MAC is used as a key to search for a tag to be added and an output port, but the search does not make a hit because the learning of MAC address c2 has not completed. The node G1, therefore, adds the source tag g1 to the main signal frame and broadcasts the frame along the tree T1 according to the first embodiment, shown in Fig. 34, formed with the own node as the root node. As a result, the main signal frame, in the format of source tagged Ethernet (R) frame 62A shown in Fig. 41, is transferred to both the nodes G3 and G4.

The node G3 receives through the uplink port the main signal frame addressed to the destination MAC c2 sent from the node G1. And, the output port is searched for with the destination MAC c2 used as a key, but the search does not make a hit because the learning on the MAC address c2 has not completed. Therefore, the node G3 broadcasts the main signal frame to the tree T1 and the port on the downlink side. The frame to be transmitted to the downlink side is removed of the source tag before being sent out. At this time, no operation is made to add or remove the tag to or from the frame to be transmitted to the uplink side. As a result, the main signal frame removed of source tag g1 is transferred through the downlink port to the client C3.

The client C3 receives the main signal frame addressed to the destination MAC c2 which is transferred by the node G3 but discards this frame because the destination MAC address does not match the own MAC address c3.

The node G4 receives through the uplink port the main signal frame with the source tag g1 and the destination MAC c2 sent from the node G1. Since the main signal frame has a source tag added, the node G4 broadcasts the frame along the tree T1 and to the port on the downlink side without performing a search using the destination MAC c2 as a key. The frame to be transmitted to the downlink side is removed of the source tag before being sent out. At this time, no operation is made to add or remove the tag to or from the frame to be transmitted to the uplink side. As a result, the main signal frame is transferred through the uplink port to the node G2 along the tree T1 without any addition or removal of a tag.

The node G2 receives through the uplink port the main signal frame addressed to the destination MAC c2 sent from the node G4. And, the output port on the downlink side is retrieved with the destination MAC c2 used as a key. Then, it is seen by the previous learning operation which port of the downlink side the node having the destination MAC address c2 is connected to. Therefore, the node G2 removes the source tag g1 from the frame and transfers the resultant frame to the downlink port through which the client C2 is connected.

The client C2 receives the main signal frame with the destination MAC address c2 which is transferred by the node G2. The client C2 passes this frame to an application or another program because the destination MAC address matches the own MAC address c2.

In this example, the frame sent from the client C1 is assumed to be an ICMP ECHO REQUEST, so that the basic software on the client C2 creates an ICMP ECHO REPLY frame with the destination MAC address c1 and the source MAC address c2 and sends the frame to the node G2. This frame is referred to as the main signal frame in the following description.

The node G2 receives the frame through the downlink port. When a tag to be added and an output port are searched for with the destination MAC used as a key, it is seen by the learning operation of the sequence N211 that the expansion forwarding tag g1 may be added to the frame addressed to the destination MAC address c1 to transfer to the root port side of the tree T1. Therefore, the node G2 adds the expansion forwarding tag g1 to the frame and transfers the resultant frame to the node G4.

The node G4 receives through the uplink port the main signal frame with the destination expansion tag g1 sent from the node G2. And, the output port is retrieved with the destination expansion tag g1 used as a key. Then, because the output port for the expansion forwarding tag g1 is always set to the root port side of the spanning tree T1, the node G4 transfers the frame received through the uplink port toward the node G1. At this time, no change is made to the frame. Therefore, a tag is not added or removed, and the MAC address is not rewritten.

The node G1 receives through the uplink port the main signal frame with the destination expansion tag g1 which is sent from the node G4. Since the address g1 indicated by the destination expansion tag is the own address, this expansion tag is removed, and the output port on the downlink side is searched for with the destination MAC c1 used as a key. Then, it is seen by the learning operation of the sequence N211 which port of the downlink side the node having the destination MAC address c1 is connected to. Therefore, the node G1 transfers the frame to the downlink port through which the client C1 is connected.

The client C1 receives the main signal frame addressed to the destination MAC address c1 which is transferred by the node G1. The client C1 passes this frame to an application or another program because the destination MAC address matches the own MAC address c1. In this example, the frame is passed to the PING program in the basic software, by which the result of the PING command is displayed.

This completes the description of the communication sequence consisting of the exchange of ICMP ECHO REQUEST (PING REQUEST) and ICMP ECHO REPLY (PING REPLY) between the clients C1 and C2, which is performed under the following conditions: a long time has not lapsed since the exchange of ARP REQUEST and ARP REPLY between the clients C1 and C2 in the sequence of N211; the address g1 of the node to which the client C1 belongs, corresponding to the MAC address c1 of the client C1, has been learnt by the nodes G2 to G4; the output port for the MAC address c1 of the client C1 has already been learnt by the node G1; and the output port for the MAC address c2 of the client C2 has already been learnt by the node G4.

The sequence N213 represents a communication sequence consisting of the transmission of an ARP REQUEST from the client C2 to C3, which takes place at a point in time when a long time has not lapsed since the completion of the sequences N211 and N212, that is, before the aging process is performed.

First, the client C2 sends to the client C3 an ARP REQUEST frame with a destination MAC for broadcast ("ALL F") and a source MAC of c2.

The node G2 receives the frame through the downlink port. Since the destination MAC is a broadcast address, the node G2 adds the source tag g2 to the ARP REQUEST frame and broadcasts the frame along the tree T2 according to the first embodiment, shown in Fig. 35, formed with the own node as the root node. As a result, the main signal frame is transferred to both the node G3 and the node G4.

The node G4 receives through the uplink port the ARP REQUEST frame with the source tag g2 sent from the node G2. The node G4 then broadcasts the ARP REQUEST frame to the tree T2 and the port on the downlink side. The frame to be transmitted to the downlink side is removed of the source tag before being sent out. At this time, no operation is made to add or remove the tag to or from the frame to be transmitted to the uplink side. However, the ARP REQUEST frame is not transferred beyond the node G4 because the tree T2 is truncated at the node G4.

At this time, the node G4 learns that the client C2 having the MAC address c2 is connected to the downlink side of the node G2 having the expansion tag address g2. Thus, when the node G4 receives a frame addressed to c2 from the downlink side from then on, it adds the expansion forwarding tag g2 to the frame to transfer to the root port side of the tree T2.

The node G3 receives through the uplink port the ARP REQUEST frame with the source expansion tag g2 sent from the node G2. The node G3 then broadcasts the ARP REQUEST frame to the tree T2 and the port on the downlink side. The frame to be transmitted to the downlink side is removed of the source tag before being sent out. At this time, no operation is made to add or remove the tag to or from the frame to be transmitted to the uplink side. As a result, the ARP REQUEST frame is transferred through the uplink port to the node G1 without any tag operation performed and is also transferred through the downlink port to the node C3 with the source tag removed.

At this time, the node G3 learns that the client C2 having the MAC address c2 is connected to the downlink side of the node G2 having the expansion tag address g2. Thus, when the node G3 receives a frame addressed to c2 from the downlink side from then on, it adds the expansion forwarding tag g2 to the frame to transfer to the root port side of the tree T2.

The client C3 receives the ARP REQUEST frame transferred by the node G3 and confirms that the requested IP address matches the own IP address. The client C3 then generates an ARP REPLY frame with a destination MAC address of c2 and a source MAC address of c3 and sends the frame to the node G2.

The ARP REPLY frame is added the destination tag g2 at the nodeG3 and reaches the node G2 via the tree T2. It then is removed of the destination tag at the node G2 and is transferred through the downlink port to the client C2.

The node G1 receives through the uplink port the ARP REQUEST frame with the source tag g2 which is sent from the node G3. The node G1 then broadcasts the ARP REQUEST frame to the tree T2 and the port on the downlink side. The frame to be transmitted to the downlink side is removed of the source tag before being sent out. At this time, no operation is made to add or remove the tag to or from the frame to be transmitted to the uplink side. As a result, the main signal frame removed of the source tag is transferred through the downlink port to the client C1.

At this time, the node G1 learns that the client C2 having the MAC address c2 is connected to the downlink side of the node G2 having the expansion tag address g2. Thus, when the node G1 receives a frame addressed to c2 from the downlink side from then on, it adds the expansion forwarding tag g2 to the frame to transfer to the root port side of the tree T2.

The client C1 receives the ARP REQUEST frame transferred by the node G2 but terminates the processing because the requested IP address does not match the own IP address.

This completes the description of the communication sequence consisting of the transmission of an ARP REQUEST from the client C2 to C3, which takes place at a point in time when a long time has not lapsed since the completion of the sequences N211 and N212, that is, before the aging process is performed.

The sequence N214 represents a communication sequence consisting of the transmission of ICMP ECHO REQUEST (PING REQUEST) frame from the client C1 to C2 and the transmission of ICMP ECHO REPLY (PING REPLY) in reply from the client C2 to C1, which takes place at a point in time when a long time has not lapsed since the completion of the sequences N211 to N213, that is, before the aging process is performed.

In the description of the sequence N214, it is assumed that the address g1 of the node to which the client C1 belongs, corresponding to the MAC address c1 of the client C1, has been learnt by the nodes G2 to G4; that the output port for the MAC address c1 of the client C1 has already been learnt by the node G1; that the output port for the MAC address c2 of the client C2 has already been learnt by the node G4; and that the address g2 of the node to which the client C2 belongs, corresponding to the MAC address c2 of the client C2, has been learnt by each of the nodes G1 to G3.

First, the client C1 sends to the client C2 an ICMP ECHO REQUEST frame with a destination MAC of c2 and a source MAC of c1. This frame is referred to as the main signal frame in the following description.

The node G1 receives the main signal frame through the downlink port. When a tag to be added and an output port are searched for with the destination MAC used as a key, it is seen by the learning operation that the expansion forwarding tag g2 may be added to the frame of the destination MAC address c2 to transfer to the root port side of the tree T2. Therefore, the node G1 adds the expansion forwarding tag g2 to the frame and transfers the resultant frame to the node G3.

The node G3 receives through the uplink port the main signal frame with the destination expansion tag g2 which is sent from the node G1. And, the output port is retrieved with the destination expansion tag g2 used as a key. Then, the node G3 transfers the frame received through the uplink port toward the node G2 because the output port for the expansion forwarding tag g2 is always set to the root port side of the spanning tree T2. At this time, no change is made to the frame. Therefore, a tag is not added or removed, and the MAC address is not rewritten.

The node G2 receives through the uplink port the main signal frame with the destination expansion tag g2 which is sent from the node G3. Since the address g2 indicated by the destination expansion tag is the own address, this expansion tag is removed, and the output port on the downlink side is searched for with the destination MAC c2 used as a key. Then, it is seen by the previous learning operation which port of the downlink side the node having the destination MAC address c2 is connected to. Therefore, the node G2 transfers the frame to the downlink port through which the client C2 is connected.

The client C2 receives the main signal frame with the destination MAC address c2 which is transferred by the node G2. The client C2 passes this frame to an application or another program because the destination MAC address matches the own MAC address c2.

In this example, the frame sent from the client C1 is assumed to be an ICMP ECHO REQUEST, so that the basic software on the client C2 creates an ICMP ECHO REPLY frame with the destination MAC address c1 and the source MAC address c2 and sends the frame to the node G2. This frame is referred to as the main signal frame in the following description.

The node G2 receives the frame through the downlink port. When a tag to be added and an output port are searched for with the destination MAC used as a key, it is seen that the expansion forwarding tag g1 may be added to the frame addressed to the destination MAC address c1 to transfer to the root port side of the tree T1. Therefore, the node G2 adds the expansion forwarding tag g1 to the frame and transfers the resultant frame to the node G4.

The node G4 receives through the uplink port the main signal frame with the destination expansion tag g1 sent from the node G2. And, the output port is retrieved with the destination expansion tag g1 used as a key. Then, because the output port for the expansion forwarding tag g1 is always set to the root port side of the spanning tree T1, the node G4 transfers the frame received through the uplink port toward the node G1. At this time, no change is made to the frame. Therefore, a tag is not added or removed, and the MAC address is not rewritten.

The node G1 receives through the uplink port the main signal frame with the destination expansion tag g1 which is sent from the node G4. Since the address g1 indicated by the destination expansion tag is the own address, this expansion tag is removed, and the output port on the downlink side is searched for with the destination MAC c1 used as a key. Then, it is seen by the previous learning operation which port of the downlink side the node having the destination MAC address c1 is connected to. Therefore, the node G1 transfers the frame to the downlink port through which the client C1 is connected.

The client C1 receives the main signal frame with the destination MAC address c1 which is transferred by the node G1. The client C1 passes this frame to an application or another program because the destination MAC address matches the own MAC address c1. In this example, the frame is passed to the PING program in the basic software, by which the result of the PING command is displayed.

This completes the description of the communication sequence between the clients C1 and C2, which takes place under the following conditions: a long time has not lapsed since the completion of the previous communication between the clients C1 and C2; and MAC address c1 of the client C1 and address g1 of a node to which the client C1 belongs, as well as MAC address c2 of the client C2 and address g2 of node to which client C2 belongs, have already been learnt by the nodes G1 to G4.

The node G4 in this operation example can be replaced with a node E4 which has a simplified structure of the node G4. The simplified node E4 differs from the node G4 on the following four points: (1) not having the memory duplicate information 3013, (2) not having the MAC forwarding table memory 2043, (3) not having the learning management program 302 and the timer 306, and (4) not sending or receiving the learning frame.

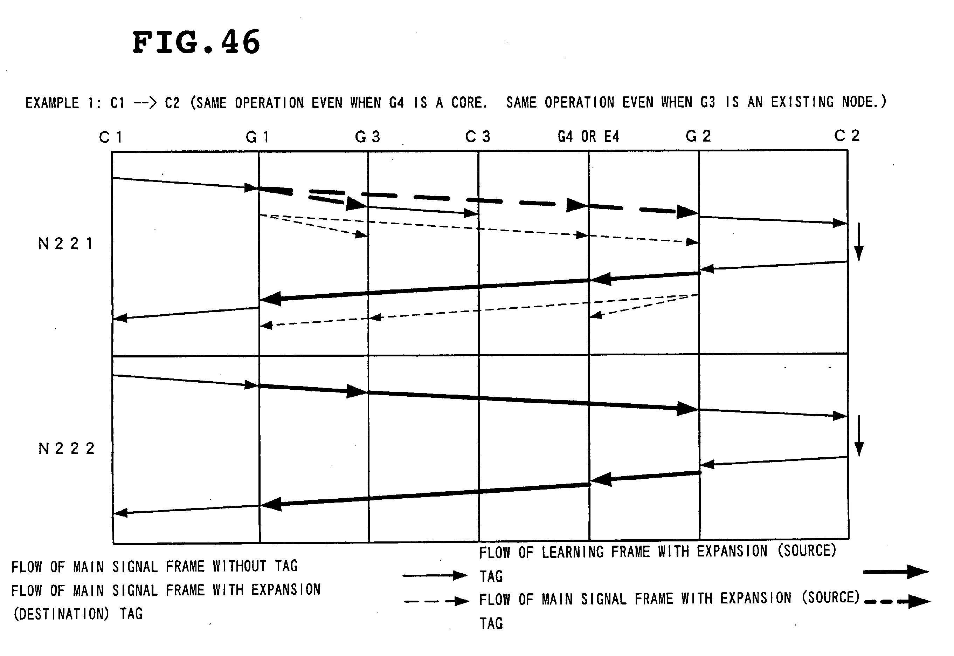

Then, a second operation example of the second embodiment will be described with reference to Fig. 46.

In this and subsequent sequence diagrams, the sequence of a main signal frame with no expansion tag added is indicated by a thin solid line. The sequence of a main signal frame with an expansion tag (forwarding tag) is indicated by a thick solid line. The sequence of a main signal frame with an expansion tag (source tag) is indicated by a thick broken line. The sequence of a learning operation with an expansion tag (source tag) is indicated by a thin broken line.

Fig. 46 is a sequence diagram showing the exchange of frames between nodes and clients, in which the client C1 sends PING REQUEST to the client C2 and the client C2 sends back PING REPLY to the client C1.

This operation example differs from the one in the first embodiment shown in Fig. 45 in that the nodes G1 to G4 are configured to transmit learning frames. In other words, this operation example combines a learning operation based on source tags as described in the first embodiment and a learning operation based on learning frames as described in the first embodiment.

The sequence N221 is a communication sequence between the clients C1 and C2, which is performed before the transmission of PING REQUEST from the client C1 to the client C2 in the sequence N222, and which involves two steps: the client C1 transmits ARP REQUEST to the client C2, and the client C2 responds to the client C1 with ARP REPLY.

At the start of the sequence N221, the communication status is as follows: a network operation has just started or an adequately long time has lapsed since the termination of the previous communication between the clients C1 and C2; MAC address c1 of the client C1 and address g1 of a node to which the client C1 belongs, as well as MAC address c2 of the client C2 and address g2 of node to which client C2 belongs, have not been learnt by the nodes G1 to G4; the ARP cache of each of the nodes C1, C2, and C3 has been cleared; and an ARP resolution is required before issuing a PING.

First, the client C1 sends to the client C2 an ARP REQUEST frame with a destination MAC for broadcast (ALL F) and a source MAC of c1. This frame is referred to as the ARP request frame in the description below.

The node G1 receives the frame through the downlink port. Since the destination MAC is a broadcast address, the node G1 adds the source tag g1 to the ARP REQUEST frame and broadcasts the frame along the tree T1 according to the first embodiment, shown in Fig. 34, formed with the own node as the root node. As a result, the ARP REQUEST frame, in the format of source tagged Ethernet (R) frame 62A shown in Fig. 41, is transferred to both the nodes G3 and G4.

Because a frame having an unlearnt source MAC c1 added has arrived from the downlink side, the node G1 learns that the MAC address c1 is connected to the port on the downlink side and also broadcasts the learning frame with the address g1 of the node G1 added as an expansion tag address to the uplink side along the tree T1. As a result, the learning frame is transferred to both the node G3 and the node G4.

The node G3 receives through the uplink port the ARP REQUEST frame with a source tag g1 which is sent from the node G1. The node G3 then broadcasts the ARP REQUEST frame to the tree T1 and the port on the downlink side. The frame to be transmitted to the downlink side is removed of the source tag before being sent out. At this time, no operation is made to add or remove the tag to or from the frame to be transmitted to the uplink side. As a result, the ARP REQUEST frame removed of the source tag is transferred through the downlink port to the client C3.

The node G3 learns that the client C1 having the MAC address c1 is connected to the downlink side of the node G1 having the expansion tag address g1. Thus, when a frame addressed to c1 is received from the downlink side from then on, the expansion forwarding tag g1 is added to the frame to transfer to the root port side of the tree T1.

On receiving from the uplink side a learning frame sent by the node G1, the node G3 attempts to learn that the client C1 having the MAC address c1 is connected to the downlink side of the node G1 having the expansion tag address g1, but does not initiate a new leaning operation because the arrival of an ARP REQUEST with a source tag suggests the completion of this operation. Instead, the node G3 broadcasts the learning frame received to the uplink side along the tree T1. However, the leaning frame is not transferred beyond the node G3 because the tree T1 is truncated at the node G3.

The client C3 receives the ARP REQUEST frame transferred by the node G3 but discards this frame because the requested IP address does not match the own IP address.

The node G4 receives through the uplink port the ARP REQUEST frame with the source tag g1 sent from the node G1. The node G4 then broadcasts the ARP REQUEST frame to the tree T1 and the port on the downlink side. The frame to be transmitted to the downlink side is removed of the source tag before being sent out. At this time, no operation is made to add or remove the tag to or from the frame to be transmitted to the uplink side. As a result, the frame is transferred through the uplink port to the node G2 along the tree T1 without any tag operation performed.

The node G4 learns that the client C1 having the MAC address c1 is connected to the downlink side of the node G1 having the expansion tag address g1. Thus, when a frame addressed to c1 is received from the downlink side from then on, the expansion forwarding tag g1 is added to the frame to transfer to the root port side of the tree T1.

On receiving from the uplink side a learning frame sent by the node G1, the node G4 attempts to learn that the client C1 having the MAC address c1 is connected to the downlink side of the node G1 having the expansion tag address g1, but does not initiate a new leaning operation because the arrival of an ARP REQUEST frame with a source tag suggests the completion of this operation. Instead, the node G4 broadcasts the learning frame received to the uplink side along the tree T1. As a result, the learning frame is transferred to the node G2.

The node G2 receives through the uplink port the ARP REQUEST frame with the source tag g1 which is sent from the node G4. The node G2 then broadcasts the ARP REQUEST frame to the tree T1 and the port on the downlink side. The frame to be transmitted to the downlink side is removed of the source tag before being sent out. At this time, no operation is made to add or remove the tag to or from the frame to be transmitted to the uplink side. As a result, the main signal frame removed of the source tag is transferred through the downlink port to the client C2.

The node G2 learns that the client C1 having the MAC address c1 is connected to the downlink side of the node G1 having the expansion tag address g1. Thus, when a frame addressed to c1 is received from the downlink side from then on, the expansion forwarding tag g1 is added to the frame to transfer to the root port side of the tree T1.

On receiving from the uplink side a learning frame sent by the node G4, the node G2 attempts to learn that the client C1 having the MAC address c1 is connected to the downlink side of the node G1 having the expansion tag address g1, but does not initiate a new leaning operation because the arrival of an ARP REQUEST frame with a source tag suggests the completion of this operation. Instead, the node G4 broadcasts the learning frame received to the uplink side along the tree T1. However, the leaning frame is not transferred beyond the node G2 because the tree T1 is truncated at the node G2.

The client C2 receives the ARP REQUEST frame transferred by the node G2 and confirms that the requested IP address matches the own IP address. The client C2 then generates an ARP REPLY frame with a destination MAC address of c1 and a source MAC address of c2 and sends the frame to the node G2. This frame is referred to as the ARP REPLY frame in the description below.

The node G2 receives the frame through the downlink port. When a tag to be added and an output port are searched for with the destination MAC used as a key, it is seen by the previous learning operation that the expansion forwarding tag g1 may be added to the frame addressed to the destination MAC address c1 to transfer to the root port side of the tree T1. Therefore, the node G2 adds the expansion forwarding tag g1 to the frame and transfer to the node G4.

At the same time, the node G2 learns that the MAC address c2 is connected to the port on the downlink side because a frame having an unlearnt source MAC address c2 added has arrived from the downlink side and, at the same time, broadcasts the learning frame having the source tag address g2 added to the uplink side along the tree T2. As a result, the learning frame is transferred to both the node G3 and the node G4.

The node G4 receives through the uplink port the ARP REPLY frame with the destination expansion tag g1 sent from the node G2. And, the output port is retrieved with the destination expansion tag g1 used as a key. Then, because the output port for the expansion forwarding tag g1 is always set to the root port side of the spanning tree T1, the node G4 transfers the frame received through the uplink port toward the node G1. At this time, no change is made to the frame. Therefore, a tag is not added or removed, and the MAC address is not rewritten.

The node G4 receives the learning frame sent by the node G2 from the uplink side and learns that the client C2 having the MAC address c2 is connected to the downlink side of the node G2 having the expansion tag address g2. Thus, when the node G4 receives a frame addressed to c2 from the downlink side from then on, it adds the expansion forwarding tag g2 to the frame to transfer to the root port side of the tree T2. At the same time, the received learning frame is broadcasted toward the uplink side along the tree T2. However, the leaning frame is not transferred beyond the node G4 because the tree T2 is truncated at the node G4.

The node G3 receives the learning frame sent by the node G2 from the uplink side and learns that the client C2 having the MAC address c2 is connected to the downlink side of the node G2 having the expansion tag address g2. Thus, when the node G3 receives a frame addressed to c2 from the downlink side from then on, it adds the expansion forwarding tag g2 to the frame to transfer to the root port side of the tree T2. At the same time, the received learning frame is broadcast toward the uplink side along the tree T2. As a result, the learning frame is transferred to the node G1.

The node G1 receives through the uplink port the ARP REPLY frame with the destination expansion tag g1 which is sent from the node G4. Since the address g1 indicated by the destination expansion tag is the own address, this expansion tag is removed, and the output port on the downlink side is searched for with the destination MAC c1 used as a key. Then, it is seen by the previous learning operation which port of the downlink side the node having the destination MAC address c1 is connected to. Therefore, the node G1 transfers the frame to the downlink port through which the client C1 is connected.

The node G1 receives the learning frame sent by the node G3 from the uplink side and learns that the client C2 having the MAC address c2 is connected to the downlink side of the node G2 having the expansion tag address g2. Thus, when the node G1 receives a frame addressed to c2 from the downlink side from then on, it adds the expansion forwarding tag g2 to the frame to transfer to the root port side of the tree T2. At the same time, the received learning frame is broadcast toward the uplink side along the tree T1. However, the leaning frame is not transferred beyond the node G1 because the tree T2 is truncated at the node G1.

The client C1 receives the main signal frame with the destination MAC address c1 which is transferred by the node G1. Since the destination MAC address matches the own MAC address c1, the client C1 receives this frame and passes it to the ARP module, which in turn records the MAC address corresponding to the destination IP address in the ARP table.

This completes the description of the communication sequence between the clients C1 and C2, which is performed before the transmission of PING REQUEST from the client C1 to the client C2 in the sequence N222 and which involves two steps: the client C1 transmits ARP REQUEST to the client C2, and the client C2 responds to the client C1 with ARP REPLY.

In the series of actions in the sequence N221, the address g1 of the node to which the client C1 belongs, corresponding to the MAC address c1 of the client C1, has been learnt by the nodes G2 to G4; the output port for the MAC address c1 of the client C1 has already been learnt by the node G1; the output port for the MAC address c2 of the client C2 has been learnt by the node G4; and the address g2 of the node to which the client C2 belongs, corresponding to the MAC address c2 of the client C2, has been learnt by each of the nodes G1 to G3. In addition, the ARP (association between IP address and MAC address) for the Client C1 and Client C2 has been stored by the nodes C1 and C2.

The sequence N222 represents a communication sequence consisting of the transmission of ICMP ECHO REQUEST (PING REQUEST) frame from the client C1 to C2 and the transmission of ICMP ECHO REPLY (PING REPLY) in reply from the client C2 to C1, which takes place at a point in time when a long time has not lapsed since the completion of the communication in the sequence N221, that is, before the aging process is performed.

In the description of the sequence N222, it is assumed that the address g1 of the node to which the client C1 belongs, corresponding to the MAC address c1 of the client C1, has been learnt by the nodes G2 to G4, that the output port for the MAC address c1 of the client C1 has already been learnt by the node G1, that the output port for the MAC address c2 of the client C2 has already been learnt by the node G4; and that the address g2 of the node to which the client C2 belongs, corresponding to the MAC address c2 of the client C2, has been learnt by each of the nodes G1 to G3.

First, the client C1 sends to the client C2 an ICMP ECHO REQUEST frame with a destination MAC of c2 and a source MAC of c1. This frame is referred to as the main signal frame in the following description.

The node G1 receives the main signal frame through the downlink port. When a tag to be added and an output port are searched for with the destination MAC used as a key, it is seen by the learning operation that the expansion forwarding tag g2 may be added to the frame of the destination MAC address c2 to transfer to the root port side of the tree T2. Therefore, the node G1 adds the expansion forwarding tag g2 to the frame and transfers the resultant frame to the node G3.

The node G3 receives through the uplink port the main signal frame with the destination expansion tag g2 which is sent from the node G1. And, the output port is retrieved with the destination expansion tag g2 used as a key. Then, the node G3 transfers the frame received through the uplink port toward the node G2 because the output port for the expansion forwarding tag g2 is always set to the root port side of the spanning tree T2. At this time, no change is made to the frame. Therefore, a tag is not added or removed, and the MAC address is not rewritten.

The node G2 receives through the uplink port the main signal frame with the destination expansion tag g2 which is sent from the node G3. Since the address g2 indicated by the destination expansion tag is the own address, this expansion tag is removed, and the output port on the downlink side is searched for with the destination MAC c2 used as a key. Then, it is seen by the previous learning operation which port of the downlink side the node having the destination MAC address c2 is connected to. Therefore, the node G2 transfers the frame to the downlink port through which the client C2 is connected.

The client C2 receives the main signal frame with the destination MAC address c2 which is transferred by the node G2. The client C2 passes this frame to an application or another program because the destination MAC address matches the own MAC address c2.

In this example, the frame sent from the client C1 is assumed to be an ICMP ECHO REQUEST, so that the basic software on the client C2 creates an ICMP ECHO REPLY frame with the destination MAC address c1 and the source MAC address c2 and sends the frame to the node G2. This frame is referred to as the main signal frame in the following description.

The node G2 receives the frame through the downlink port. When a tag to be added and an output port are searched for with the destination MAC used as a key, it is seen that the expansion forwarding tag g1 may be added to the frame with the destination MAC address c1 to transfer to the root port side of the tree T1. Therefore, the node G2 adds the expansion forwarding tag g1 to the frame and transfer to the node G4.

The node G4 receives through the uplink port the main signal frame with the destination expansion tag g1 sent from the node G2. And, the output port is retrieved with the destination expansion tag g1 used as a key. Then, because the output port for the expansion forwarding tag g1 is always set to the root port side of the spanning tree T1, the node G4 transfers the frame received through the uplink port toward the node G1. At this time, no change is made to the frame. Therefore, a tag is not added or removed, and the MAC address is not rewritten.

The node G1 receives through the uplink port the main signal frame with the destination expansion tag g1 which is sent from the node G4. Since the address g1 indicated by the destination expansion tag is the own address, this expansion tag is removed, and the output port on the downlink side is searched for with the destination MAC c1 used as a key. Then, it is seen by the previous learning operation which port of the downlink side the node having the destination MAC address c1 is connected to. Therefore, the node G1 transfers the frame to the downlink port through which the client C1 is connected.

The client C1 receives the main signal frame with the destination MAC address c1 which is transferred by the node G1. The client C1 passes this frame to an application or another program because the destination MAC address matches the own MAC address c1. In this example, the frame is passed to the PING program in the basic software, by which the result of the PING command is displayed.

This completes the description of the communication sequence between the clients C1 and C2, which takes place under the following conditions: a long time has not lapsed since the completion of the previous communication between the clients C1 and C2; and MAC address c1 of the client C1 and address g1 of a node to which the client C1 belongs, as well as MAC address c2 of the client C2 and address g2 of node to which client C2 belongs, have already been learnt by the nodes G1 to G4,

The node G4 in this operation example can be replaced with a node E4 which has a simplified structure of the node G4. The simplified node E4 differs from the node G4 on the following four points: (1) not having the memory duplicate information 3013, (2) not having the MAC forwarding table memory 2043, (3) not having the learning management program 302 and the timer 306, and (4) not sending or receiving the learning frame.

The effects of the second embodiment will now be described.

Conventionally, when an asymmetrical flow which has a different node where the flow passes depending on a direction is flown on a network based on the Ethernet (R), a learning process does not function, a frame reaches the destination but it is also transmitted to unnecessary destinations. Therefore, there were problems that the network became congestion and bandwidth usability became low.

In this embodiment, the learning process can be functioned even when an asymmetrical flow occurs by first inserting a source tag indicating a source of transmission into a frame with a broadcast MAC address, a frame with a multicast MAC address, a frame with a unicast MAC address for which the source of transmission is unknown, and then transmitting such frame with the source tag over a tree, which is formed with the source node for the frame as the root node, along a path opposite to the path through which a frame addressed to that source of transmission is transferred, thereby achieving the alleviation of network congestion and the consequent improvement in bandwidth usability.

Conventionally, when a frame having a tag indicating a destination was transferred, it was necessary to previously set on each node an expansion tag (forwarding tag) to be added according to the destination MAC address.

In this embodiment, the expansion tag to be added can be set on each node according to the destination MAC address by containing tag information in a frame with a source tag, thereby automating the setting operation.

### (Third embodiment)

A third embodiment of the present invention will now be described in detail by referring to the drawings.

The third embodiment of the present invention differs from the second embodiment in that, when the setting to disable the transmission of learning frames is being used as described in the second embodiment, a table search unit 203 determines whether to insert a destination tag containing the hit bit or to insert a source tag, if the association between the MAC address of a client and the address of the node to which the client belongs has already been learnt.

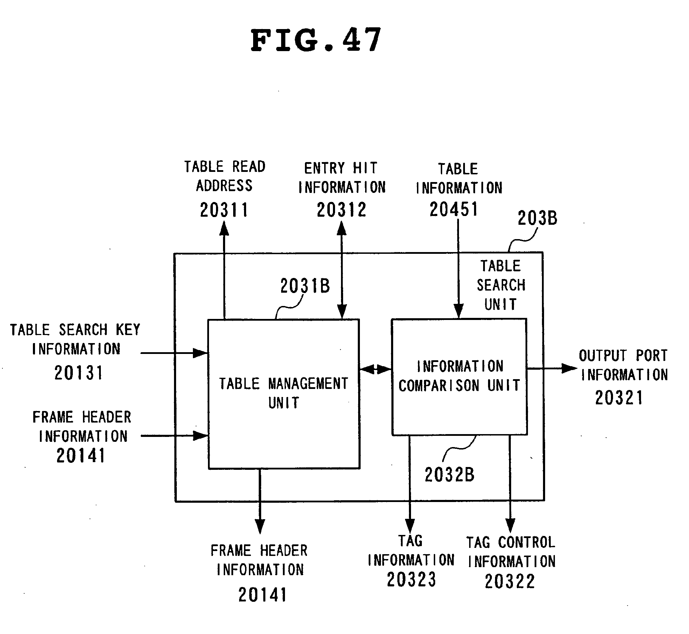

Fig. 47 is a block diagram showing in detail a configuration of the table search unit 203 according to the first embodiment shown in Fig. 10.

On arrival of a unicast frame, if a search of the MAC forwarding table reveals that the association between the MAC address of the destination client, the address of the node to which the client belongs has already been learnt, and hit information is received from the information comparison unit 2032, the table management unit 2031A according to the second embodiment shown in Fig. 42 outputs the entry hit information 20312 and uses the table memory read control circuit 2046 to store the hit reference address as a memory address in the entry for MAC-Tag entry management information in the aging management table 2044 shown in Fig. 19. And, it uses the information comparison unit 2032B to generate tag information 20323 and tag control information 20322 which instruct the frame rewrite unit 205 to add the destination tag obtained by the search of the MAC forward table. A forwarding tag indicating the destination node is then inserted into the input frame by the frame rewrite unit 205. The frame completed by this operation is an Ethernet (R) frame 62 with a forwarding tag as shown in Fig. 5.

In contrast, on arrival of a unicast frame, if a search of the MAC forwarding table reveals that the association between the MAC address of the destination client and the address of the node to which the client belongs has already been learnt, and hit information is received from the information comparison unit 2032, the table management unit 2031B according to the third embodiment shown in Fig. 47 uses the table memory read control circuit 2046 to refer to the aging management table 2044 in Fig. 19 to check if the hit bit is in the hit state or in the no-hit state.

If the hit bit is in the hit state, the table management unit 2031B thereafter operates similarly to the table management unit 2031A; it uses the information comparison unit 2032B to generate tag information 20323 and tag control information 20322 which instruct the frame rewrite unit 205 to add a destination tag obtained by the search of the MAC forward table. The forwarding tag indicating the destination node is then inserted into the input frame by the frame rewrite unit 205. The frame completed by this operation is an Ethernet (R) frame 62 with a forwarding tag as shown in Fig. 5.

If the hit bit is in the no-hit state, the table management unit 2031B thereafter operates differently from the table management unit 2031A; it ignores the destination tag obtained by the search of the MAC forward table and uses the information comparison unit 2032B to generate tag information 20323 and tag control information 20322 which instruct the frame rewrite unit 205 to additionally insert a source tag containing the own node ID into the frame. The source tag indicating the own node ID is then inserted into the input frame by the frame rewrite unit 205. The frame completed by this operation is an Ethernet (R) frame 62 with a source tag as shown in Fig. 41. The information comparison unit 2032B then outputs the entry hit information 20312 and uses the table memory read control circuit 2046 to store the hit reference address as a memory address in the entry for MAC-Tag entry management information in the aging management table 2044 shown in Fig. 19.

In the operation described above, if this entry is retrieved for the first time by the frame search unit 203 since the association between the MAC address of the destination client and the address of the node to which the client belongs was newly learnt, a source tag, instead of a forwarding tag, is additionally inserted into the input frame, and the frame is broadcast along a path within a tree formed with the own node as the root node. By this, each node can learn the association between the MAC address of the client which is the source of the frame and the node to which the client is connected.

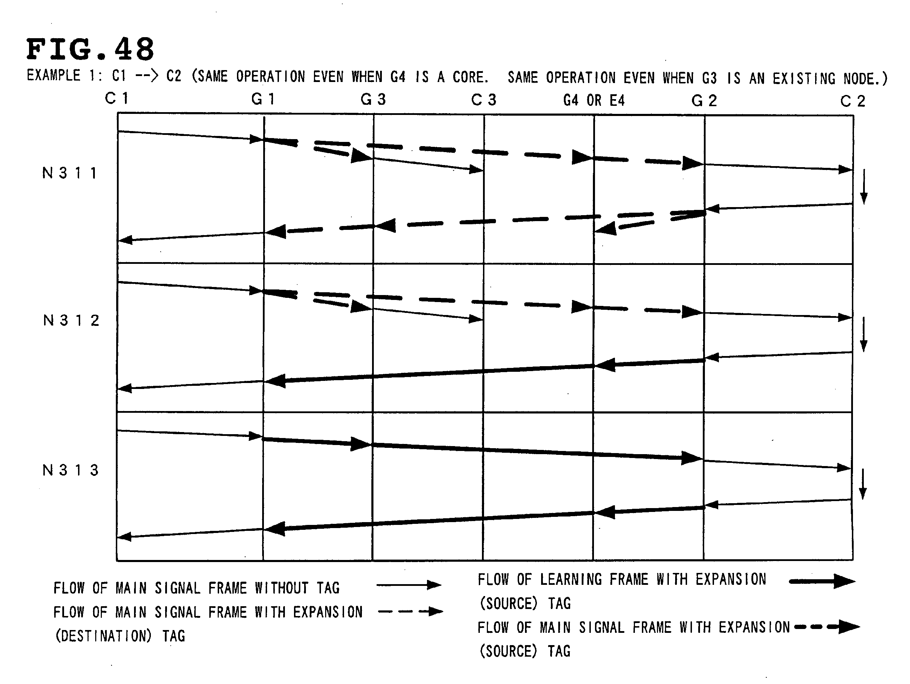

An operation example of the third embodiment will now be described with reference to Fig. 48.

In this and subsequent sequence diagrams, the sequence of a main signal frame with no expansion tag added is indicated by a thin solid line. The sequence of a main signal frame with an expansion tag (forwarding tag) is indicated by a thick solid line. The sequence of a main signal frame with an expansion tag (source tag) is indicated by a thick broken line. The sequence of a learning frame with an expansion tag (source tag) is indicated by a thin broken line.

Fig. 48 is a sequence diagram showing the exchange of frames between nodes and clients, in which the client C1 sends PING REQUEST to the client C2 and the client C2 sends back PING REPLY to the client C1 over the network according to the first embodiment in Fig. 1. It is assumed that the setting is such that no learning frames are transmitted.

The sequence N311 is a communication sequence between the clients C1 and C2, which is performed before the transmission of PING REQUEST from the client C1 to the client C2 in the sequence N312 and which involves two steps: the client C1 transmits ARP REQUEST to the client C2, and the client C2 responds to the client C1 with ARP REPLY.

At the start of the sequence N311, the communication status is as follows: a network operation has just started or an adequately long time has lapsed since the termination of the previous communication between the clients C1 and C2; MAC address c1 of the client C1 and address g1 of a node to which the client C1 belongs, as well as MAC address c2 of the client C2 and address g2 of node to which client C2 belongs, have not been learnt by the nodes G1 to G4; the ARP cache of each of the nodes C1, C2, and C3 has been cleared; and an ARP resolution is required before issuing a PING.

First, the client C1 sends to the client C2 an ARP REQUEST frame with a destination MAC for broadcast (ALL F) and a source MAC of c1. This frame is referred to as the ARP request frame in the description below.

The node G1 receives the frame through the downlink port. Since the destination MAC is a broadcast address, the node G1 adds the source tag g1 to the ARP REQUEST frame and broadcasts the frame along the tree T1 according to the first embodiment, shown in Fig. 34, formed with the own node as the root node. As a result, the ARP REQUEST frame, in the format of source tagged Ethernet (R) frame 62A shown in Fig. 41, is transferred to both the nodes G3 and G4.

Because a frame having an unlearnt source MAC c1 added has arrived from the downlink side, the node G1 learns that the MAC address c1 is connected to the port on the downlink side. A learning frame is not transmitted at this time, because the setting to disable the transmission of learning frames is being used.

The node G3 receives through the uplink port the ARP REQUEST frame with a source tag g1 which is sent from the node G1. The node G3 then broadcasts the ARP REQUEST frame to the tree T1 and the port on the downlink side. The frame to be transmitted to the downlink side is removed of the source tag before being sent out. At this time, no operation is made to add or remove the tag to or from the frame to be transmitted to the uplink side. As a result, the ARP REQUEST frame removed of the source tag is transferred through the downlink port to the client C3.

The node G3 learns that the client C1 having the MAC address c1 is connected to the downlink side of the node G1 having the expansion tag address g1. Thus, when a frame addressed to c1 is received from the downlink side from then on, the expansion forwarding tag g1 is added to the frame to transfer to the root port side of the tree T1.

The client C3 receives the ARP REQUEST frame transferred by the node G3 but discards this frame because the requested IP address does not match the own IP address.

The node G4 receives through the uplink port the ARP REQUEST frame with the source tag g1 sent from the node G1. The node G4 then broadcasts the ARP REQUEST frame to the tree T1 and the port on the downlink side. The frame to be transmitted to the downlink side is removed of the source tag before being sent out. At this time, no operation is made to add or remove the tag to or from the frame to be transmitted to the uplink side. As a result, the frame is transferred through the uplink port to the node G2 along the tree T1 without any tag operation performed.

The node G4 learns that the client C1 having the MAC address c1 is connected to the downlink side of the node G1 having the expansion tag address g1. Thus, when a frame addressed to c1 is received from the downlink side from then on, the expansion forwarding tag g1 is added to the frame to transfer to the root port side of the tree T1.

The node G2 receives through the uplink port the ARP REQUEST frame with the source tag g1 which is sent from the node G4. The node G4 then broadcasts the ARP REQUEST frame to the tree T1 and the port on the downlink side. The frame to be transmitted to the downlink side is removed of the source tag before being sent out. At this time, no operation is made to add or remove the tag to or from the frame to be transmitted to the uplink side. As a result, the main signal frame removed of the source tag is transferred through the downlink port to the client C2.

The node G2 learns that the client C1 having the MAC address c1 is connected to the downlink side of the node G1 having the expansion tag address g1. Thus, when a frame addressed to c1 is received from the downlink side from then on, the expansion forwarding tag g1 is added to the frame to transfer to the root port side of the tree T1.

The client C2 receives the ARP REQUEST frame transferred by the node G2 and confirms that the requested IP address matches the own IP address. The client C2 then generates an ARP REPLY frame with a destination MAC address of c1 and a source MAC address of c2 and sends the frame to the node G2. This frame is referred to as the ARP REPLY frame in the description below.

The node G2 receives the frame through the downlink port. When a tag to be added and an output port are searched for with the destination MAC used as a key, it is seen by the previous learning operation that the expansion forwarding tag g1 may be added to the frame addressed to the destination MAC address c1 to transfer to the root port side of the tree T1. Since a check of the hit bit has revealed that it is in the no-hit state, the node G2 adds the source tag g2, instead of the source tag g1, to the ARP REPLY frame and broadcasts the frame along the tree T2 according to the first embodiment, shown in Fig. 35, formed with the own node as the root node. As a result, the main signal frame, in the format of source tagged Ethernet (R) frame 62A shown in Fig. 41, is transferred to both the nodes G3 and G4. At the same time, the hit bit for the destination c1 is set to the hit state.

The node G4 receives through the uplink port the ARP REPLY frame with the source tag g2 sent from the node G2. The node G4 then broadcasts the ARP REPLY frame to the tree T2 and the port on the downlink side. The frame to be transmitted to the downlink side is removed of the source tag before being sent out. At this time, no operation is made to add or remove the tag to or from the frame to be transmitted to the uplink side. However, the ARP REPLY frame is not transferred beyond the node G4 because the tree T2 is truncated at the node G4.

At this time, the node G4 learns that the client C2 having the MAC address c2 is connected to the downlink side of the node G2 having the expansion tag address g2. Thus, when the node G4 receives a frame addressed to c2 from the downlink side from then on, it adds the expansion forwarding tag g2 to the frame to transfer to the root port side of the tree T2.

The node G3 receives through the uplink port the ARP REPLY frame with the source tag g2 sent from the node G2. The node G3 then broadcasts the ARP REPLY frame to the tree T2 and the port on the downlink side. The frame to be transmitted to the downlink side is removed of the source tag before being sent out. At this time, no operation is made to add or remove the tag to or from the frame to be transmitted to the uplink side. As a result, the ARP REPLY frame is transferred through the uplink port to the node G1 without any tag operation performed and is also transferred through the downlink port to the Client C3 with the source tag removed.

At this time, the node G3 learns that the client C2 having the MAC address c2 is connected to the downlink side of the node G2 having the expansion tag address g2. Thus, when the node G3 receives a frame addressed to c2 from the downlink side from then on, it adds the expansion forwarding tag g2 to the frame to transfer to the root port side of the tree T2.

The client C3 attempts to receive the ARP REPLY frame which is transferred by the node G3 but discards this frame because the destination MAC address g1 does not match the own node MAC address g3.

The node G1 receives through the uplink port the ARP REPLY frame with the source tag g2 sent from the node G3. The node G1 then broadcasts the ARP REPLY frame to the tree T2 and the port on the downlink side. The frame to be transmitted to the downlink side is removed of the source tag before being sent out. At this time, no operation is made to add or remove the tag to or from the frame to be transmitted to the uplink side. As a result, the main signal frame removed of the source tag is transferred through the downlink port to the client C1.

At this time, the node G1 learns that the client C2 having the MAC address c2 is connected to the downlink side of the node G2 having the expansion tag address g2. Thus, when the node G1 receives a frame addressed to c2 from the downlink side from then on, it adds the expansion forwarding tag g2 to the frame to transfer to the root port side of the tree T2.

The client C1 receives the main signal frame with the destination MAC address c1 which is transferred by the node G1. Since the destination MAC address matches the own MAC address c1, the client C1 receives this frame and passes it to the ARP module, which in turn records the MAC address corresponding to the destination IP address in the ARP table.

This completes the description of the communication sequence between the clients C1 and C2, which is performed before the transmission of PING REQUEST from the client C1 to the client C2 in the sequence N312, and which involves two steps: the client C1 transmits ARP REQUEST to the client C2, and the client C2 responds to the client C1 with ARP REPLY.

The sequence N312 is a communication sequence consisting of the exchange of ICMP ECHO REQUEST (PING REQUEST) and ICMP ECHO REPLY (PING REPLY) between the clients C1 and C2, which is performed under the following conditions: a long time has not lapsed since the exchange of ARP REQUEST and ARP REPLY between the clients C1 and C2 in the sequence N311; the address g1 of the node to which the client C1 belongs, corresponding to the MAC address c1 of the client C1, has been learnt by the nodes G2 to G4; the output port for the MAC address c1 of the client C1 has already been learnt by the node G1; the output port for the MAC address c2 of the client C2 has already been learnt by the node G4; and the address g2 of the node to which the client C2 belongs, corresponding to the MAC address c2 of the client C2, has been learnt.

The node G1 has the hit bit for the MAC address c2 set to "no-hit," while the node G2 has the hit bit for the MAC address c1 set to "hit."

First, the client C1 sends to the client C2 an ICMP ECHO REQUEST frame with a destination MAC of c2 and a source MAC of c1. This frame is referred to as the main signal frame in the following description.

The node G1 receives the frame through the downlink port. When a tag to be added and an output port are searched for with the destination MAC used as a key, it is seen by the previous learning operation that the expansion forwarding tag g2 may be added to the frame with a destination MAC address of c2 to transfer to the root port side of the tree T2. Since a check of the hit bit has revealed that it is in the no-hit state, the node G1 adds the source tag g1, instead of the expansion forwarding tag g2, to the main signal frame and broadcasts the frame along the tree T1 according to the first embodiment, shown in Fig. 34, formed with the own node as the root node. As a result, the main signal frame, in the format of source tagged Ethernet (R) frame 62A shown in Fig. 41, is transferred to both the nodes G3 and G4. At the same time, the hit bit for the destination c2 is set to the hit state.

The node G3 receives through the uplink port the main signal frame addressed to the destination MAC c2 sent from the node G1. And, the output port is searched for with the destination MAC c2 used as a key, but the search does not make a hit because the learning on the MAC address c2 has not completed. Therefore, the node G3 broadcasts the main signal frame to the tree T1 and the port on the downlink side. The frame to be transmitted to the downlink side is removed of the source tag before being sent out. At this time, no operation is made to add or remove the tag to or from the frame to be transmitted to the uplink side. As a result, the main signal frame removed of source tag g1 is transferred through the downlink port to the client C3.

The client C3 receives the main signal frame addressed to the destination MAC c2 which is transferred by the node G3 but discards this frame because the destination MAC address does not match own MAC address c3.

The node G4 receives through the uplink port the main signal frame with the source tag g1 and the destination MAC c2 sent from the node G1. Since the main signal frame has a source tag added, the node G4 broadcasts the frame along the tree T1 and to the port on the downlink side without performing a search using the destination MAC c2 as a key. The frame to be transmitted to the downlink side is removed of the source tag before being sent out. At this time, no operation is made to add or remove the tag to or from the frame to be transmitted to the uplink side. As a result, the main signal frame is transferred through the uplink port to the node G2 along the tree T1 without any addition or removal of a tag.

The node G2 receives through the uplink port the main signal frame addressed to the destination MAC c2 sent from the node G4. And, the output port on the downlink side is retrieved with the destination MAC c2 used as a key. Then, it is seen by the previous learning operation which port of the downlink side the node having the destination MAC address c2 is connected to. Therefore, the node G2 removes the source tag 1 from the frame and transfers the resultant frame to the downlink port through which the client C2 is connected.

The client C2 receives the main signal frame with the destination MAC address c2 which is transferred by the node G2. The client C2 passes this frame to an application or another program because the destination MAC address matches the own MAC address c2.

In this example, the frame sent from the client C1 is assumed to be an ICMP ECHO REQUEST, so that the basic software on the client C2 creates an ICMP ECHO REPLY frame with the destination MAC address c1 and the source MAC address c2 and sends the frame to the node G2. This frame is referred to as the main signal frame in the following description.

The node G2 receives the frame through the downlink port. When a tag to be added and an output port are searched for with the destination MAC used as a key, it is seen by the learning operation of the sequence N211 that the expansion forwarding tag g1 may be added to the frame addressed to the destination MAC address c1 to transfer to the root port side of the tree T1. Since a check of the hit bit has revealed that it is in the hit state, the node G2 adds the forwarding tag g1 to the frame and transfers to the node G4 the main signal frame in the format according to the first embodiment shown in Fig. 5.

The node G4 receives through the uplink port the main signal frame with the destination expansion tag g1 sent from the node G2. And, the output port is retrieved with the destination expansion tag g1 used as a key. Then, because the output port for the expansion forwarding tag g1 is always set to the root port side of the spanning tree T1, the node G4 transfers the frame received through the uplink port toward the node G1. At this time, no change is made to the frame. Therefore, a tag is not added or removed, and the MAC address is not rewritten.

The node G1 receives through the uplink port the main signal frame with the destination expansion tag g1 which is sent from the node G4. Since the address g1 indicated by the destination expansion tag is the own address, this expansion tag is removed, and the output port on the downlink side is searched for with the destination MAC c1 used as a key. Then, it is seen by the learning operation of the sequence N211 which port of the downlink side the node having the destination MAC address c1 is connected to. Therefore, the node G1 transfers the frame to the downlink port through which the client C1 is connected.

The client C1 receives the main signal frame with the destination MAC address c1 which is transferred by the node G1. The client C1 passes this frame to an application or another program because the destination MAC address matches the own MAC address c1. In this example, the frame is passed to the PING program in the basic software, by which the result of the PING command is displayed.

This completes the description of the communication sequence consisting of the exchange of ICMP ECHO REQUEST (PING REQUEST) and ICMP ECHO REPLY (PING REPLY) between the clients C1 and C2, which is performed under the following conditions: a long time has not lapsed since the exchange of ARP REQUEST and ARP REPLY between the clients C1 and C2 in the sequence N311; the address g1 of the node to which the client C1 belongs, corresponding to the MAC address c1 of the client C1, has been learnt by the nodes G2 to G4; the output port for the MAC address c1 of the client C1 has already been learnt by the node G1; the output port for the MAC address c2 of the client C2 has already been learnt by the node G4, and the address g2 of the node to which the client C2 belongs, corresponding to the MAC address c2 of the client C2, has been learnt.

The sequence N313 represents a communication sequence consisting of the transmission of ICMP ECHO REQUEST (PING REQUEST) from the client C1 to C2 and the transmission of ICMP ECHO REPLY (PING REPLY) in reply from the client C2 to C1, which takes place at a point in time when a long time has not lapsed since the completion of the sequences N311 and N312, that is, before the aging process is performed.

In the description of the sequence N313, it is assumed that the address g1 of the node to which the client C1 belongs, corresponding to the MAC address c1 of the client C1, has been learned by the nodes G2 to G4; that the output port for the MAC address c1 of the client C1 has already been learned by the node G1; that the output port for the MAC address c2 of the client C2 has already been learned by the node G4; and that the address g2 of the node to which the client C2 belongs, corresponding to the MAC address c2 of the client C2, has been learned by each of the nodes G1 to G3.

The node G1 has the hit bit for the MAC address c2 set to "hit," and the node G2 also has the hit bit for the MAC address c1 set to "hit."

First, the client C1 sends to the client C2 an ICMP ECHO REQUEST frame with a destination MAC of c2 and a source MAC of c1. This frame is referred to as the main signal frame in the following description.

The node G1 receives the main signal frame through the downlink port. When a tag to be added and an output port are searched for with the destination MAC used as a key, it is seen by the learning operation that the expansion forwarding tag g2 may be added to the frame of the destination MAC address c2 to transfer to the root port side of the tree T2. Since a check of the hit bit has revealed that it is in the hit state, the node G1 adds the expansion forwarding tag g2 to the frame and transfers to the node G3 the main signal frame in the format according to the first embodiment shown in Fig. 5.

The node G3 receives through the uplink port the main signal frame with the destination expansion tag g2 sent from the node G1. And, the output port is retrieved with the destination expansion tag g2 used as a key. Then, the node G3 transfers the frame received through the uplink port toward the node G2 because the output port for the expansion forwarding tag g2 is always set to the root port side of the spanning tree T2. At this time, no change is made to the frame. Therefore, a tag is not added or removed, and the MAC address is not rewritten.

The node G2 receives through the uplink port the main signal frame with the destination expansion tag g2 which is sent from the node G3. Since the address g2 indicated by the destination expansion tag is the own address, this expansion tag is removed, and the output port on the downlink side is searched for with the destination MAC c2 used as a key. Then, it is seen by the previous learning operation which port of the downlink side the node having the destination MAC address c2 is connected to. Therefore, the node G2 transfers the frame to the downlink port through which the client C2 is connected.

The client C2 receives the main signal frame with the destination MAC address c2 which is transferred by the node G2. The client C2 passes this frame to an application or another program because the destination MAC address matches the own MAC address c2.

In this example, the frame sent from the client C1 is assumed to be an ICMP ECHO REQUEST, so that the basic software on the client C2 creates an ICMP ECHO REPLY frame with the destination MAC address c1 and the source MAC address c2 and sends the frame to the node G2. This frame is referred to as the main signal frame in the following description.

The node G2 receives the frame through the downlink port. When a tag to be added and an output port are searched for with the destination MAC used as a key, it is seen that the expansion forwarding tag g1 may be added to the frame with the destination MAC address c1 to transfer to the root port side of the tree T1. Since a check of the hit bit has revealed that it is in the hit state, the node G2 adds the expansion forwarding tag g1 to the frame and transfers to the node G4 the main signal frame in the format according to the first embodiment shown in Fig. 5.

The node G4 receives through the uplink port the main signal frame with the destination expansion tag g1 sent from the node G2. And, the output port is retrieved with the destination expansion tag g1 used as a key. Then, because the output port for the expansion forwarding tag g1 is always set to the root port side of the spanning tree T1, the node G4 transfers the frame received through the uplink port toward the node G1. At this time, no change is made to the frame. Therefore, a tag is not added or removed, and the MAC address is not rewritten.

The node G1 receives through the uplink port the main signal frame with the destination expansion tag g1 which is sent from the node G4. Since the address g1 indicated by the destination expansion tag is the own address, this expansion tag is removed, and the output port on the downlink side is searched for with the destination MAC c1 used as a key. Then, it is seen by the previous learning operation which port of the downlink side the node having the destination MAC address c1 is connected to. Therefore, the node G1 transfers the frame to the downlink port through which the client C1 is connected.

The client C1 receives the main signal frame with the destination MAC address c1 which is transferred by the node G1. The client C1 passes this frame to an application or another program because the destination MAC address matches the own MAC address c1. In this example, the frame is passed to the PING program in the basic software, by which the result of the PING command is displayed.

This completes the description of the communication sequence between the clients C1 and C2, which takes place under the following conditions: a long time has not lapsed since the completion of the previous communication between the clients C1 and C2; and MAC address c1 of the client C1 and address g1 of a node to which the client C1 belongs, as well as MAC address c2 of the client C2 and address g2 of node to which client C2 belongs, have already been learned by the nodes G1 to G4.

The node G4 in this operation example can be replaced with a node E4 which has a simplified structure of the node G4. The simplified node E4 differs from the node G4 on the following four points: (1) not having the memory duplicate information 3013, (2) not having the MAC forwarding table memory 2043, (3) not having the learning management program 302 and the timer 306, and (4) not sending or receiving the learning frame.

The effects of the second embodiment will now be described.

Conventionally, when an asymmetrical flow which has a different node where the flow passes depending on a direction is flown on a network based on the Ethernet (R), a learning process does not function, a frame reaches the destination but it is also transmitted to unnecessary destinations. Therefore, there were problems that the network became congestion and bandwidth usability became low.

In this embodiment, the learning process can be functioned even when an asymmetrical flow occurs, by first inserting a source tag indicating a source of transmission into a frame with a broadcast MAC address, a frame with a multicast MAC address, a frame with a unicast MAC address for which the source of transmission is unknown, or a unicast frame which is flown for the first time after the tag learning operation, whichever is applicable, and then transmitting such frame with the source tag over a tree, which is formed with the source node for the frame as the root node, along a path opposite to the path through which a frame addressed to that source of transmission is transferred, thereby achieving the alleviation of network congestion and the consequent improvement in bandwidth usability.

Conventionally, when a frame having a tag indicating a destination was transferred, it was necessary to previously set on each node an expansion tag (forwarding tag) to be added according to the destination MAC address.

In this embodiment, the expansion tag to be added can be set on each node according to the destination MAC address by containing tag information in a frame with a source tag, thereby automating the setting operation.

### (Fourth embodiment)

A fourth embodiment of the present invention will now be described in detail with reference to the drawings.

The fourth embodiment of the present invention differs from the first to third embodiments in that this embodiment additionally has an input port table memory that allows one to determine a destination tag based on an input port and an input VLAN (VMAN) tag without needing to perform a learning operation.

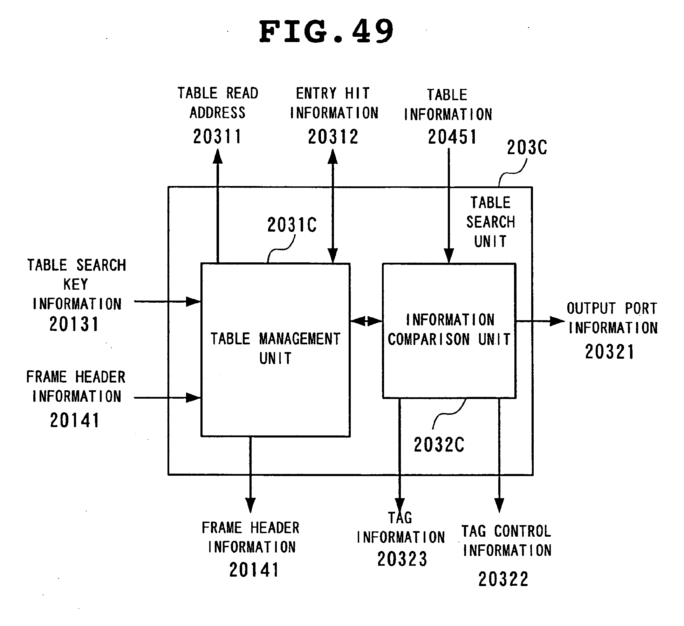

Fig. 49 is a block diagram showing in detail a configuration of the table search unit 203C according to the fourth embodiment.

The table search unit 203C according to the fourth embodiment differs from the table search unit 203 according to the first embodiment shown in Fig. 10 in that the table management unit 2031 is replaced with the table management unit 2031C and the information comparison unit 2032 with the information comparison unit 2032C.

The table management unit 2031C issues a search instruction via table search key information 20131 to any of the tag forwarding table memory 2041, MAC forwarding table memory 2043, broadcast forwarding table memory 2042, and input port table memory 2049.

More than one piece of table search key information may be designated for input into the table management unit 2031C. If two or more pieces of table search key information are designated, the input port table is first searched, and if there is a hit, the tag forwarding table is then searched. If a mishit results from the search of the input port table, the MAC forwarding table is then searched, and if there is a hit, the frame is sent to the port designated in the MAC forwarding table. If a mishit results, the broadcast forwarding table is searched to determine the port to which the frame should be output. The search instruction to each table is output to the forwarding table 204 as a table read address 20311.

When a frame arrives, the table management unit 2031 according to the first embodiment shown in Fig. 14, the table management unit 2031A according to the second embodiment shown in Fig. 42, and the table management unit 2031B according to the third embodiment shown in Fig. 47 perform searches of the tables in the priority order of the tag forwarding table, MAC forwarding table, and broadcast forwarding table.

In contrast, when a frame arrives, the table management unit 2031C of this embodiment shown in Fig. 49 performs searches in the priority order of the input port table, tag forwarding table, MAC forwarding table, and broadcast forwarding table.

As a result of searching the individual tables, if the retrieval header information matches the table entry information, the table management unit 2031C receives hit information from the information comparison unit 2032. If the retrieval header information does not match the table entry information, it receives mishit information and causes the same table to be searched for different addresses until there is a hit, or issues to the forwarding table 204 a search instruction for the next table in the priority order. If there is a hit while referring to the MAC forwarding table, the table management unit 2031C outputs the entry hit information 20312 and stores it in the aging management table 2044 of Fig. 19 through the table memory read control circuit 2046, in the entry of MAC-Tag entry management information when an entry type is MAC□Tag or in the entry of MAC-Port entry management information when the entry type is MAC□Port, using the hit reference address as a memory address.

The table management unit 2031C also extracts the header information subject to the table search from the frame header information 20141 and outputs the extracted information to the information comparison unit 2032 so as to compare it with the table information obtained from the forwarding table 204. The header information to be output differs depending on the table memory searched: VLAN ID tag information 6202 is output when the tag forwarding table memory 2041 is searched; destination MAC address 601 and VLAN tag 606 when the MAC forwarding table memory 2043 is searched, VLAN ID tag information 6202 and VLAN ID 6064 when the broadcast forwarding table memory 2042 is searched, and VLAN ID 6064 and input port information when the input port table memory 2049 is searched. The table management unit 2031C instructs the information comparison unit 2032 to output a remove tag command as tag control information 20322 only for a forwarding tagged Ethernet (R) frame addressed to the own node.

An operation example of the table management unit 2031C will be described below.
(1) When a frame in the format of Ethernet (R) frame 60 in the first embodiment shown in Fig. 2 is input from the downlink side, the table management unit 2031C searches the input port table 2049 using a combination of the input port and the input VLAN (the VLAN value is set to 0000 at this time) as a key. If there is a hit in this search and the destination address for the expansion forwarding tag to be added is obtained, the destination address is added immediately, the tag forwarding table is searched for a destination port, and the frame is output to the retrieved port. The MAC forwarding table 2043 and broadcast forwarding table 2042 are not searched if there is a hit in the search of the input port table 2049. In this case, the table management unit 2031C examines the destination MAC address and, if the destination MAC address is a Universal Administrative MAC address ("01-80-c2-00-00-0x" in this example), it instructs the frame rewrite unit 205 via frame header information 20141 to convert the destination MAC address into a MAC address for identifying a tunneling frame (in this example, "00-00-4c-00-00-1x", where x is any value between 1 and f). If there is no hit in the search of the input port table 2049, similarly to the table management unit described in the first to third embodiments, the table management unit 2031C moves on to a search of the MAC forwarding table 2043, and then to a search of the broadcast forwarding table 2042 if necessary.
(2) When a frame in the format of VLAN Tagged Ethernet (R) frame 61 according to the first embodiment shown in Fig. 3 is input from the downlink side, the table management unit 2031C searches the input port table 2049 using a combination of the input port and input VLAN (or VMAN) tag as a key. If there is a hit in this search and the destination address for the expansion forwarding tag to be added is obtained, the destination address is added immediately, the tag forwarding table is searched for a destination port, and the frame is output to the retrieved port. The MAC forwarding table 2043 and broadcast forwarding table 2042 are not searched if there is a hit in the search of the input port table 2049. In this case, the table management unit 2031C examines the destination MAC address and, if the destination MAC address is a Universal Administrative MAC address ("01-80-c2-00-00-0x" in this example), it instructs the frame rewrite unit 205 via frame header information 20141 to convert the destination MAC address into a MAC address for identifying a tunneling frame (in this example, "00-00-4c-00-00-1x", where x is any value between 1 and f). If there is no hit in the search of the input port table 2049, similarly to the table management unit described in the first to third embodiments, the table management unit 2031C moves on to a search of the MAC forwarding table 2043, and then to a search of the broadcast forwarding table 2042 if necessary.
(3) When a frame, to which the expansion forwarding tag addressed to the own node has been added but not a VLAN (or VMAN) tag, is input from the uplink side, the table management unit 2031C searches the broadcast table memory 2042 using the input VLAN (set to "0000" at this time) as a key. It then removes the expansion forwarding tag, converts the frame into the format of Ethernet (R) frame 60 in the first embodiment shown in Fig. 2, and transfers the resultant frame to the port on the downlink side specified in the output port information. At this time, the table management unit 2031C examines the destination MAC address and, if the destination MAC address is a MAC address for identifying a tunneling frame ("00-00-4c-00-00-1x" in this example), it instructs the frame rewrite unit 205 via frame header information 20141 to convert the destination MAC address into a Universal Administrative MAC address (01-80-c2-00-00-0x, where x is any value between 1 and f).
(4) When a frame with a VLAN (or VMAN) tag added, in addition to the expansion forwarding tag addressed to the own node, is input from the uplink side, the table management unit 2031C searches the broadcast table memory 2042 using the input VLAN (or VMAN) tag as a key. It then removes the expansion forwarding tag, converts the frame into the format of VLAN Tagged Ethernet (R) frame 61 in the first embodiment shown in Fig. 3, and transfers the resultant frame to the port on the downlink side specified in the output port information. At this time, the table management unit 2031C examines the destination MAC address and, if the destination MAC address is a MAC address for identifying a tunneling frame ("00-00-4c-00-00-1x" in this example), it instructs the frame rewrite unit 205 via frame header information 20141 to convert the destination MAC address into a Universal Administrative MAC address (01-80-c2-00-00-0x, where x is any value between 1 and f).

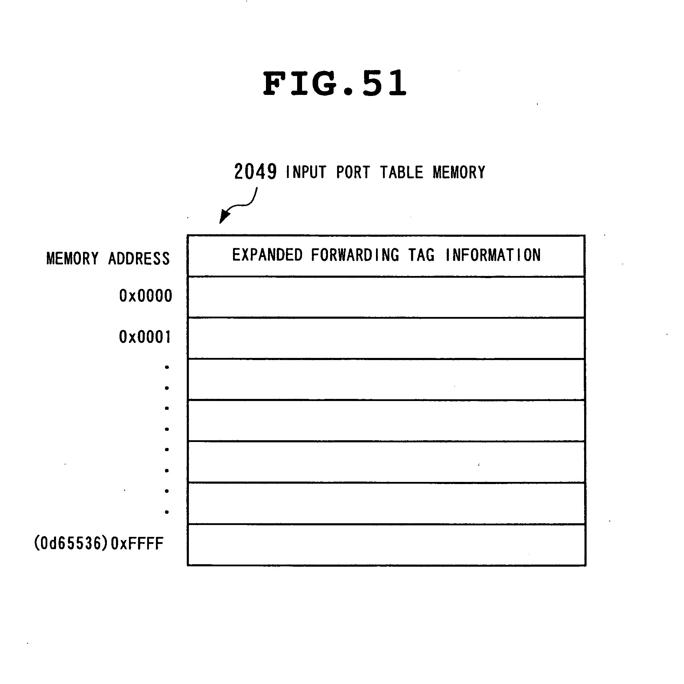

The information comparison unit 2032C compares the result of a search of the forwarding table 204 made by the table management unit 2031C with the header information which is subject to the search to determine an output port. As described above, the information comparison unit 2032C receives input port information of the frame, the VLAN ID tag information 6202, the destination MAC address 601, the VLAN tag 606, header information of the VLAN ID 6064 from the table management unit 2031 according to each table search, receives as table information 20451 a result obtained when the table management unit 2031C gives table a read instruction to the forwarding table 204, compares information according to each table type, and outputs the entry information and output port information 20321. Before outputting the output port information 20321, the information comparison unit 2032C compares it with the input port information, and if they are the same port information, discards the frame without outputting the output port information so as to prevent the frame from looping. Items (1) to (4) below describe the detail of the operation performed when each table is referred.
(1) When the tag forwarding table memory 2041 is referred, there is no need to compare header information because the VLAN ID tag information 6202 is a memory address to be referred. Output port information and fault-time output port information in the tag forwarding table memory 2041 of Fig. 17 are output to the output port 20321. If there is no entry, entry mishit information is output to the table management unit 2031.
(2) When referring to the MAC forwarding table memory 2043, retrieval header information is compared with MAC destination address and destination's first row TAG information on the table entry of the MAC forwarding table memory 2043 of Fig. 16, and if they match, output port information and fault output port information contained in the table entry are output to the output port information 20321, tag information is output as the tag information 20321, and tag control information is output as the tag control information 20322. If they do not match, entry mishit information is output to the table management unit 2031.
(3) When referring to the broadcast forwarding table memory 2042, the header information is a memory address which is referred to by the VLAN ID tag information 6202 or the VLAN ID 6064, so that it is not necessary to compare the information. Plural output port information in the broadcast forwarding table memory 2042 of Fig. 18 is checked for a match between the port numbers not registered as plural output port information and the input port information; if there is a match, the frame is discarded, and if there is no match, is output as the output port information 20321. If there is no entry of destination memory address to be referred, entry mishit information is output to the table management unit 2031.
(4) When the input port table memory 2049 is referred, it is not necessary to compare the header information because the VLAN ID tag information 6064, as well as the input port information, is a memory address to be referred. It is checked whether or not forwarding tag information is contained in the input port table memory 2049 of Fig. 51. If it is not contained, the frame is discarded. If it is contained, a request is issued to the table management unit 2031C for a search of the tag forwarding table memory 2041. In addition, forwarding tag information is output as the tag information 20321, and tag control information for providing an additional instruction is output as the tag control information 20322. If there is no entry of destination memory address to be referred, entry mishit information is output to the table management unit 2031C.

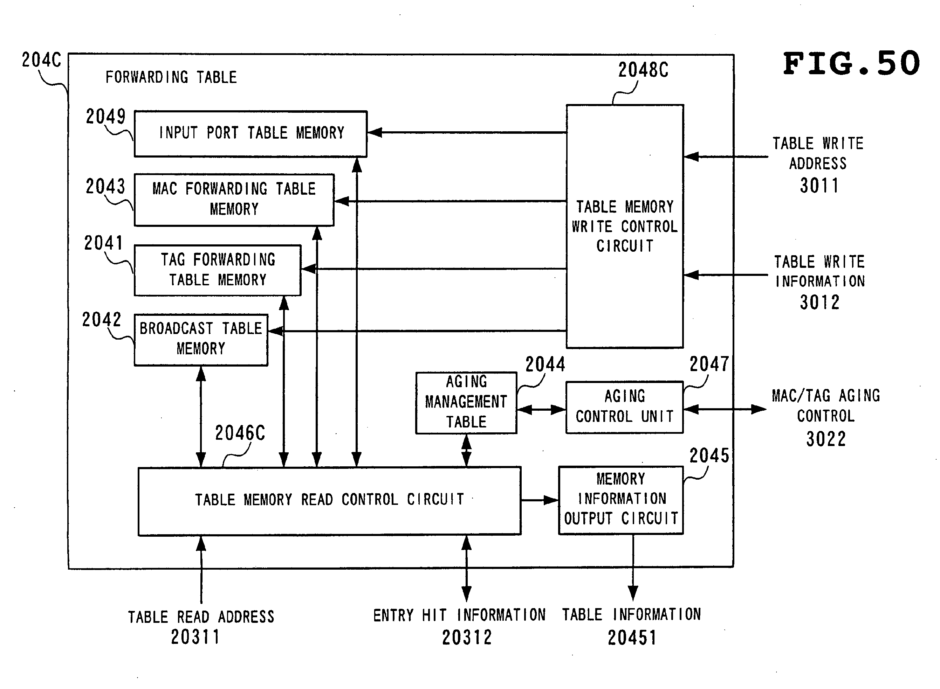

Fig. 50 is a block diagram showing in detail a configuration of a forwarding table 204 according to the fourth embodiment.

The forwarding table 204C according to the fourth embodiment differs from the forwarding table 204 described in the first embodiment in that the table memory read control circuit 2046 is replaced with the table memory read control circuit 2046C, the table memory write control circuit 2048 is replaced with the table memory write control circuit 2048C, and the input port table memory 2049 is added.

The information contained in the forwarding table 204C is the same as the one contained in the forwarding table 204 of the first embodiment with respect to the part used in association with the tag forward table memory 2041, broadcast table memory 2042, MAC forward table memory 2043, aging management table 2044, memory information output circuit 2045, and aging control unit 2047.

The table memory read control circuit 2046C reads a table address to be read and outputs the result. In this operation, it performs a step described below, in addition to the steps (1) to (3) performed by the table memory read control circuit 2046 according to the first embodiment.

(4) In a read access to the input port table memory 2049 of Fig. 51, the table memory read control circuit 2046C receives the VLAN ID 6064 as a table read address and input port information, refers to the same memory address as the received information, and outputs the output port information and fault-time output port information which are entered at the address to the memory information output circuit 2045. If the entries are invalid, the absence of entries is output as the entry hit information 20312.

The table memory write control circuit 2048C writes entries into each table. When a memory address in the MAC forwarding table memory 2043, tag forwarding table 2041, broadcast table memory 2042, or input port table memory 2049 is input from the table write address 3011, the table memory write control circuit 2048C writes the table write information 3012, as a table entry, to that memory address.

Fig. 51 is a block diagram showing in detail a configuration of the input port table memory 2049 shown in Fig. 50.

The input port table memory 2049 is used to store the expansion destination forwarding tag information to be added to IEEE 802.3 Ethernet (R) frames and IEEE 803.3 VLAN Tagged Ethernet (R) frames. In the case of 16-port input management, the range of memory addresses is 16 bits between 0x0000 to OxFFFF, and up to 65536 entries can be stored.

The upper four bits in the 16-bit memory address range indicate ports, while the lower 12 bits indicate VLAN IDs. An access to a table, therefore, is performed by designating a memory address formed by combining a port and a VLAN ID. Otherwise, it is possible to use the upper twelve bits to indicate VLAN IDs and the lower four bits to indicate ports. It is also possible to support a different number of ports by increasing or decreasing the number of bits from 16.

The fourth embodiment provides an input port table in which to previously set expansion forwarding tag information for use with a frame that matches the pre-set input port and input VLAN tag ID, so that frames may be prevented from being unnecessarily transferred to destinations by transfer using the tag even when the learning process does not work, thereby achieving the alleviation of network congestion and the consequent improvement of bandwidth usability.

Conventionally, when the learning process is not used, it is necessary to previously set on each node an expansion tag (forwarding tag) to be added according to the destination MAC address. This embodiment can considerably simplify the configuration process because items that require configuration are reduced to only two: a VLAN, which is an address on the terminal level, and an input port to which plural terminals are connected via Ethernet (R) switches.

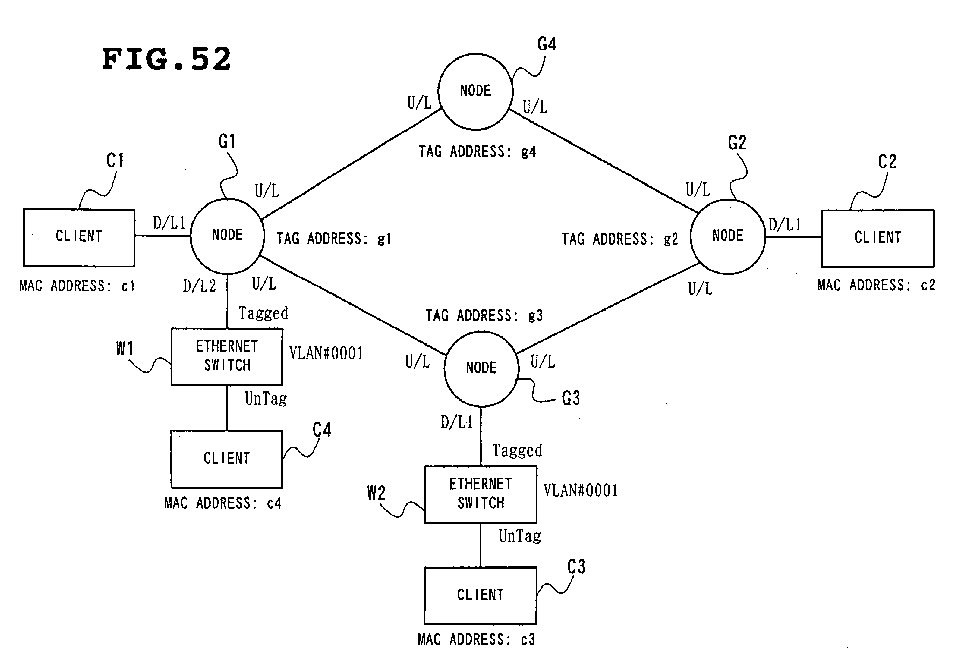

Fig. 52 is a block diagram showing a configuration example of a physical network according to the fourth embodiment of the invention. This configuration is similar to the one in the first embodiment shown in Fig. 1, except that it additionally has a client C4, Ethernet (R) switch W1, and Ethernet (R) switch W2.

The Ethernet (R) switch W1 has two types of port, UnTag port and Tagged port, and performs the following steps:
(1) It additionally inserts a VLAN tag, which is a pre-set ID, into a frame input from the Untag port in the Ethernet (R) frame 60 format shown in Fig. 2, converts the frame into the VLAN Tagged Ethernet (R) frame 61 format shown in Fig. 3, and outputs the frame through the Tagged port.
(2) When a frame in the Ethernet (R) frame 61 format shown in Fig. 3 is input through the Tagged port, it refers to the pre-set information. If the frame matches the pre-set information, removes the VLAN tag from the input frame, converts the frame into the Ethernet (R) frame 60 format shown in Fig. 2, and outputs the frame through the Untag port.

As shown in Fig. 52, the Ethernet (R) switch W1 has the client C4 connected to its Untag port and the node G1 to its Tagged port. The configuration is such that frames with a VLAN tag of ID0001 are transmitted and received through the Tagged port.

The Ethernet (R) switch W2 in Fig. 52 behaves similarly to the Ethernet (R) switch W1. The Ethernet (R) switch W2 has the client C3 connected to its Untag port and the node G3 to its Tagged port. The configuration is such that frames with a VLAN tag of ID0001 are transmitted and received through the Tagged port.

A first operation example of the fourth embodiment will be described with reference to Fig. 52.

In the first operation example, the input port table memory on the node G1 is set up so that an expansion forwarding tag of a destination tag address g2 is additionally inserted into each of frames that are input through the port D/L1, while the input port table memory on the node G2 is set up so that an expansion forwarding tag of a destination tag address g1 is additionally inserted into each of frames that are input through the port D/L1. Based on the foregoing, a sequence of the exchange of frames between nodes and clients, in which the client C1 sends PING REQUEST to the client C2 and the client C2 sends back PING REPLY to the client C1, will be described below. It is assumed that the ARP has already been resolved.

Before beginning to transmit frames, the node G1 is configured so that an expansion forwarding tag of a destination tag address g2 is additionally inserted into each of frames that are input through the port D/L1. In order to insert a destination tag address g2 into each of frames that are input through the port D/L1, it is necessary to configure the node G1 so that the insertion of a forwarding tag g2 is performed for all VLAN tags that are input through the port D/L1. For this purpose, g2 is designated as expansion forwarding tag information in a total of 4096 entries in the input port table memory 2049, from port D/L1 and VLAN0000 to port D/L1 and VLAN4095. In addition, in the broadcast table memory 2042, the D/L1 port is additionally inserted in the plural output port information contained in a total of 4096 entries from VLAN0000 to VLAN4095.

Then, the node G2 is configured so that an expansion forwarding tag of a destination tag address g1 is additionally inserted into each of frames that are input through the port D/L1. In order to insert a destination tag g1 into each of frames that are input through the port D/L1, it is necessary to configure the node G2 so that the insertion of a forwarding tag g1 is performed for all VLAN tags that are input through the port D/L1. For this purpose, g1 is designated as expansion forwarding tag information in a total of 4096 entries in the input port table memory 2049, from port D/L1 and VLAN0000 to port D/L1 and VLAN4095. In addition, in the broadcast table memory 2042, the D/L1 port is additionally inserted in the plural output port information contained in a total of 4096 entries from VLAN0000 to VLAN4095.

Once the configuration described above is completed, a PING REQUEST is sent from the client C1 to the client C2. The frame is in the Ethernet (R) frame 60 format shown in Fig. 2, and has a destination MAC address of c2 and a source MAC address of c1.

The node G1 receives the frame sent from the client C1 through the portD/Ll. Since the input port for this frame is D/L1 and the VLAN is not tagged, the node G1 searches the input port table memory 2049 for a VLAN value of 0000. Since g2 is set as expansion forwarding information, the node G1 inserts the expansion forwarding tag into the frame, and searches the tag forward table memory 2043 to determine an output port. The tree T2, which is a tree for the tag address g2, is formed as shown in Fig. 35, and thus the frame, in the format of the Ethernet (R) frame 62 with a forwarding tag shown in Fig. 5, is transferred to the node G3.

On receiving the frame sent from the node G1 through the uplink port, the node G3 searches the tag forward table memory 2043 to determine an output port. The tree T2, which is a tree for the tag address g2, is formed as shown in Fig. 35, and thus the frame is transferred to the node G2.

The node G2 receives the frame sent from the node G3 through the uplink port. Since this frame is added an expansion forwarding tag addressed to the own node, the node G2 first searches the broadcast table memory 2042. In this search, the node G2 uses a VLAN value of 0000 as a key because the frame is not added any VLAN tag. Since D/L1 is the only downlink-side port set in the plural output port information retrieved, the node G2 removes the expansion forwarding tag from the frame, and transfers the resultant frame to the port D/L1.

The client C2 receives the main signal frame with the destination MAC address c2 which is transferred by the node G2. The client C2 passes this frame to an application or another program because the destination MAC address matches the own MAC address c2.

In this example, the frame sent from the client C1 is assumed to be an ICMP ECHO REQUEST, so that the basic software on the client C2 creates an ICMP ECHO REPLY frame with the destination MAC address c1 and the source MAC address c2 and sends the frame to the node G2. This frame is in the Ethernet (R) frame 60 format shown in Fig. 2. This frame is referred to as the main signal frame in the description below.

The node G2 receives the frame through the downlink port. The node G2 then searches the input port table memory 2049 using a combination of the input port D/L1 and the VLAN 0000 as a key, from which it is seen that the node G2 may add the expansion forwarding tag g1 to the frame and transfer the resultant frame to the root port side of the tree T1 shown in Fig. 34. The node G2 adds the expansion forwarding tag g1 to the frame and transfers to the node G4 the main signal frame in the format of the Ethernet (R) frame 62 with a forwarding tag according to the first embodiment shown in Fig. 5.

On receiving the frame sent from the node G2 through the uplink port, the node G4 searches the tag forward table memory 2043 to determine an output port. The tree T1, which is a tree for the tag address g1, is formed as shown in Fig. 34, and thus the frame is transferred to the node G1.

The node G1 receives the frame sent from the node G4 through the uplink port. Since this frame is added an expansion forwarding tag addressed to the own node, the node G1 first searches the broadcast table memory 2042. In this search, the node G1 uses a VLAN value of 0000 as a key because the frame is not added any VLAN tag. Since D/L1 is the only downlink-side port set in the output port information retrieved, the node G1 removes the expansion forwarding tag from the frame and transfers the resultant frame to the port D/L1.

The client C1 receives the main signal frame with the destination MAC address c1 which is transferred by the node G1. The client C1 passes this frame to an application or another program because the destination MAC address matches the own MAC address c1. In this example, the frame is passed to the PING program in the basic software, by which the result of the PING command is displayed.

This completes the description of the exchange of frames between nodes and clients, in which the client C1 sends PING REQUEST to the client C2 and the client C2 sends back PING REPLY to the client C1, in a configuration where the node G1 is set up so that an expansion forwarding tag of a destination tag address g2 is additionally inserted into each of frames that are input through the port D/L1 and the node G2 is set up so that an expansion forwarding tag of a destination tag address g1 is additionally inserted into each of frames that are input through the port D/L1.

The node G4 in this operation example can be replaced with a node E4 which has a simplified structure of the node G4. The simplified node E4 differs from the node G4 on the following four points: (1) not having the memory duplicate information 3013, (2) not having the MAC forwarding table memory 2043, (3) not having the learning management program 302 and the timer 306, and (4) not sending or receiving the learning frame.

A second operation example of the fourth embodiment will be described with reference to Fig. 52.

In the second operation example, the input port table memory on the node G1 is set up so that an expansion forwarding tag of a destination tag address g3 is additionally inserted into a frame with VLAN0001 that is input through the port D/L2, while the input port table memory on the node G3 is set up so that an expansion forwarding tag of a destination tag address g1 is additionally inserted into a frame with VLAN0001 that is input through the port D/L1. Based on the foregoing, a sequence of the exchange of frames between nodes and clients, in which the client C4 sends PING REQUEST to the client C3 and the client C3 sends back PING REPLY to the client C4, will be described below. It is assumed that the ARP has already been resolved.

Before beginning to transmit frames, the node G1 is configured so that an expansion forwarding tag of a destination tag address g3 is additionally inserted into the frame with VLAN0001 that is input through the port D/L2. For this purpose, g3 is designated as expansion forwarding tag information in the entry with port D/L2 and VLAN0001 in the input port table memory 2049. In addition, in the broadcast table memory 2042, the D/L2 port is additionally inserted in the plural output port information contained in the entry with VLAN0001.

Then, the node G3 is configured so that an expansion forwarding tag of a destination tag address g1 is additionally inserted into the frame with VLAN0001 that is input through the port D/L1. For this purpose, g1 is designated as expansion forwarding tag information in the entry with port D/L1 and VLAN0001 in the input port table memory 2049. In addition, in the broadcast table memory 2042, the D/L1 port is additionally inserted into the plural output port information contained in the entry with VLAN0001.

Once the configuration described above is completed, a PING REQUEST is sent from the client C4 to the client C3. The frame is in the Ethernet (R) frame 60 format shown in Fig. 2, and has a destination MAC address of c3 and a source MAC address of c4.

On receiving the frame from the client C4, the Ethernet (R) switch W1 inserts a VLAN tag of ID0001 into the input frame, converts the frame into the VLAN Tagged Ethernet (R) frame 61 format shown in Fig. 3, and transfers the resultant frame to the node G1.

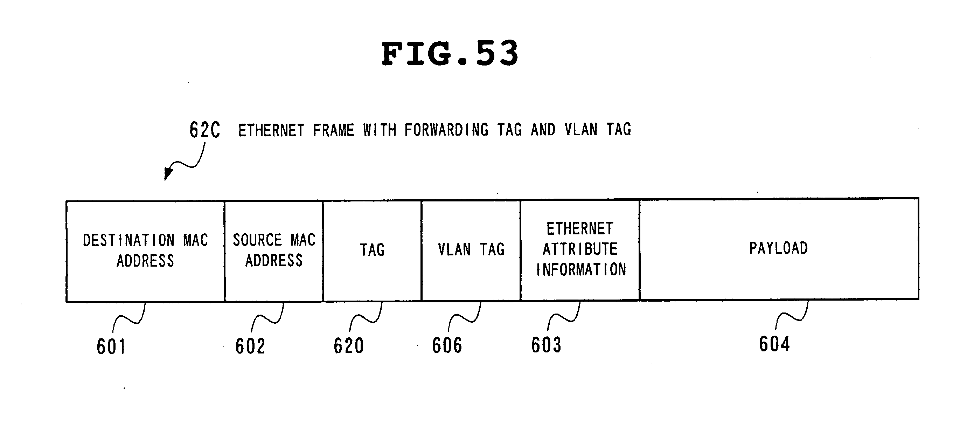

The node G1 receives the frame sent from through the port D/L2, and searches the input port table memory 2049 using a combination of the input port D/L2 and the VLAN ID0000 as a key. Since g3 is set as expansion forwarding information, the node G1 inserts the expansion forwarding tag g3 into the frame, and searches the tag forward table memory 2043 to determine an output port. The tree T3, which is a tree for the tag address g3, is formed as shown in Fig. 36, and thus the frame, in the format of the Ethernet (R) frame 62C with a forwarding tag and VLAN tag shown in Fig. 53, is transferred to the node G3.

The node G3 receives the frame sent from the node G1 through the uplink port. Since this frame is added an expansion forwarding tag addressed to the own node, the node G3 first searches the broadcast table memory 2042. In this search, the node G3 uses a VLAN value of 0001 as a key. Since D/L1 is the only downlink-side port set in the plural output port information retrieved, the node G3 removes the expansion forwarding tag from the frame, and transfers the resultant frame to the port D/L1.

On receiving the frame from the node G3, the Ethernet (R) switch W2 checks the VLAN ID of the input frame. Since the Ethernet (R) switch W2 is configured to handle a tagged frame with VLAN0001 at the Tagged port, the Ethernet (R) switch W2 removes the VLAN tag from the frame, converts the frame into the Ethernet (R) frame 60 format in Fig. 2, and transfers the resultant frame to the client C3 through the Untag port.

The client C3 receives the main signal frame of the destination MAC address c3 sent from the Ethernet (R) switch W2. The client C3 passes this frame to an application or another program because the destination MAC address matches the own MAC address c3.

In this example, the frame sent from the client C4 is assumed to be an ICMP ECHO REQUEST, so that the basic software on the client C3 creates an ICMP ECHO REPLY frame with the destination MAC address c4 and the source MAC address c3 and sends the frame to the Ethernet (R) switch W2. This frame is in the Ethernet (R) frame 60 format shown in Fig. 2. This frame is referred to as the main signal frame in the description below.

On receiving the frame from the client C3, the Ethernet (R) switch W2 inserts a VLAN tag of ID0001 into the input frame, converts the frame into the VLAN Tagged Ethernet (R) frame 61 format shown in Fig. 3, and transfers the resultant frame to the node G3.

The node G3 receives the frame through the downlink port. The node G3 then searches the input port table memory 2049 using a combination of the input port (D/L1) and the VLAN (0001) as a key, from which it is seen that the node G3 may add the expansion forwarding tag g1 to the frame and transfer the resultant frame to the root port side of the tree T1 shown in Fig. 34. The node G3 adds the expansion forwarding tag g1 to the frame and transfers to the node G1 the main signal frame in the format of the Ethernet (R) frame 62C with a forwarding tag and VLAN tag shown in Fig. 53.

The node G1 receives the frame sent from the node G3 through the uplink port. Since this frame is added an expansion forwarding tag addressed to the own node, the node G1 first searches the broadcast table memory 2042. In this search, the node G1 uses a VLAN value of 0001 as a key. Since D/L2 is the only downlink-side port set in the plural output port information retrieved, the node G1 removes the expansion forwarding tag from the frame, converts the frame into the VLAN Tagged Ethernet (R) frame 61 format shown in Fig. 3, and transfers the resultant frame to the port D/L2.

On receiving the frame from the node G1, the Ethernet (R) switch W1 checks the VLAN ID of the input frame. Since the Ethernet (R) switch W1 is configured to handle a tagged frame with VLAN0001 at the Tagged port, the Ethernet (R) switch W1 removes the VLAN tag from the frame, converts the frame into the Ethernet (R) frame 60 format in Fig. 2, and transfers the resultant frame to the client C4 through the Untag port.

The client C4 receives the main signal frame of the destination MAC address c4 transferred from the Ethernet (R) switch W4. The client C4 passes this frame to an application or another program because the destination MAC address matches the own MAC address c4. In this example, the frame is passed to the PING program in the basic software, by which the result of the PING command is displayed.

This completes the description of the exchange of frames between nodes and clients, in which the client C4 sends PING REQUEST to the client C3 and the client C3 sends back PING REPLY to the client C4, in a configuration where the input port table memory on the node G1 is set up so that an expansion forwarding tag of a destination tag address g3 is additionally inserted into a frame with VLAN0001 that is input through the port D/L2 and the input port table memory on the node G3 is set up so that an expansion forwarding tag of a destination tag address g1 is additionally inserted into a frame with VLAN0001 that are input through the port D/L1.

The node G4 in this operation example can be replaced with a node E4 which has a simplified structure of the node G4. The simplified node E4 differs from the node G4 on the following four points: (1) not having the memory duplicate information 3013, (2) not having the MAC forwarding table memory 2043, (3) not having the learning management program 302 and the timer 306, and (4) not sending or receiving the learning frame.

A third operation example of the fourth embodiment will be described with reference to Fig. 52.

In the third operation example, the input port table memory on the node G1 is set up so that an expansion forwarding tag of a destination tag address g3 is additionally inserted into a frame with VLAN0001 that is input through the port D/L2, while the input port table memory on the node G3 is set up so that an expansion forwarding tag of a destination tag address g1 is additionally inserted into a frame with VLAN0001 that is input through the port D/L1. Based on the foregoing, a sequence of the exchange of frames between the Ethernet (R) switch W1 and the Ethernet (R) switch W2, in which the Ethernet (R) switch W1 transmits a BPDU frame for use in the building of a tree via the spanning tree protocol prescribed in IEEE802.1D or IEEE802.1W to the Ethernet (R) switch W2, will be described.

A BPDU frame in the fourth embodiment is assumed to be in the format of VLAN Tagged Ethernet (R) frame 61 shown in Fig. 3 and to have 01-80-C2-00-00-00, which is part of a Universal Administrative MAC address, set as a destination MAC address.

In this embodiment, taking the transfer of a BPDU frame as an example, it is described that a frame having a Universal Administrative MAC address can be exchanged from the Ethernet (R) switch W1 to the Ethernet (R) switch W2, or vice versa. However, this embodiment is not limited to BPDU frames only, but can be applied to any type of Universal Administrative MAC address having a destination MAC address of 01-80-C2-00-00-0x (where x is 1 to f) (hereinafter referred to as a BPDU address).

Before beginning to transmit frames, the node G1 is configured so that an expansion forwarding tag of a destination tag address g3 is additionally inserted into the frame with VLAN0001 that is input through the port D/L2. For this purpose, g3 is designated as expansion forwarding tag information in the entry with port D/L2 and VLAN0001 in the input port table memory 2049. In addition, in the broadcast table memory 2042, the D/L2 port is additionally inserted in the plural output port information contained in the entry with VLAN0001.

Then, the node G3 is configured so that an expansion forwarding tag of a destination tag address g1 is additionally inserted into the frame with VLAN0001 that is input through the port D/L1. For this purpose, g1 is designated as expansion forwarding tag information in the entry with port D/L1 and VLAN0001 in the input port table memory 2049. In addition, in the broadcast table memory 2042, the D/L1 port is additionally inserted into the plural output port information contained in the entry with VLAN0001.

Once the configuration described above is completed, a spanning tree is set on the Tagged port of the Ethernet (R) switch W1. This causes a BPDU control frame in the Ethernet (R) frame 61 format shown in Fig. 3, having the BPDU address as its destination MAC address and w1, which is the MAC address of the Ethernet (R) switch of W1, as its source MAC address, and having ID0001 in the VLAN tag, to be transmitted from the Tagged port of the Ethernet (R) switch W1.

The node G1 receives the frame sent from through the port D/L2, and searches the input port table memory 2049 using a combination of the input port D/L2 and the VLAN ID0000 as a key. Since g3 is set as expansion forwarding information, the node G1 inserts the expansion forwarding tag g3 into the frame, and searches the tag forward table memory 2043 to determine an output port. The tree T3, which is a tree for the tag address g3, is formed as shown in Fig. 36, and thus the frame, in the format of the Ethernet (R) frame 62C with a forwarding tag and VLAN tag shown in Fig. 53, is transferred to the node G3.

Before transmitting the frame, the node G1 converts the destination MAC address from the BPDU address into a MAC address for identifying a tunneling frame ("00-00-4c-00-00-10" in this example). The purpose of this conversion is to prevent the frame from being processed as a Universal Administrative MAC address by a relay node.

The node G3 receives the frame sent from the node G1 through the uplink port. Since this frame is added an expansion forwarding tag addressed to the own node, the node G3 first searches the broadcast table memory 2042. In this search, the node G3 uses a VLAN value of 0001 as a key. Since D/L1 is the only downlink-side port set in the plural output port information retrieved, the node G3 removes the expansion forwarding tag from the frame and transfers the resultant frame to the port D/L1.

Before transmitting the frame, the node G1 converts the destination MAC address from a MAC address for identifying a tunneling frame ("00-00-4c-00-00-10" in this example) into the BPDU address. By this conversion, it becomes possible for subsequent switches to handle the frame as a normal BPDU control frame.

On receiving the frame from the node G3, the Ethernet (R) switch W2 checks the VLAN ID of the input frame. The Ethernet (R) switch W2 then examines the MAC address because this switch has been configured to handle a tagged frame with VLAN0001 on the Tagged port. The Ethernet (R) switch W2 finds that the received frame has a BPDU address through this examination, and thus transfers the frame to the spanning tree protocol running on the Ethernet (R) switch W2.

This completes the description that a frame having a Universal Administrative MAC address can be transferred from the Ethernet (R) switch W1 to the Ethernet (R) switch W2. This embodiment allows the transfer of a frame having a Universal Administrative MAC address in the opposite direction to the above-described example, i.e., from the Ethernet (R) switch W1 to the Ethernet (R) switch W2.

From the foregoing, it will be appreciated that this embodiment can realize the transparent transfer (tunneling) of a Universal Administrative MAC address, which has not been possible in prior arts.

The node G4 in this operation example can be replaced with a node E4 which has a simplified structure of the node G4. The simplified node E4 differs from the node G4 on the following four points: (1) not having the memory duplicate information 3013, (2) not having the MAC forwarding table memory 2043, (3) not having the learning management program 302 and the timer 306, and (4) not sending or receiving the learning frame.

The effects of the fourth embodiment will now be described.

Conventionally, when a frame having a tag indicating a destination was transferred, it was necessary to previously set on each node an expansion tag (forwarding tag) to be added according to the destination MAC address.

The fourth embodiment can considerably simplify the configuration process even when the learning process described in the second and third embodiments is not used, because items that require configuration are reduced from MAC addresses, which are addresses on the terminal level, to only two, i.e., a VLAN, which is an ID representing a network having plural terminals, and an input port to which the plural terminals are connected via Ethernet (R) switches, by providing an input port table in which to previously set expansion forwarding tag information for use with a frame that matches the pre-set input port and input VLAN tag ID.

As described above, the following effects can be achieved by the present invention.

First, the network congestion can be remedied, and the bandwidth usability can be improved.

It is because, even if the asymmetrical flow is flown, the learning process can be operated by sending the learning frame through the path opposite to the path in which the main signal frame flows.

Second, the setting of the forwarding tag to be added can be automated.

It is because, the tag information is included in the learning frame.

## Claims

1. A network system for a network having plural nodes connected, wherein
a node belonging to said network transmit a learning frame periodically to a path opposite to that in which a main signal frame flows.

2. The network system as set forth in claim 1, wherein
said node
learns a forwarding tag to be added according to said learning frame.

3. A network system for a network having plural nodes connected, wherein
a node belonging to said network is provided with:
a learning frame management unit which refers to a MAC SA table cache to determine whether a learning frame transmission request is made or not, and
a MAC SA table cache which stores a source MAC address (MAC SA) which has made a learning frame transmission request.

4. The network system as set forth in claim 3, wherein
said nodes are provided with:
an aging request acceptance unit which ages of said MAC SA table cache, and
a transmission request unit which makes a learning frame transmission request to a CPU.

5. The network system as set forth in claim 4, wherein
said nodes
have a learning management program which conducts a learning frame process.

6. A network system for a network having plural nodes connected, wherein
a node belonging to said network is provided with a learning management program which conducts a learning frame process.

7. The network system as set forth in any one of claims 3 to 6, wherein
said node
has an equipment control program which conducts a variety of configuration.

8. The network system as set forth in any one of claims 3 to 7, wherein
said node
is provided with a frame type judgment unit which judges an input frame.

9. The network system as set forth in any one of claims 3 to 8, wherein
a node belonging to said network is provided with:
an aging control unit which ages an entry to be aged, and
an aging management table which stores an entry to be aged.

10. The network system as set forth in any one of claims 3 to 9, wherein
said node is provided with
a MAC forwarding table memory which stores an output port for a destination MAC address (MAC DA) and tag operations.

11. The network system as set forth in any one of claims 3 to 10, wherein
said node is provided with
a broadcast table memory which stores an output destination port at the time of broadcasting to a tag.

12. The network system as set forth in any one of claims 3 to 11, wherein
said node is provided with
a tag forwarding table memory which stores an output port for a forwarding tag.

13. The network system as set forth in any one of claims 3 to 12, wherein
said node is provided with
a table, an aging circuit and a forwarding table having a table read/write circuit.

14. The network system as set forth in any one of claims 3 to 13, wherein
said node is provided with
a TAG address management table which stores an address of a forwarding tag on a MAC forwarding table memory.

15. A network system for a network having plural nodes connected, wherein
a node belonging to said network
also applies a learning function of Ethernet to a flow which flows asymmetrically.

16. A learning bridge node for a network having plural nodes connected, wherein
a learning frame is transmitted periodically to a path opposite to a path in which a main signal frame flows.

17. The learning bridge node as set forth in claim 16, wherein
a forwarding tag to be added is learned by said learning frame.

18. A learning bridge node of a network having plural nodes connected, comprising:
a learning frame management unit which refers to a MAC SA table cache to determine whether a learning frame transmission request is made or not, and
a MAC SA table cache which stores a source MAC address (MAC SA) which has made a learning frame transmission request.

19. The learning bridge node as set forth in claim 18, comprising:
an aging request acceptance unit which ages a MAC SA table cache, and
a transmission request unit which makes a learning frame transmission request to a CPU.

20. The learning bridge node as set forth in claim 19, comprising
a learning management program which performs learning frame processing.

21. A learning bridge node for a network having plural nodes connected, comprising:
a learning management program which performs learning frame processing.

22. The learning bridge node as set forth in any one of claims 18 to 21, comprising
an equipment control program which makes a variety of configuration.

23. The learning bridge node as set forth in any one of claims 18 to 22, comprising
a frame type judgment unit which judges an input frame.

24. The learning bridge node as set forth in any one of claims 18 to 23, comprising:
an aging control unit which ages an entry to be aged, and
an aging management table which stores an entry to be aged.

25. The learning bridge node as set forth in any one of claims 18 to 24, comprising
a MAC forwarding table memory which stores an output port for a destination MAC address (MAC DA) and tag operations.

26. The learning bridge node as set forth in any one of claims 18 to 25, comprising
a broadcast table memory which stores an output destination port at the time of broadcasting to a tag.

27. The learning bridge node as set forth in any one of claims 18 to 26, comprising
a tag forwarding table memory which stores an output port for a forwarding tag.

28. The learning bridge node as set forth in any one of claims 18 to 27, comprising
a forwarding table having a table, an aging circuit and a table read/write circuit.

29. The learning bridge node as set forth in any one of claims 18 to 28, comprising
a TAG address management table which stores an address of a forwarding tag on a MAC forwarding table memory.

30. A learning bridge node for a network having plural nodes connected, wherein
a learning function of Ethernet is applied to a flow which asymmetrically flows.

31. A learning method of a network having plural nodes connected, wherein
a node belonging to said network transmits a learning frame periodically to a path opposite to that in which a main signal frame flows.

32. The learning method as set forth in claim 31, wherein
said node
learns a forwarding tag to be added according to said learning frame.

33. A learning method of a network having plural nodes connected, wherein
a node belonging to said network:
refers to a MAC SA table cache to judge whether or not a learning frame transmission request is made, and
stores a source MAC address (MAC SA) which has made a learning frame transmission request in said MAC SA table cache.

34. The learning method as set forth in claim 33, wherein
said node
performs aging of said MAC SA table cache and
makes a learning frame transmission request to a CPU.

35. The learning method as set forth in claim 34, wherein
said node is provided with
a learning management program which performs learning frame processing.

36. A learning method for a network having plural nodes connected, wherein
a node belonging to said network is provided with
a learning management program which performs learning frame processing.

37. The learning method as set forth in any one of claims 33 to 36, wherein
said node is provided with
an equipment control program which makes a variety of configuration.

38. The learning method as set forth in any one of claims 33 to 37, wherein
said node discriminates an input frame.

39. The learning method as set forth in any one of claims 33 to 38, wherein
a node belonging to said network
performs aging of an entry to be aged and
stores an entry to be aged in an aging management table.

40. The learning method as set forth in any one of claims 33 to 39, wherein
said node
stores an output port for a destination MAC address (MAC DA) and a tag operation in a MAC forwarding table memory.

41. The learning method as set forth in any one of claims 33 to 40, wherein
said node
stores an output destination port at the time of broadcasting to a tag in a broadcast table memory.

42. The learning method as set forth in any one of claims 33 to 41, wherein
said node
stores an output port for a forwarding tag in a tag forwarding table memory.

43. The learning method as set forth in any one of claims 33 to 42, wherein
said node is provided with
a forwarding table having a table, an aging circuit and a table read/write circuit.

44. The learning method as set forth in any one of claims 33 to 43, wherein
said node
stores an address of a forwarding tag on a MAC forwarding table memory in a TAG address management table.

45. A learning method for a network having plural nodes connected, wherein
a node belonging to said network also applies a learning function of Ethernet to a flow which flows asymmetrically.

46. A network system for a network having plural nodes connected, wherein a node belonging to said network transmits a frame after adding a source tag to the frame.

47. The network system as set forth in claim 46, wherein said node learns a forwarding tag to be added according to said frame with a source tag.

48. The network system as set forth in either one of claim 46 or 47, wherein said node refers to an aging management table to determine whether to add a source tag or a forwarding tag.

49. A network system for a network having plural nodes connected, wherein a node belonging to said network determines a forwarding tag to be added on the basis of the port through which the frame is input.

50. A network system for a network having plural nodes connected, wherein a node belonging to said network determines a forwarding tag to be added on the basis of the VLAN tag added to an input frame.

51. The network system as set forth in either one of claim 49 or 50, wherein said node determines a forwarding tag to be added on the basis of both said input port and said VLAN tag.

52. The network system as set forth in any one of claims 49 to 51, wherein said node outputs a MAC address resulting from converting an input MAC address.

53. The network system as set forth in claim 52, wherein said input MAC address is a Universal Administrative MAC address and said output MAC address is a MAC address for identifying a tunneling frame.

54. The network system as set forth in any one of claims 3 to 14, wherein said node is provided with a table management unit which refers to a table to determine the type of tag to be added.

55. The network system as set forth in any one of claims 3 to 14 and claim 54, wherein said node is provided with an input port table memory in which an input port and an input VLAN are searched for to determine the type of tag to be added.

56. A network system for a network having plural nodes connected, wherein a frame which flows between said nodes is provided with a source tag.

57. The network system as set forth in claim 56, wherein said frame is provided with a MAC address for identifying a tunneling frame.

58. A learning bridge node for a network having plural nodes connected, wherein a node belonging to said network transmits a frame after adding a source tag to the frame.

59. The learning bridge node as set forth in claim 46, wherein said node learns a forwarding tag to be added according to said frame with a source tag.

60. The learning bridge node as set forth in either one of claim 46 or 47, wherein said node refers to an aging management table to determine whether to add a source tag or a forwarding tag.

61. A learning bridge node for a network having plural nodes connected, wherein a node belonging to said network determines a forwarding tag to be added on the basis of the port through which the frame is input.

62. A learning bridge node for a network having plural nodes connected, wherein a node belonging to said network determines a forwarding tag to be added on the basis of the VLAN tag added to an input frame.

63. The learning bridge node as set forth in either one of claim 49 or 50, wherein said node determines a forwarding tag to be added on the basis of both said input port and said VLAN tag.

64. The learning bridge node as set forth in any one of claims 49 to 51, wherein said node outputs a MAC address resulting from converting an input MAC address.

65. The learning bridge node as set forth in claim 52, wherein said input MAC address is a Universal Administrative MAC address and said output MAC address is a MAC address for identifying a tunneling frame.

66. The learning bridge node as set forth in any one of claims 3 to 14, wherein said node is provided with a table management unit which refers to a table to determine the type of tag to be added.

67. The learning bridge node as set forth in any one of claims 3 to 14 and claim 54, wherein said node is provided with an input port table memory in which an input port and an input VLAN are searched for to determine the type of tag to be added.

68. A learning bridge node for a network having plural nodes connected, wherein a frame which flows between said nodes is provided with a source tag.

69. The learning bridge node as set forth in claim 56, wherein said frame is provided with a MAC address for identifying a tunneling frame.

70. A learning method for a network having plural nodes connected, wherein a node belonging to said network transmits a frame after adding a source tag to the frame.

71. The learning method as set forth in claim 46, wherein said node learns a forwarding tag to be added according to said frame with a source tag.

72. The learning method as set forth in either one of claim 46 or 47, wherein said node refers to an aging management table to determine whether to add a source tag or a forwarding tag.

73. A learning method for a network having plural nodes connected, wherein a node belonging to said network determines a forwarding tag to be added on the basis of the port through which the frame is input.

74. A learning method for a network having plural nodes connected, wherein a node belonging to said network determines a forwarding tag to be added on the basis of the VLAN tag added to an input frame.

75. The learning method as set forth in either one of claim 49 or 50, wherein said node determines a forwarding tag to be added on the basis of both said input port and said VLAN tag.

76. The learning method as set forth in any one of claims 49 to 51, wherein said node outputs a MAC address resulting from converting an input MAC address.

77. The learning method as set forth in claim 52, wherein said input MAC address is a Universal Administrative MAC address and said output MAC address is a MAC address for identifying a tunneling frame.

78. The learning method as set forth in any one of claims 3 to 14, wherein said node is provided with a table management unit which refers to a table to determine the type of tag to be added.

79. The learning method as set forth in any one of claims 3 to 14 and claim 54, wherein said node is provided with an input port table memory in which an input port and an input VLAN are searched for to determine the type of tag to be added.

80. A learning method for a network having plural nodes connected, wherein a frame which flows between said nodes is provided with a source tag.

81. The learning method as set forth in claim 56, wherein said frame is provided with a MAC address for identifying a tunneling frame.
